(19) Europäisches Patentamt
European Patent Office
Office européen des brevets

(11) **EP 2 448 280 A2**

(12) **EUROPEAN PATENT APPLICATION**
published in accordance with Art. 153(4) EPC

(43) Date of publication:
**02.05.2012 Bulletin 2012/18**

(51) Int Cl.:
**H04N 13/04** (2006.01)

(21) Application number: **10750616.4**

(22) Date of filing: **12.03.2010**

(86) International application number:
**PCT/JP2010/001807**

(87) International publication number:
**WO 2010/103860 (16.09.2010 Gazette 2010/37)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **12.03.2009 JP 2009060138**

(71) Applicant: **YOSHIDA, Kenji**
**Bunkyo-ku**
**Tokyo 112-0002 (JP)**

(72) Inventor: **YOSHIDA, Kenji**
**Bunkyo-ku**
**Tokyo 112-0002 (JP)**

(74) Representative: **Gulde Hengelhaupt Ziebig & Schneider**
**Patentanwälte - Rechtsanwälte**
**Wallstraße 58/59**
**10179 Berlin (DE)**

(54) **IMAGE-CONVERSION DEVICE, IMAGE OUTPUT DEVICE, IMAGE-CONVERSION SYSTEM, IMAGE, RECORDING MEDIUM, IMAGE-CONVERSION METHOD, AND IMAGE OUTPUT METHOD**

(57) In order to achieve conversion of a pixel arrangement of a video image for three-dimensional video image display on hardware, the video image conversion device of the present invention comprises: a receiving unit that receives a video image of a plurality of viewpoints as a video image signal from a video image output device; a storage unit that stores, frame by frame, the video image of the plurality of viewpoints received by the receiving unit into a storage element; a conversion control unit that controls an instruction for converting a pixel arrangement of the video image of the plurality of viewpoints stored in the storage element by the storage unit into a pixel arrangement for three-dimensional video image display based on a preset conversion control information; a conversion unit that immediately converts the pixel arrangement based on an instruction from the conversion control unit; and a transmitting unit that transmits a video image which pixel arrangement is converted by the conversion unit as a video image signal to a three-dimensional video image display device.. As a result, the video image conversion device is able to achieve conversion to a pixel arrangement for three-dimensional video image display of a video image of a plurality of viewpoints on hardware.

FIG. 1

EP 2 448 280 A2

**Description**

FIELD OF THE INVENTION

The present invention relates to a video image conversion device that converts a pixel arrangement of video images of a plurality of viewpoints into a pixel arrangement for three-dimensional video image display.

BACKGROUND OF THE INVENTION

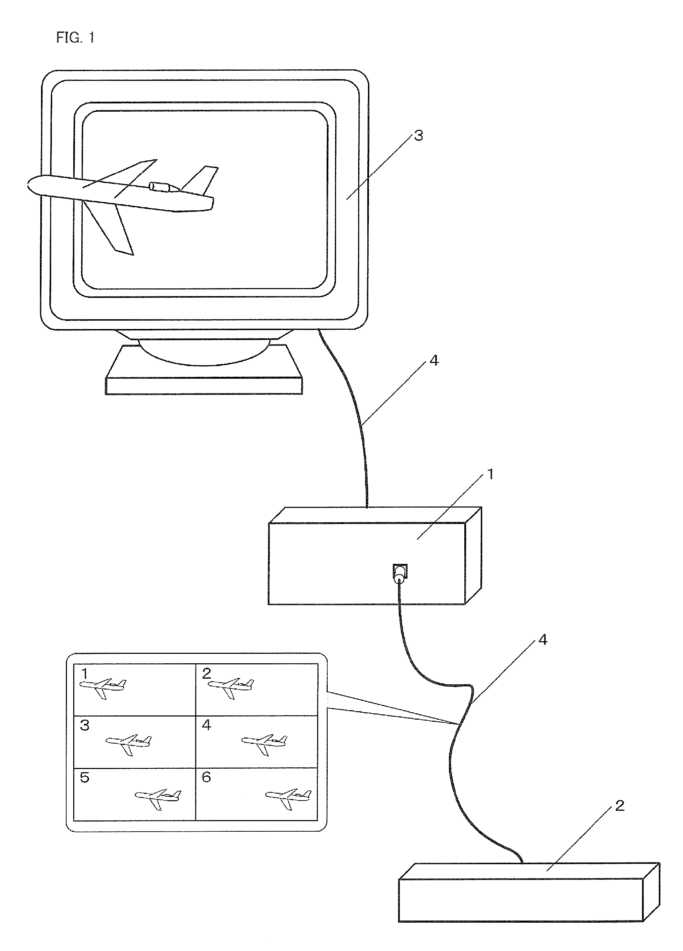

There has been known a three-dimensional video image display device that realizes three-dimensional viewing by causing parallax of users' eyes using a parallax barrier method, lenticular method and the like in Japanese Published Unexamined Patent Application No. 2004-179806 and the like (Published on June 24, 2004).
Here, for three-dimensional viewing, it is necessary to transmit a video image for three-dimensional display to a three-dimensional video image display device. Specifically, it is necessary either to transmit a video image that is prepared in advance in a pixel arrangement compliant with the three-dimensional video image display device for displaying the three-dimensional video image, or to convert the pixel arrangement of an existing video image into a pixel arrangement compliant with the three-dimensional video image display device.
As an existing technique that converts the pixel arrangement of a video image into the one compliant with a three-dimensional video image display device, Japanese Published Unexamined Patent Application No. 2004-179806 discloses a technique that converts the pixel arrangement of a video image into the one compliant with a three-dimensional video image display device of parallax barrier method in Paragraph 0088 and Fig. 1 thereof. These Paragraph 0088 and Fig. 1 discloses a three-dimensional video image display device comprising an image synthesizing circuit therein as a technical solution for converting a pixel arrangement to the one for three-dimensional display.
Also, "Visumotion," the manual of software "Display Configurator" and "3D Movie Center" provided by GMBH, discloses software that runs on a personal computer and converts the pixel arrangement of a video image into the one for three-dimensional display.

SUMMARY OF THE INVENTION

Problems that the Invention is to Solve

However, the three-dimensional video image display device of Japanese Published Unexamined Patent Application No. 2004-179806 becomes expensive as it comprises the means for converting the pixel arrangement of a video image into the one for three-dimensional display therein as described above.
In addition, to convert the pixel arrangement of a video image for three-dimensional display, precision is required for adjusting the parallax barrier and the calibration is not easy.
It should be noted that such problems similarly occur even when means for converting the pixel arrangement of a video image for three-dimensional display is incorporated in a device of reproduction equipment, that is, a device for outputting the video image to a three-dimensional video image display device, such as a set-top box, a stand alone DVD player, and a Blu-ray (registered trademark) player (including the one with recording function), that receives video images from terrestrial broadcast, satellite broadcast, or by streaming or downloading from the Internet.
Moreover, if personal computers are used to run the software of "Visumotion" to convert the pixel arrangement of a video image for three-dimensional display, a high-speed CPU, a large-capacity memory, a high-performance graphic board, are required. High-cost resources are largely consumed, and procurement of these resources is also difficult. In addition, operations inherent to personal computers on site, such as, installing of software to registering of contents, starting up of the OS and software, terminating the software, shutting down the OS, handling freeze and crash, require efforts, and stable operation is difficult.
For this reason, a personal computer dedicated for running the software of "Visumotion" is, in fact, required.
Each and every of the above problems are being obstacles to popularize the three-dimensional video image display techniques.
Hence, the present invention aims to provide a practical three-dimensional video image display technique that sweeps away the above obstacles with low cost. Specifically, conversion of the pixel arrangement of video images compliant with a three-dimensional video image display device is realized on hardware.

Means to Solve the Problems

To solve the above problems, the video image conversion device of the invention comprises: a receiving unit that receives a video image of a plurality of viewpoints as a video image signal from a video image output device; a storage unit that stores, frame by frame, the video image of the plurality of viewpoints received by the receiving unit into a storage element; a conversion control unit that controls an instruction for converting a pixel arrangement of the video image of the plurality of viewpoints stored in the storage element by the storage unit into a pixel arrangement for three-dimensional video image display based on a preset conversion control information; a conversion unit that immediately converts the pixel arrangement based on an instruction from the conversion control unit; and a transmitting unit that transmits a video image which pixel arrangement is converted by the conversion unit as a video image signal to a three-dimensional video image display device.

According to the above feature, the video image conversion device of the invention is a device independent from a video image output device and a three-dimensional video image display device, existing video image output device and three-dimensional video image display device can be used as is for providing three-dimensional video images.

It is preferable that the above video image of the plurality of viewpoints is a plurality of intermediate images used for generating a three-dimensional image that is converted from images of a plurality of viewpoints captured and/or drawn from a first viewpoint to an Nth viewpoint; in order to generate the three-dimensional image by repeatedly arranging staircase patterned RGB pixel blocks that are made by concatenatedly arraying staircase patterned RGB pixel units from the first viewpoint to Nth viewpoint in a horizontal direction, wherein the staircase patterned RGB pixel units are made by arraying subpixels in a diagonal direction over three rows in a manner in which the subpixels mutually contact at their corners, R values, G values, and B values of the subpixels constituting the staircase patterned RGB pixel units are calculated by interpolating from R, G, B values of subpixels, in the images of the plurality of viewpoints, constituting at least one pixel unit arranged around a location corresponding to a location where the subpixels constituting the staircase patterned RGB pixel units are arranged; and the intermediate images for respective plurality of viewpoints are generated by arranging parallel patterned RGB pixel units that are made by arraying the subpixels constituting the staircase patterned RGB pixel units in a horizontal direction in an order from R, G, to B in accordance with an arrangement rule that arranges the parallel patterned RGB pixel units collectively for each of the plurality of viewpoints, in this way, a total number of the staircase patterned RGB pixel units of the three-dimensional image is equalized to a total number of the parallel patterned RGB pixel units of the plurality of intermediate images, or a total number of subpixels constituting the staircase patterned RGB pixel units is equalized to a total number of subpixels constituting the parallel patterned RGB pixel units.

According to the above feature, intermediate images that can be compressed with a minimum resolution required to make the number of pixels constituting the images of respective viewpoints the same as the number of pixels constituting a three-dimensional image can be generated, and a three-dimensional image that can be viewed three-dimensionally only by changing the arrangement (mapping) of subpixels constituting such intermediate images can be generated, without using a special high-speed computer.

It is preferable that the staircase patterned RGB pixel units each has one subpixel column per row and comprises three of the subpixels having R value, G value, and B value; and

the parallel patterned RGB pixel units each comprises the three subpixels by arraying three subpixel columns in a row in the order from R, G to B.

In this way, in a case in which the subpixels are vertically long rectangles with 1 to 3 ratio, it is possible to generate a plurality of intermediate images that can be converted to a three-dimensional image having a subpixel arrangement where three subpixels are diagonally arranged over three rows and one column by abutting at their corners, which can be viewed three-dimensionally most appropriately.

It is preferable that the staircase patterned RGB pixel units each has two subpixel columns per row and each of the two columns comprises three of the subpixels having R value, G value, and B value; and in the parallel patterned RGB pixel units, three subpixels arrayed over three rows in a first column of the staircase patterned RGB pixel units are arrayed over three columns in an order from R, G, to B, and, by horizontally abutting the array, three subpixels arrayed over three rows in a second column of the staircase patterned RGB pixel units are arrayed over three columns in an order from R, G, to B.

It is also preferable that the staircase patterned RGB pixel units each has three subpixel columns per row and each column of the three columns comprises three of the subpixels having R value, G value, and B value; and in the parallel patterned RGB pixel units, three subpixels arrayed over three rows in a first column of the staircase patterned RGB pixel units are arrayed in one row in an order from R, G, to B, three subpixels arrayed over three rows in a second column of the staircase patterned RGB pixel units are arrayed in an order from R, G, to B by horizontally abutting said array, and, by further abutting the array, three subpixels in a third column of the staircase patterned RGB pixel units are arrayed in an order from R, G, to B.

It is also preferable that, by arranging the plurality of intermediate images in a manner in which the intermediate images are vertically equally divided at least in three into first to third rows and arranged in a pattern of a plurality of tiles as an image frame, the subpixels constituting the staircase patterned RGB pixel units and the subpixels constituting the parallel patterned RGB pixel units become the same number both in horizontal and vertical directions in the three-dimensional image and in the image frame where the plurality of intermediate images are arranged.

By arranging images of respective viewpoints in a pattern of tiles, the resolution/aspect ratio of the intermediate images and naked eye three-dimensional display (three dimensional image) become the same, which makes it a possible to provide a practical three-dimensional image display system, with extremely low cost, in which a three-dimensional image generating device (converter) is used to easily generate a three-dimensional image from intermediate images output or transmitted in a standard format from a standard image output device, such as a Blu-ray and a set-top box, or an image distribution server.

It is also preferable that, in a case in which the plurality of viewpoints are two viewpoints, two-third of the intermediate image of a first viewpoint are arranged in a tile of the first row, one-third of the intermediate image of the first viewpoint are arranged in a first tile of the second row, one-third of the intermediate image of a second viewpoint are arranged in a second tile of the second row abutting the one-third of the intermediate image of the first viewpoint, two-third of the intermediate image of the second viewpoint are arranged in a tile of the third row; in a case in which the plurality of viewpoints are three viewpoints, the intermediate image of each viewpoint is arranged in a tile of each row; in a case in which the plurality of viewpoints are four to six viewpoints, the intermediate images of first to third viewpoints are arranged in first tiles of respective rows, the intermediate images of a rest of the viewpoints are arranged in tiles of first to third rows abutting the intermediate images of the first to third viewpoints; in a case in which the plurality of viewpoints are seven to nine viewpoints, the intermediate images of first to third viewpoints are arranged in first tiles of respective rows, the intermediate images of fourth to sixth viewpoints are arranged in tiles of the first to third rows abutting the intermediate images of the first to third viewpoints, the intermediate images of a rest of the viewpoints are arranged in tiles of the first to third rows abutting the intermediate images of the fourth to sixth viewpoints; and even in a case in which the plurality of viewpoints are ten viewpoints or more, part of or whole intermediate images are sequentially arranged from a first viewpoint in tiles of respective rows in a similar way.

It is also preferable that the video image conversion device receives the video image of the plurality of viewpoints, as a video image signal, that is a video image formed by images in which the plurality of intermediate images are divided in a pattern of tiles and arranged within a frame.

It is also preferable that the transmitting unit transmits a video image signal of the same standard as a video image signal received by the receiving unit from the video image output device to the three-dimensional video image display device.

According to the above feature, as the video image signal standard does not change even after going through the video image conversion device, the video image output device can transmit a video image signal of the same standard to the video image conversion device of the invention without changing the video image signal that is directly transmitted to the three-dimensional video image display device when not going through the video image conversion device. Thus, existing video image output device and three-dimensional video image display device can be used as is.

It is preferable that the receiving unit receives a video image signal from the video image output device via an electric connection or a wireless communication; and the transmitting unit transmits a video image signal to the three-dimensional video image display device via an electric connection or a wireless communication.

According to the above feature, the video image conversion device of the invention can display a three-dimensional video image only by easy setting of electric connection or wireless communication.

It is preferable that the receiving unit receives the video image of the plurality of viewpoints, as a video image signal, that is a video image formed by images in which images forming a video image for respective viewpoints are divided in a pattern of tiles and arranged within a frame.

It is preferable that the receiving unit receives the video image of the plurality of viewpoints, as a video image signal, that is a video image extracted from an irreversibly compressed video image by the video image output device.

It is preferable that the receiving unit receives the video image of the plurality of viewpoints, as a video image signal, that is a video image formed by arranging images forming video images for respective viewpoints (k viewpoint video image) (kFt, t = 1 to 1) in an order of the viewpoint video image (k = 1 to n) for each time frame, and further arraying the images in a time direction (F't', t' = 1-n•1).

It is preferable that the receiving unit receives the video image of the plurality of viewpoints, as a video image signal, that is a video image formed by arranging image information on the same scanning line (Si, i = 1 to j) of images forming a video image for respective viewpoints (k viewpoint video image) in an order of the viewpoint video image (k = 1 to n) and arranging all of the image information on the same scanning line into one frame image (S'i, i = 1 to n•j).

According to the above feature, the video image conversion device of the invention can display a three-dimensional video image using the standard of existing video image file as is.

Video image information recognition unit

It is preferable that the receiving unit further receives conversion control information stored in an external storage unit as a control signal via an electric connection or a wireless communication; and if the receiving unit received the control signal, the conversion control unit controls an instruction for converting a pixel arrangement of the video image of the plurality of viewpoints stored in the storage element by the storage unit into a pixel arrangement for three-dimensional video image display based on the conversion control information stored in the external storage unit, instead of the preset conversion control information.

According to the above feature, a new conversion control information can be added to the video image conversion device using an external storage unit.

It is preferable that the receiving unit further receives a planar video image as a video image signal from the video image output device, and receives a control signal in addition to the video image signal; the conversion control unit controls a determination whether a video image received by the receiving unit from the video image output device is the video image of the plurality of viewpoints, the planar video image, or a mixture video image of the video image of the plurality of viewpoints and the planar video image, based on the control signal, and controls an instruction for converting the video image of the plurality of viewpoints into a pixel arrangement for three-dimensional video image display only when the video image is determined as the video image of the plurality of viewpoints or the mixture video image of the video image of the plurality of viewpoints and the planar video image; and the transmitting unit transmits the planar video image as a video image signal to the three-dimensional video image display device.

According to the above feature, new conversion control information corresponding to the video image of the plurality of viewpoints can be added to the video image conversion device by a control signal from the video image output device.

It is preferable that the video image conversion device further comprises a video image information analysis unit; the receiving unit receives, instead of the control signal and the video image of the plurality of viewpoints, a video image in which a plurality pieces of pixel information defined as video image information are embedded according to a predetermined arrangement pattern at a leading frame of the video image of the plurality of viewpoints or a predetermined location in whole frames, as a video image signal; the video image information analysis unit identifies the location where the pixel information is embedded based on the predetermined arrangement pattern, determines whether or not a header for verifying the video image information exists, and analyzes the video image information when the header exists; the conversion control unit further controls a determination whether the video image is the video image of the plurality of viewpoints or the planar video image based on the existence of the header, and only when the video image is determined as the video image of the plurality of viewpoints, controls an instruction for converting the video image of the plurality of viewpoints into a pixel arrangement for three-dimensional video image display based on the video image information analyzed by the video image information analysis unit; and the transmitting unit transmits a video image which pixel arrangement is converted by the conversion unit or a planar video image to the three-dimensional video image display device as a video image signal.

According to the above feature, using video image information embedded in a video image, new conversion control information corresponding to the video image of the plurality of viewpoints can be added to the video image conversion device.

It is preferable that the receiving unit receives a mixture video image of the video image of the plurality of viewpoints and the planar video image as a video image signal; the video image information analysis unit analyzes the video image information of whole frames of the mixture video image, and, only when a frame of the mixture video image is determined as the video image of the plurality of viewpoints, controls an instruction for converting the video image of the plurality of viewpoints into a pixel arrangement for three-dimensional video image display; and the transmitting unit further transmits the planar video image to the three-dimensional video image display device as a video image signal.

According to the above feature, the video image conversion device of the invention can only convert frames of video images of a plurality of viewpoints even when video images of a plurality of viewpoints and planar images are mixed in one video image file. Particularly, even for the frame of a planar video image, a plurality of the same video images are conventionally required to be prepared to be divided and arranged into tiles, and, as the result, there was a problem in which the resolution for showing the planar video image was degraded. On the other hand, a video image in which one video image is arranged over the whole frame just as a normal planar video image can now be used for a planar video image, without a need to prepare a plurality of the same video images to be divided and arranged into tiles when showing a planar video image.

It is preferable that, based on the video image information analyzed by the video image information analysis unit, the conversion control unit recognizes and controls at least one of: a scanning method of the video image of the plurality of viewpoints; a resolution of the video image of the plurality of viewpoints; a number of viewpoints of the video image of the plurality of viewpoints; and a number of viewpoints of the three-dimensional video image display device, and, controls an instruction for converting the video image of the plurality of viewpoints into a pixel arrangement for three-dimensional video image display, based on the scanning method, the resolution of the video image of the plurality of viewpoints, the number of viewpoints of the video image of the plurality of viewpoints, and the number of viewpoints of the three-dimensional video image display device, instead of the preset conversion control information.

According to the above feature, the video image conversion device of the invention can independently recognize video image information embedded in a video image file without an additional input by a user, and convert a video image of a plurality of viewpoints into a pixel arrangement for three-dimensional video image display based on the video image information.

It is preferable that the receiving unit receives a video image in which a plurality of pixel matrixes where a plurality pieces of pixel information defined as identical video image information are continuously arranged in X and Y directions are embedded based on a predetermined arrangement pattern, as a video image signal; and the video image information analysis unit identifies locations where the pixel matrixes are embedded based on the predetermined arrangement pattern, and analyzes the video image information at predetermined positions of the pixel matrixes.

According to the above feature, the video image conversion device of the invention can analyze video image information that is originally defined even when affected by pixels around the embedded position, as the video image information analysis unit analyzes video image information at a predetermined position of the pixel matrix.

It is preferable that the video image information analysis unit analyzes video image information based on pixel information at a center position or an average value of plurality pieces of pixel information around the center position.

According to the above feature, video image information can be more accurately analyzed as the video image information analyses unit analyzes video image information based on pixel information of the central position where the influence from pixels around the embedded position is considered especially small or an average value of the plurality pieces of pixel information around the central position.

It is preferable that the receiving unit receives, as a video image signal, a video image in which the pixel matrixes are embedded along the top edge of the video image of the plurality of viewpoints.

According to the above feature, the pixel matrixes are embedded along the top edge of the video image of the plurality of viewpoints, which is inconspicuous form users, preventing degradation of video image quality due to embedding of the pixel matrixes.

It is preferable that the receiving unit receives, as a video image signal, a video image in which a plurality of pixel matrixes where, instead of the pixel information, pixels of intermediate value between pixels in the vicinity of the pixel matrixes and the pixel information or pixels obtained by interpolating by weighting with predetermined values both pixels in the vicinity of the pixel matrixes and the pixel information are arranged are embedded at the periphery of the pixel matrixes, instead of the pixel information, according to a predetermined arrangement pattern.

According to the above feature, it is possible to minimize the influence to a video image caused by embedding the pixel matrixes.

It is preferable that the receiving unit receives, as a video image signal, a video image in which video image information is defined only in predetermined digits of high-order bits of the pixel information; and the video image information analysis unit refers only to the predetermined digits of high-order bits of the plurality pieces of pixel information to analyze the video information.

According to the above feature, as video image information is defined only in upper bits of pixel information, and the video image information analysis unit analyzes video image information only by referring to the upper bits, the analysis result is not affected even the value of pixel information is changed.

It is preferable that the receiving unit receives a control signal from the three-dimensional video image display device; and, based on the control signal, the conversion control unit recognizes and controls at least one of: a scanning method of the three-dimensional video image display device; a resolution of the three-dimensional video image display device; a number of viewpoints of the three-dimensional video image display device; and a pixel arrangement method of the three-dimensional video image display device, and, instead of the preset conversion control information, controls an instruction for converting the video image of the plurality of viewpoints into a pixel arrangement for three-dimensional video image display, based on the scanning method of the three-dimensional video image display device, the resolution of the three-dimensional video image display device, the number of the viewpoints of the three-dimensional video image display device, and the pixel arrangement conversion method.

According to the above feature, new conversion control information that corresponds to the video image of the plurality of viewpoints can be added to the video image conversion device by a control signal from the three-dimensional video image display device.

It is preferable that the pixel arrangement method is formed by repeating a combination of one or more pixels, and comprises: a number of rows constituting one pixel; a number of subpixels constituting the one pixel; a number of pixels connected in a combination of the pixels; and a number of subpixels perturbed by a connecting location of the pixels per pixel.

It is preferable that the receiving unit receives, from the three-dimensional video image display device on which monitor's front surface is attached, with a predetermined air gap, a parallax barrier formed of an invisible region and a transparent region where a plurality of slits are arranged or a plurality of holes are continuously arranged in a slit-like form from upside to downside with a predetermined inclination, a size of subpixels constituting a pixel, an average inclination of the transparent region, a number of subpixels of the slit or the hole in a horizontal direction, which corresponds to an average width of the transparent region, a number of subpixels corresponding to an average distance between centers of the adjacent slits or adjacent holes, and a resolution of the display device, as a control signal; and the conversion control unit selects, based on the control signal, a pixel arrangement conversion method that converts a video image of a plurality of viewpoints into a pixel arrangement with which the video image can be three-dimensionally displayed most efficiently, and controls an instruction for converting the video image with the pixel arrangement conversion method.

According to the above feature, most appropriate pixel arrangement conversion is possible by giving little information about the three-dimensional video image display device to the video image conversion device.

It is preferable that the video image conversion device further comprises conversion control information storing unit; the receiving unit receives the control signal in which index information is additionally defined or a video image in which plurality pieces of pixel information in which index information is additionally defined are embedded according to a predetermined arrangement pattern as a video image signal; when the conversion control unit instructs the conversion unit to convert a pixel arrangement of the video image of the plurality of viewpoints based on the control signal or the video image information, the conversion control information storing unit stores the conversion instruction as new conversion control information by associating the conversion control information with the index information; if the conversion control information storing unit stores conversion control information corresponding to the index information of the control signal or of the video image signal received by the receiving unit, the conversion control unit controls an instruction for converting a pixel arrangement of the video image of the plurality of viewpoints into a pixel arrangement for three-dimensional video image display based on the conversion control information stored in the conversion control information storing unit.

According to the above feature, index information is defined in the control signal or the video image signal. If the conversion control information storing unit stores conversion control information by associating it with the index information, the conversion control unit can instruct the conversion unit to convert the video image based on the conversion control information stored in the conversion control information storing unit without obtaining the control signal or the video image information again when using the conversion control information that was once used again.

It is preferable that the receiving unit further receives an input signal which index information is defined by an external input unit; and when the conversion control information storing unit stores conversion control information corresponding to the index information of the input signal received by the receiving unit, the conversion control unit controls an instruction for converting a pixel arrangement of the video image of the plurality of viewpoints into a pixel arrangement for three-dimensional video image display based on the conversion control information stored in the conversion control information storing unit, instead of the control signal or the video image signal.

The video image output device of the invention comprises: a plurality of imaging units that image video images for respective viewpoints; a video image arrangement unit that forms a video image by immediately arranging images divided and arranged in a pattern of tiles within a frame from images forming video images for respective viewpoints imaged by the plurality of imaging units; and a transmitting unit that transmits the video image as a video image signal to the video image conversion device that converts the arrangement of the pixels constituting the video image.

According to the above feature, video images of a plurality of viewpoints can be imaged in real time and a three-dimensional video image can be immediately output.

The video image conversion system of the invention comprises: a video image output unit that transmits a video image of a plurality of viewpoints as a video image signal; a receiving unit that receives the video image of the plurality of viewpoints as a video image signal from the video image output unit; a storage unit that stores, frame by frame, the video image received by the receiving unit into a storage element; a conversion control unit that controls an instruction for converting a pixel arrangement of the video image stored in the storage unit into a predetermined pixel arrangement for three-dimensional video image display; a conversion unit that immediately converts the pixel arrangement based on an instruction from the conversion control unit; a transmitting unit that transmits a video image which pixel arrangement was converted by the conversion unit as a video image signal; and a display unit that receives the video image signal transmitted from the transmitting unit and displays a three-dimensional video image.

According to the above feature, as the video image conversion device is a device separate from the video image output device and the three-dimensional video image display device, a three-dimensional video image can be provided using the existing video image output device and three-dimensional video image display device as is.

It is preferable that the video image conversion system further comprises: a plurality of imaging units that image video images for respective viewpoints; and a video image arrangement unit that forms a video image by immediately arranging images divided and arranged into a pattern of tiles within a frame from images forming video images for respective viewpoints imaged by the plurality of imaging units and transmits the video image to the video image reproducing unit, and the video image output unit transmits the video image converted by the video image arrangement unit as a video image signal.

It is preferable that the display unit is a three-dimensional video image display unit on which monitor's front surface is attached, with a predetermined air gap, a parallax barrier formed of an invisible region and a transparent region where a plurality of slits are arranged or a plurality of holes are continuously arranged in a slit-like form from upside to downside with a predetermined inclination; the receiving unit receives, as a control signal, an average inclination of the transparent region, a number of subpixels of the slit or the hole in a horizontal direction, which corresponds to an average width of the transparent region, a number of subpixels corresponding to an average distance between centers of the adjacent slits or adjacent holes, a size of the subpixels constituting a pixel, and a resolution of the display device; and the conversion control unit selects, based on the control signal, a pixel arrangement conversion method that converts a video image of a plurality of viewpoints into a pixel arrangement with which the video image can be three-dimensionally displayed most efficiently, and controls an instruction to the conversion unit for converting the video image with the pixel arrangement conversion method.

The video image of the invention is characterized by plurality pieces of pixel information in which a header for verifying video image information and conversion control information are defined as video image information are embedded, at a leading frame of the video image of a plurality of viewpoints or a predetermined position of whole frames, according to a predetermined arrangement pattern.

It is preferable that the video image of the invention is a mixture video image of a video image of a plurality of viewpoints and a planar video image; if a first video image is the video image of the plurality of viewpoints, the video image further comprises identification information indicating whether the video image is the mixture video image in the video image information at a predetermined position of a leading frame; and if a first video image is the planar video image, plurality pieces of pixel information in which a header for verifying video image information and identification information indicating whether the video image is the mixture video image are defined as video image information are embedded at a predetermined position of a leading frame according to a predetermined arrangement pattern.

It is preferable that the video image of the invention is embedded with pixel information defined as identical video image information over a predetermined number of or more frames in the same arrangement pattern.

The video image of the invention is characterized by a plurality of pixel matrixes in which plurality pieces of identical pixel information defining a header for verifying video image information and conversion control information as video image information are continuously arranged in X and Y directions are embedded according to a predetermined arrangement pattern.

It is preferable that the plurality of pixel matrixes in which pixels having pixel information obtained by linearly interpolating by weighting with predetermined values pixel information in the vicinity of the pixel matrixes and pixel information defining the video image information are arranged are embedded, instead of the pixel information, at the periphery of the pixel matrixes according to a predetermined arrangement pattern.

It is preferable that the video image information is at least one of: identification information for determining whether the video image is a mixture video image of the video image of the plurality of viewpoints and the planar video image; identification information of a scanning method of the video image; a resolution of the video image; and a number of the viewpoints of the video image.

It is preferable that the video image is stored in a storage medium.

The video image conversion method of the invention comprises the steps of: receiving a video image of a plurality of viewpoints as a video image signal from the video image output device; storing the received video image of the plurality of viewpoints, frame by frame, in a storage element; instructing conversion of a pixel arrangement of the video image of the plurality of viewpoints stored in the storage element into a pixel arrangement for three-dimensional video image display according to the preset conversion control information; immediately converting the pixel arrangement according to the instruction; and transmitting the video image of which pixel arrangement was converted as a video image signal to a three-dimensional video image display device.

The video image output method of the invention comprises the steps of: imaging a video image for respective viewpoints using a plurality of imaging units; generating a plurality of intermediate images according to Claim 2 from a plurality of viewpoint images imaged by the plurality of imaging units from a plurality of viewpoints from a first viewpoint to an Nth viewpoint, and forming a video image by immediately arranging the plurality of intermediate images into images divided and arranged in a pattern of tiles within a frame, using a video image arrangement unit; and transmitting, using a transmitting unit, the video image as a video image signal to a video image conversion device that converts the pixel arrangement configuring the video image.

ADVANTAGEOUS EFFECT OF THE INVENTION

According to the present invention, by realizing conversion of the pixel arrangement of video images compliant with a three-dimensional video image display device on hardware, low cost and useful three-dimensional video image display technology can be provided.

BRIEF DESCRIPTION OF THE DRAWINGS

Fig. 1 is an external view of an embodiment of the video image conversion device 1 according to the invention.

Fig. 2 is an external view of an embodiment of the video image conversion device 1 according to the invention.

Fig. 3 is an external view of an embodiment of the video image conversion device 1 according to the invention.

Fig. 4 is an external view of an embodiment of the video image conversion device 1 according to the invention.

Fig. 5 is an external view of an embodiment of the video image conversion device 1 according to the invention.

Fig. 6 is an external view of an embodiment of the video image conversion device 1 according to the invention.

Fig. 7 is a block diagram of an embodiment of the video image conversion device 1 according to the invention.

Fig. 8 is a block diagram of an embodiment of the video image conversion device 1 according to the invention.

Fig. 9 is a block diagram of an embodiment of the video image conversion device 1 according to the invention.

Fig. 10 is a block diagram of an embodiment of the video image conversion device 1 according to the invention.

Fig. 11 is a block diagram of an embodiment of the video image conversion device 1 according to the invention.

Fig. 12 is a block diagram of an embodiment of the video image conversion device 1 according to the invention.

Figs. 13A to 13E are diagrams showing examples of the shape of the parallax barrier on the three-dimensional video image display device, which is used in the video image conversion device 1 according to the invention.

Figs. 14A and 14B are diagrams showing a first example of video images of a plurality of viewpoints received as video signals by the video image conversion device 1 according to the invention.

Figs. 15A and 15B are diagrams showing a second example of video images of a plurality of viewpoints received as video signals by the video image conversion device 1 according to the invention.

Fig. 16 is a diagram showing a third example of video images of a plurality of viewpoints received as video signals by the video image conversion device 1 according to the invention.

Fig. 17 is a diagram showing a fourth example of video images of a plurality of viewpoints received as video signals by the video image conversion device 1 according to the invention.

Fig. 18 is a diagram showing a fifth example of video images of a plurality of viewpoints received as video signals by the video image conversion device 1 according to the invention.

Figs. 19A and 19B are diagrams showing a first example of video images of a plurality of viewpoints that embed pixel information 21 defining video image information and are received as video signals by the video image conversion device 1 according to the invention.

Figs. 20A to 20C are diagrams showing a second example of video images of a plurality of viewpoints that embed pixel information 21 defining video image information and are received as video signals by the video image conversion device 1 according to the invention.

Figs. 21A to 21C are diagrams showing a third example of video images of a plurality of viewpoints that embed pixel information 21 defining video image information and are received as video signals by the video image conversion device 1 according to the invention.

Figs. 22A to 22C are diagrams showing a fourth example of video images of a plurality of viewpoints that embed pixel information 21 defining video image information and are received as video signals by the video image conversion device 1 according to the invention.

Fig. 23 is a conceptual view of an original eight-colored video image file 23.

Figs. 24A and 24B are conceptual views of a pixel embedded video image file 24 that embeds seven pixel matrixes 22.

Fig. 25 is a diagram illustrating what kind of information the pixel information actually means.

Fig. 26 is a diagram illustrating what kind of information the pixel information actually means.

Fig. 27 is a flowchart showing a method for identifying a planar video image and a video image of a plurality of viewpoints by always embedding pixel information 21 defined as video image information in the video image of a plurality of viewpoints.

Fig. 28 is a flowchart showing a method for identifying a planar video image and a video image of a plurality of viewpoints by embedding pixel information 21 defined as video image information only in the video images at the moments of starting and ending of the video image of the plurality of viewpoints.

Figs. 29A to 29C are block diagrams schematically showing a structure of the intermediate image generating device, three-dimensional image generating device, and three-dimensional image generating system.

Figs. 30A to 30C are flowcharts showing information processing carried out by the intermediate image generating device and three-dimensional image generating system.

Fig. 31 is a diagram illustrating an embodiment of an intermediate image generating method.

Fig. 32 is a diagram illustrating an embodiment of the intermediate image generating method.

Figs. 33A to 33C are diagrams illustrating an embodiment of the intermediate image generating method.

Fig. 34 is a diagram illustrating an embodiment of the intermediate image generating method.

Figs. 35A and 35B are diagrams illustrating an intermediate image generating table.

Fig. 36 is a diagram showing an example of the arrangement of the image frames of intermediate images.

Figs. 37A and 37B are diagrams illustrating differences between image frames.

Fig. 38 is a diagram illustrating an example of image frames comprised of a plurality of intermediate images.

Figs. 39A to 39C are diagrams showing arrangement examples of staircase patterned RGB pixel units.

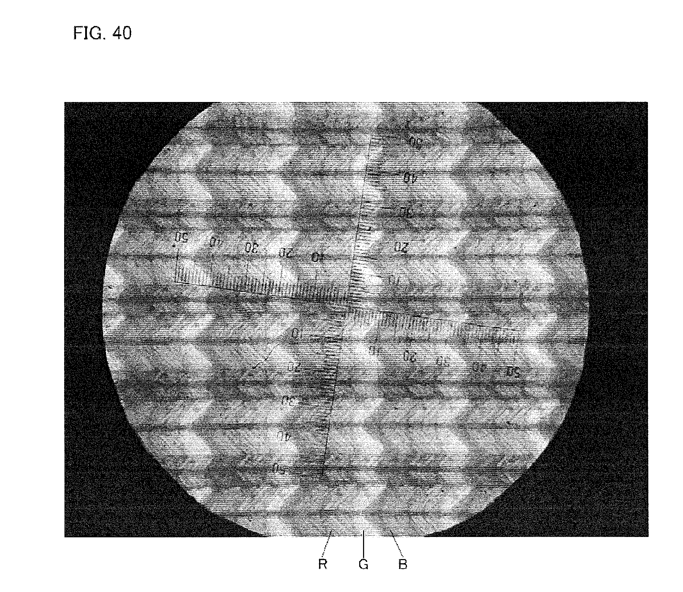

Fig. 40 is a diagram showing an example of the shapes of subpixels in a naked eye three-dimensional image display device.

MODE FOR CARRYING OUT THE INVENTION

The embodiments of the invention are described as follows.

Overview

The following describes an overview of the video image conversion device 1 of the invention using external views and block diagrams.

External view

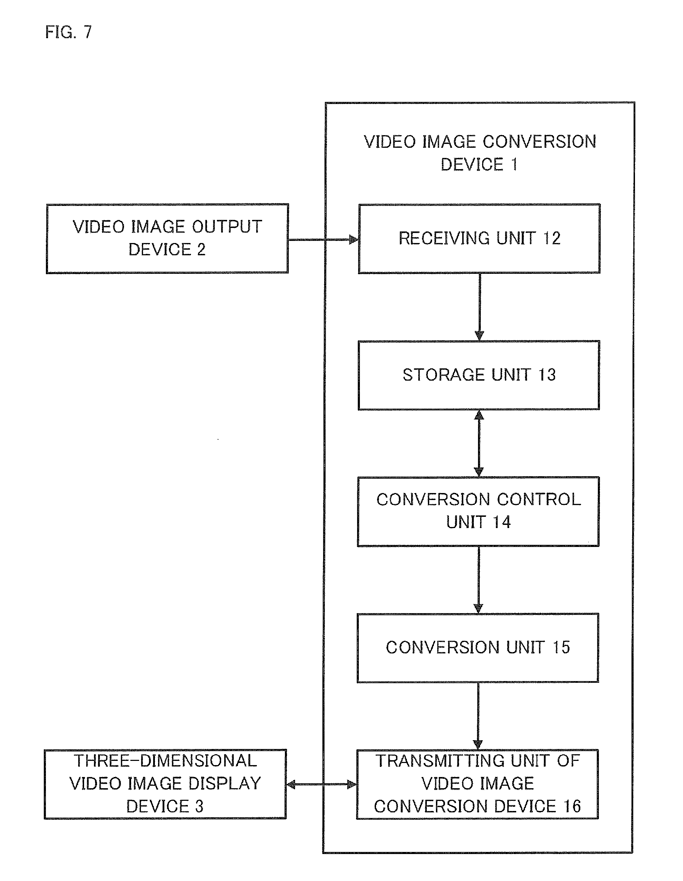

Fig. 1 is an external view of an embodiment of the video image conversion device 1 according to the invention.
As shown in Fig. 1, the video image conversion device 1 of the first embodiment is used by being electrically connected inbetween a general video image output device 2 and a general three-dimensional video image display device 3 (a display) by video image cables 4. The video image conversion device 1 receives video images of a plurality of viewpoints transmitted as video image signals (video image input signals) from the video image output device 2, converts into a pixel arrangement for three-dimensional video image display based on a preset conversion control information (information including the scanning method, the number of viewpoints, the resolution, and the pixel arrangement method; the details are described later), and transmits the video image after converting the pixel arrangement as video image signals (video image output signals) to a three-dimensional video image display device 3.
Here, for the video image cable 4 that connects the video image conversion device 1, video image output device 2, and three-dimensional video image display device 3, a conventional popular cable of a standard, such as RGB, VDI, and HMVI, can be used for a cable that electrically connects a video image output device 2 and a three-dimensional video image display device 3 and transmits video image signals.

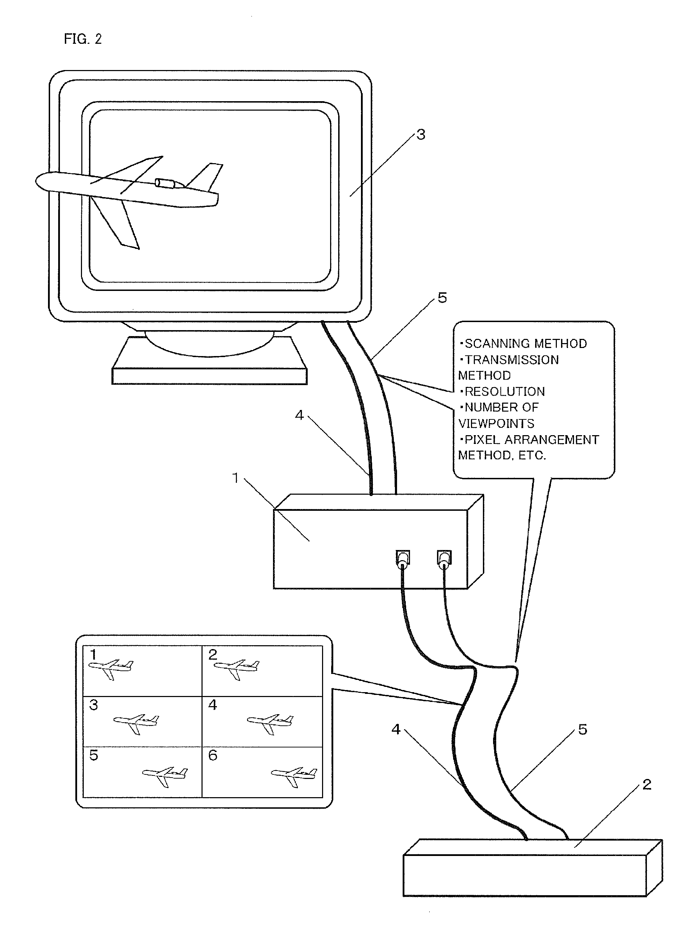

Fig. 2 is an external view of an embodiment of the video image conversion device 1 according to the invention.
As shown in Fig. 2, the video image conversion device 1 may also receive control signals by electrically connecting either one of or both video image output device 2 and three-dimensional video image display device 3 through a control cable 5.
The control signal refers to a signal that gives conversion control information other than video images, such as a scanning method, a resolution, the number of viewpoints, and a pixel arrangement method, to the video image conversion device 1, while the details are described later.
Here, for the control cable 5, specifically, a conventional popular cable of a standard, such as i.LINK and serial, that electrically connects video image output device 2 and three-dimensional video image display device 3 can be used.
However, in Fig. 2, video image cables 4 and control cables 5 are described as different cables for convenience of explanation, these cables may be bundled to make one cable.

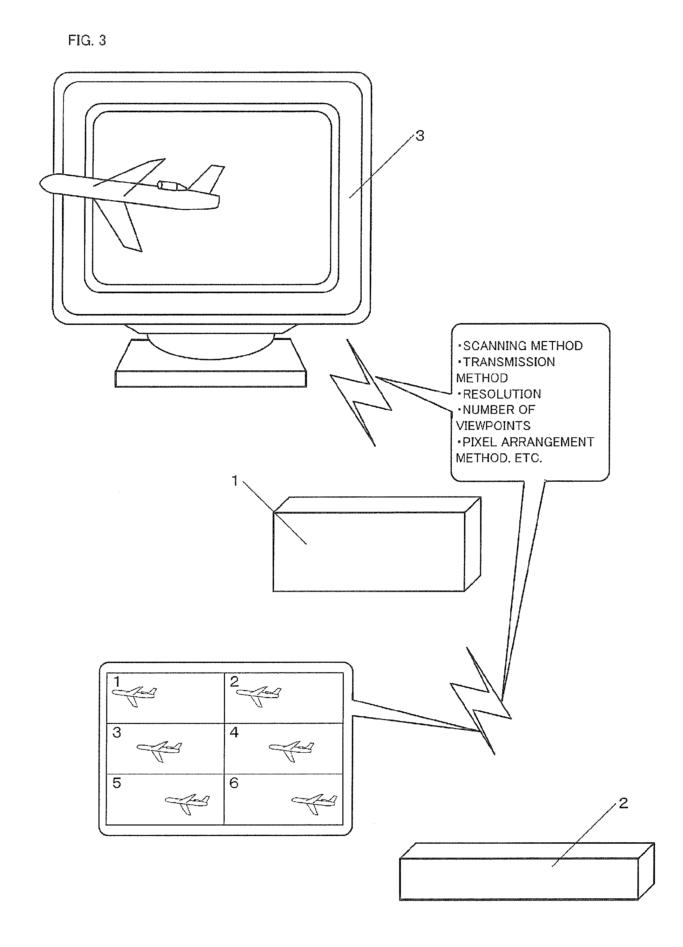

Fig. 3 is an external view of an embodiment of the video image conversion device 1 according to the invention.
As shown in Fig. 3, the video image conversion device 1 in this embodiment receives video images of a plurality of viewpoints transmitted as video image signals (video image input signals) from the video image output device 2 via wireless communication means which is not shown, converts into a pixel arrangement for three-dimensional video image display, and transmits the video image after converting the pixel arrangement as video image signals (video image output signals) to the three-dimensional video image display device 3.
Here, for the wireless communication means, conventional popular wireless communication means of a standard, such as wireless LAN, Bluetooth (registered trademark), and UWB, can be used.

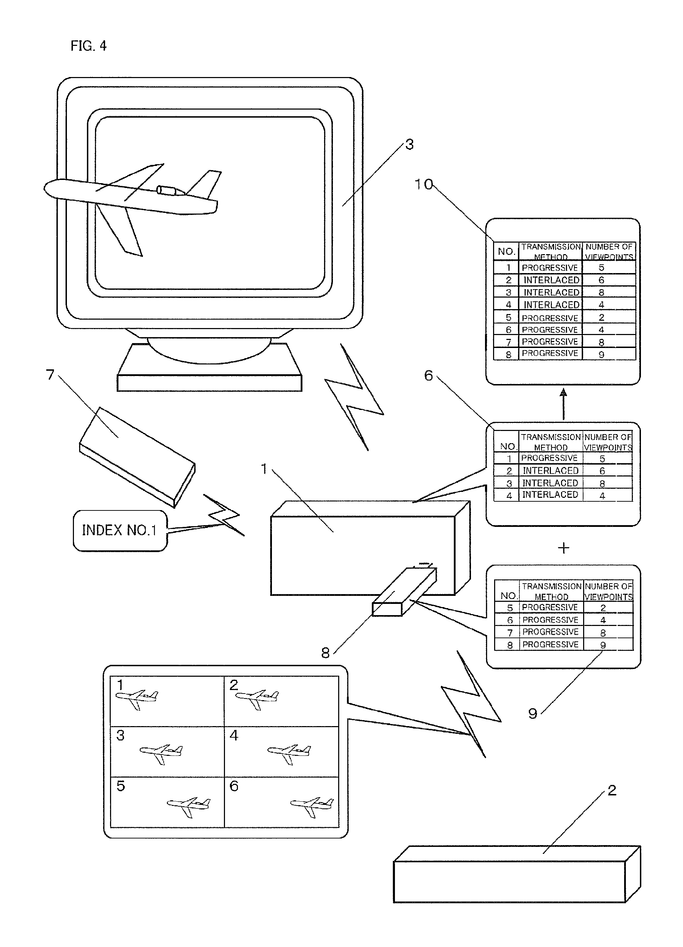

Fig. 4 is an external view of an embodiment of the video image conversion device 1 according to the invention.
As shown in Fig. 4, the video image conversion device 1 in this embodiment stores in advance plurality pieces of conversion control information by associating with index information as a first table 6. In this way, conversion control information corresponding to such index information can be output by inputting index information using an input device such as a remote controller 7.
It should be appreciated that while Fig. 7 illustrates that the scanning method and the number of viewpoints are stored as conversion control information, information, such as a resolution and a pixel arranging method, may also be stored.
Also, for the conversion control information, in addition to the one stored in advance in video image conversion device 1, conversion control information stored in relation with index information as a second table 9 in an external storage medium such as USB 8 may also be used. However, while not shown in Fig. 4, conversion control information may be obtained not only from an external storage medium but also by downloading from the Internet, or from a terrestrial broadcast and a satellite broadcast.

Further, if the video image conversion device 1 acquires conversion control information that is not stored in advance, a third table 10 added the acquired conversion control information may be newly generated. In such a case, conversion control information can be switched only by inputting index information from the next time.

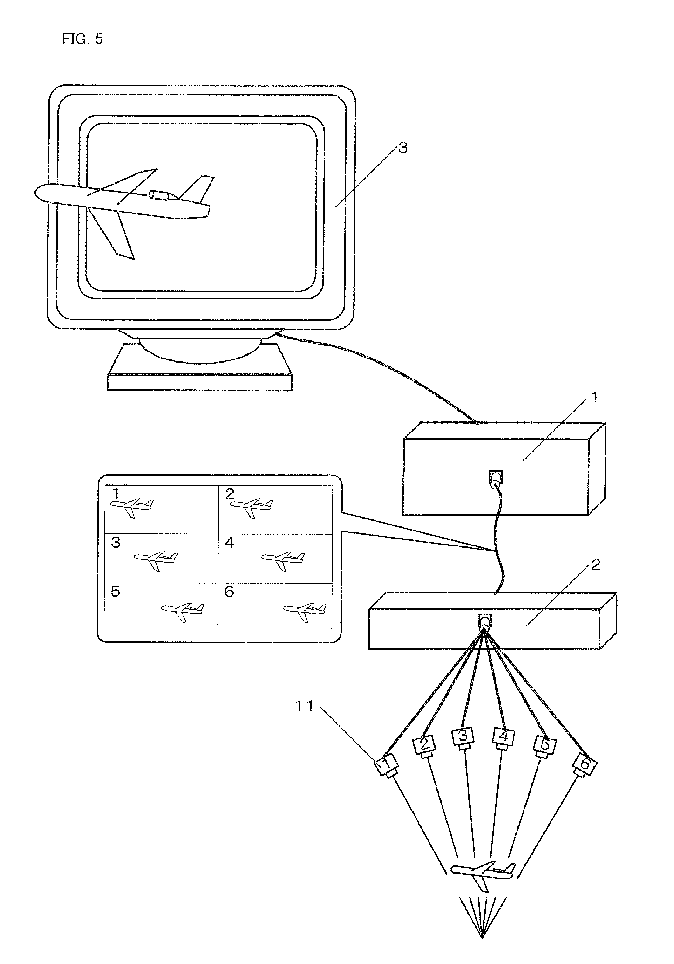

Fig. 5 is an external view of an embodiment of the video image conversion device 1 according to the invention.

As shown in Fig. 5, the video image conversion device 1 in this embodiment receives a video image that is converted from video images for respective viewpoints imaged in real time by cameras for a plurality of viewpoints 11 into a video image of a plurality of viewpoints arranged in a pattern of tiles and output by a video image output device 2, converts into a pixel arrangement for three-dimensional video image display, and transmits the video image after the pixel arrangement conversion as video image signals (video image output signals) to a three-dimensional video image display device 3.

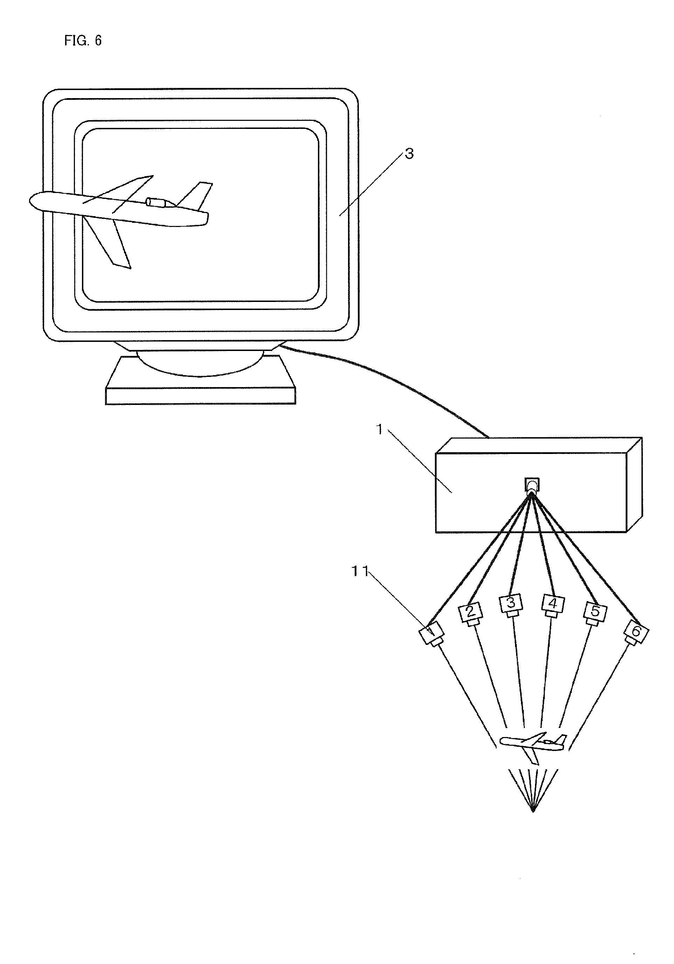

Fig. 6 is an external view of an embodiment of the video image conversion device 1 according to the invention.

As shown in Fig. 6, the video image conversion device 1 in this embodiment is directly connected to cameras for a plurality of viewpoints 11, immediately receives video images for respective viewpoints taken by the cameras 11 in real time as a video image of a plurality of viewpoints, converts into a pixel arrangement for three-dimensional video image display, and transmits the video image after the pixel arrangement conversion as video image signals (video image output signals) to a three-dimensional video image display device 3.

It should be noted that the video image conversion device 1, video image output device 2, three-dimensional video image display device 3 of the invention are collectively referred to as the video image conversion system.

Block diagram

Fig. 7 is a block diagram of an embodiment of the video image conversion device 1 according to the invention.

As shown in Fig. 7, the video image conversion device 1 in this embodiment comprises: a receiving unit 12 that receives video images of a plurality of viewpoints as video image signals from a video image output device 2; a storage unit 13 (storage means) that stores the video images of the plurality of viewpoints received by the receiving unit 12 (receiving means) into a storage element frame by frame; a conversion control unit 14 (conversion control means) that controls an instruction for converting the pixel arrangement of the video images of the plurality of viewpoints stored in the storage element by the storage unit 13 into a pixel arrangement for three-dimensional video image display based on a preset conversion control information; a conversion unit 15 (conversion means) that immediately converts the pixel arrangement according to the instruction from the conversion control unit 14; a transmitting unit of the video image conversion device 16 (transmitting means) that transmits video images of which pixel arrangement is converted by the conversion unit 15 as video image signals to a three-dimensional video image display device 3.

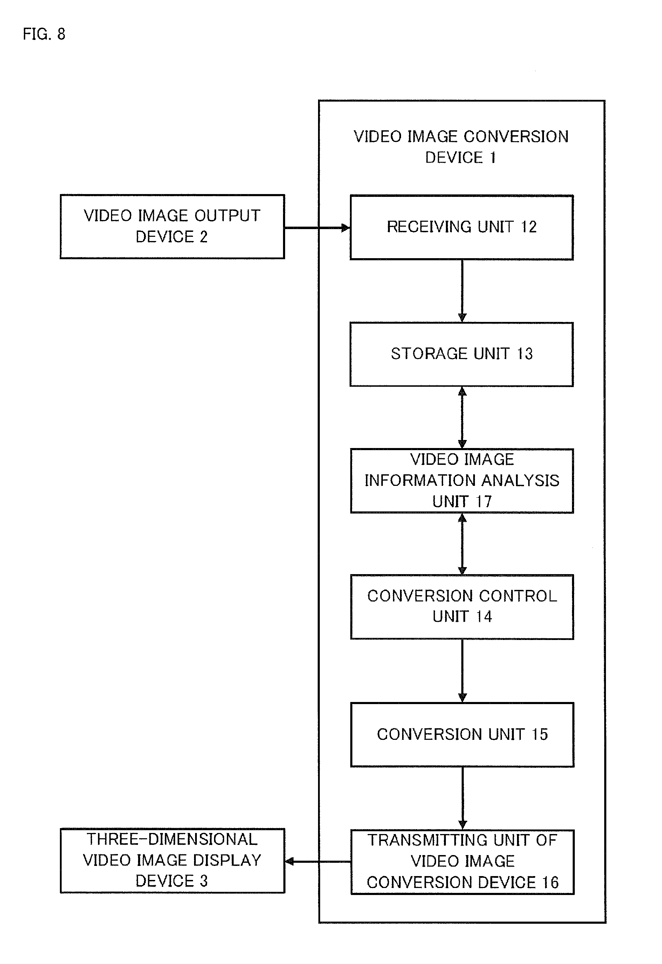

Fig. 8 is a block diagram of an embodiment of the video image conversion device 1 according to the invention.

As shown in Fig. 8, video image conversion device 1 in this embodiment further comprises a video image information analysis unit 17 (video image information analysis means) between a storage unit 13 and a conversion control unit 14.

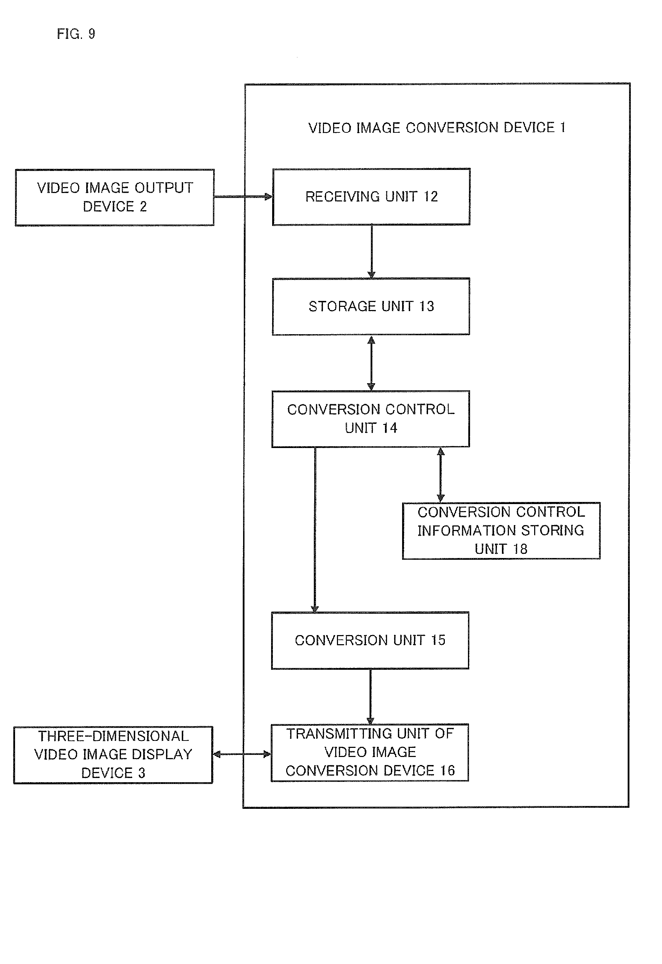

Fig. 9 is a third block diagram of an embodiment of the video image conversion device 1 according to the invention.

As shown in Fig. 9, in the video image conversion device 1 of this embodiment, conversion control information storing unit 18 (conversion control information storing means) is further connected to a conversion control unit 14.

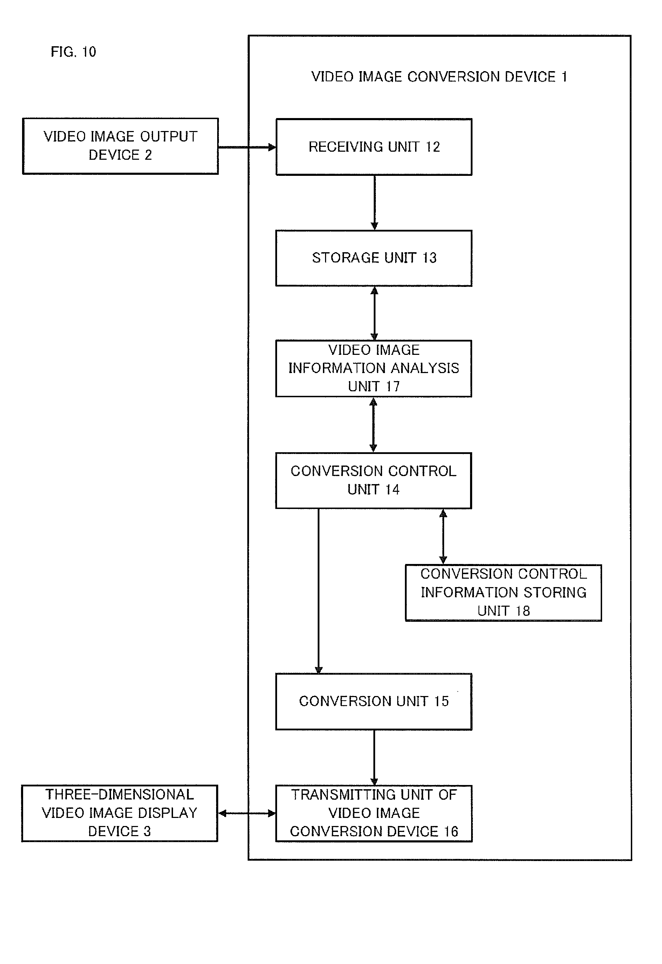

Fig. 10 is a block diagram of an embodiment of the video image conversion device 1 according to the invention.

As shown in Fig. 10, the video image conversion device 1 in this embodiment comprises both above-described video image information analysis unit 17 and conversion control information storing unit 18

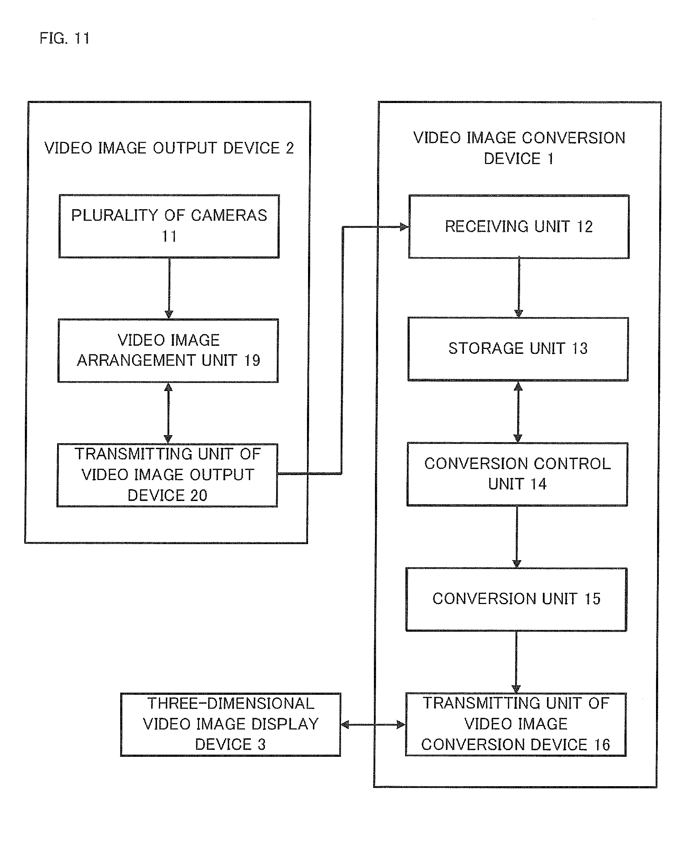

Fig. 11 is a block diagram of an embodiment of the video image conversion device 1 according to the invention.

As shown in Fig. 11, the video image conversion device 1 in this embodiment is connected to a video image output device 2 that comprises cameras for a plurality of viewpoints 11 (imaging means), a video image arrangement unit 19 (video image arrangement means), and a transmitting unit of the video image output device 20.

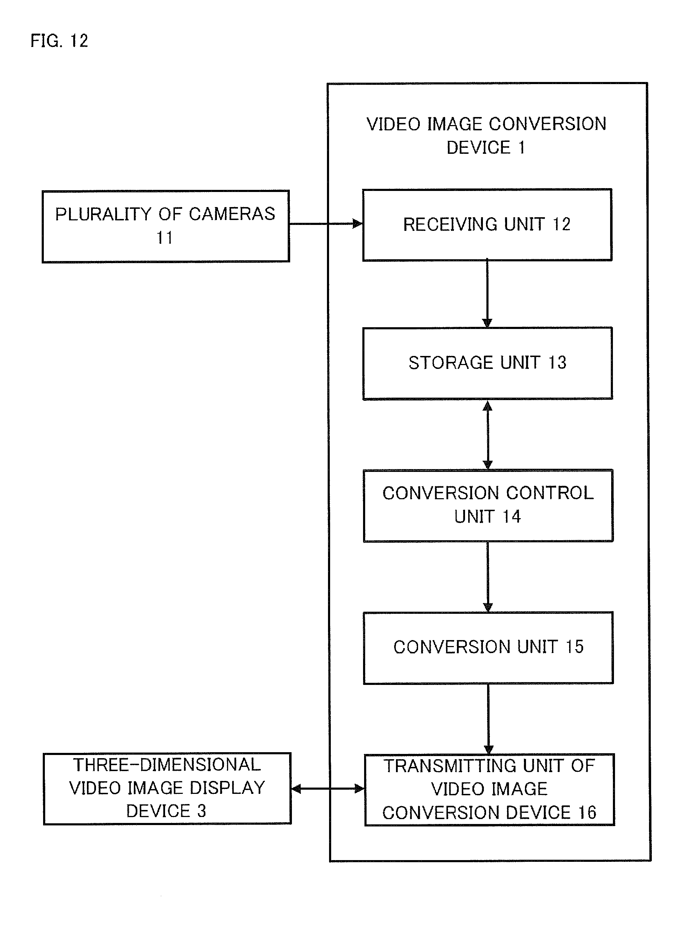

Fig. 12 is a block diagram of an embodiment of the video image conversion device 1 according to the invention.

As shown in Fig. 12, the video image conversion device 1 in this embodiment is connected to cameras for a plurality of viewpoints 11.

Video image output device

The following describes the video image output device 2 from which the video image conversion device 1 of the invention receives video image signals (video image input signals).

In light with the purpose of the invention, it is preferable to use an existing video image output technique for the video image output device 2. That is, the video image output device 2 is preferably a reproduction equipment (including the one having recording function), such as an existing set-top box, stand alone DVD player, Blu-ray (registered trademark) player, or the like that receives video images from a terrestrial broadcast, a satellite broadcast, or streaming or downloading from the Internet.

Also, as shown in Fig. 5, the video image output device 2 may comprise cameras for a plurality of viewpoints 11. In such a case, a plurality of video images taken by cameras 11 can be converted in real time into a video image of a plurality of viewpoints arranged in a pattern of tiles.

Three-dimensional video image display device 3

The following describes the three-dimensional video image display device 3 (a display) to which the video image conversion device 1 of the invention transmits video image signals (video image output signals).

In light of the purpose of the invention, it is preferable to use an existing three-dimensional video image display device for the three-dimensional video image display device 3 without adding any improvement. That is, the three-dimensional video image display device 3 is preferably an existing three-dimensional video image display device, such as a liquid crystal display, a plasma display, an organic electroluminescence display, adopting a parallax barrier method, lenticular method, and the like. However, it goes without saying that three-dimensional video image display devices other than those described above can also be used for video image conversion device 1 of the invention.

Specific example of parallax barrier

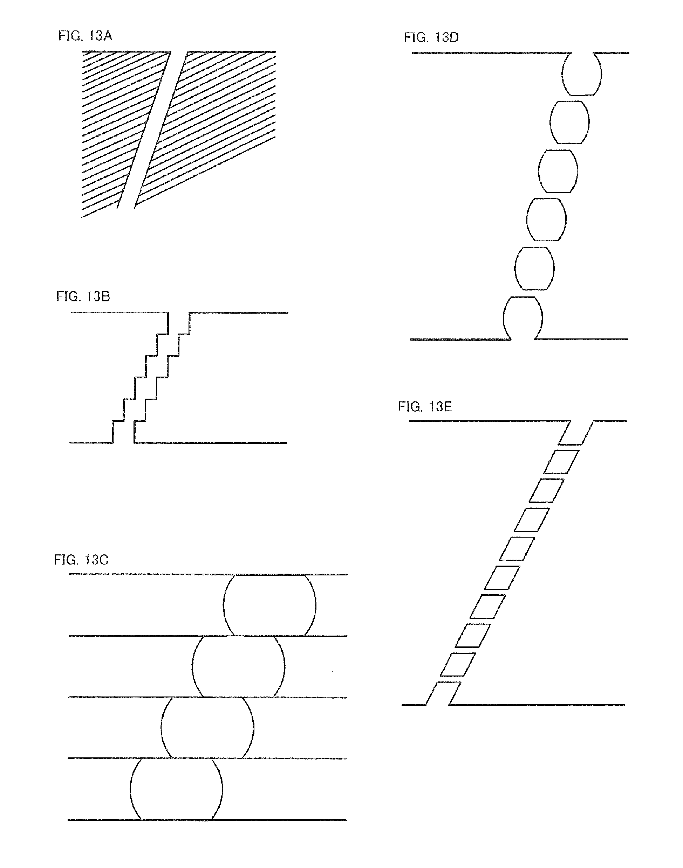

The shape of the slit of the parallax barrier mounted on the three-dimensional video image display device 3 may be any one of a diagonally linear slit as shown in Fig. 13A, a diagonal staircase patterned slit as shown in Fig. 13B, a diagonally arranged skewered dumpling shaped slit where the elliptic arcs are connected as shown in Fig. 13C, diagonally arranged lantern shaped holes as shown in Fig. 13D, and diagonally arranged parallelogram shaped holes as shown in Fig. 13E.

Video image used in the invention

The video image to be converted by the video image conversion device 1 is described as follows.

Eight-tile video image

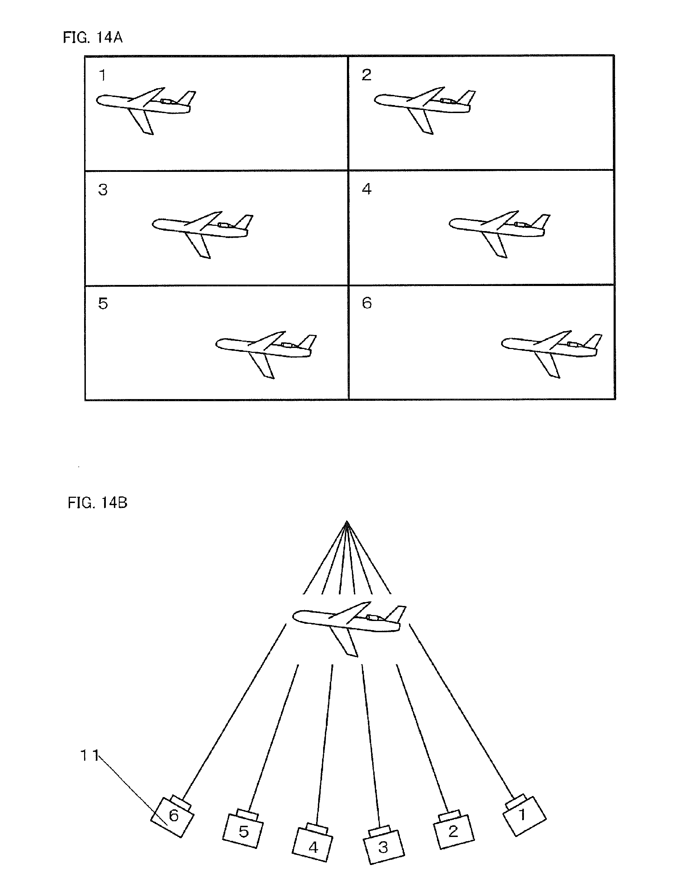

Figs. A14 and A14 are diagrams showing a first example of video images of a plurality of viewpoints received as video signals by the video image conversion device 1 according to the invention. Such video images are generally known, and can be created in a tile format where video images of a plurality of viewpoints are arranged in a pattern of tiles. Usually, after arranging in a tile format, a predetermined compressed motion image file is generated. The resolution is arbitrary, and usually, an irreversible motion image compression standard, MPG2, is often used. While not shown in Figs. 14A and 14B, a tile format corresponding to an arbitrary number of viewpoints (for example, four to nine viewpoints) may be formed for a video image of a plurality of viewpoints.

Normalized six-tile video image

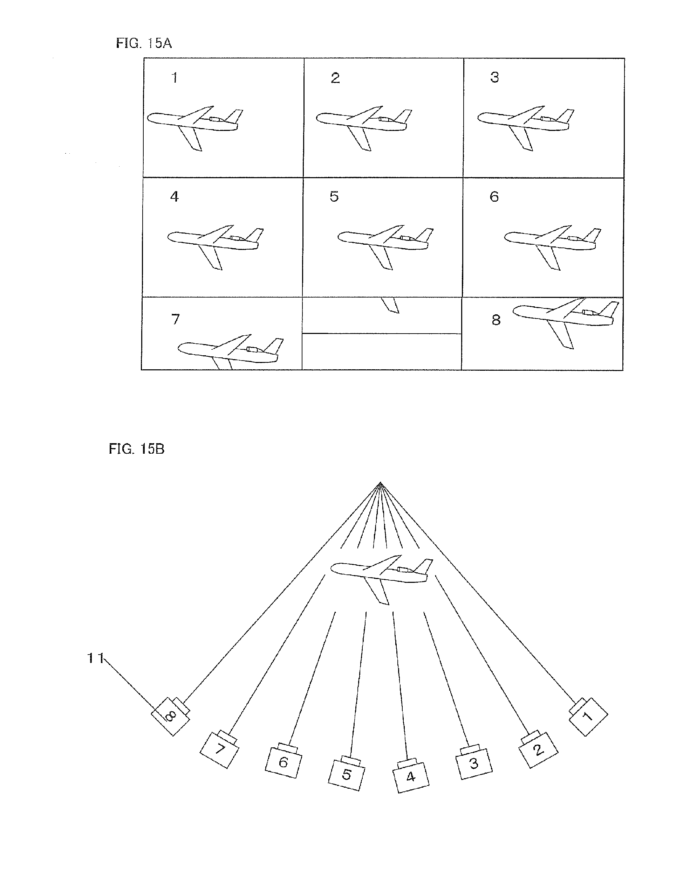

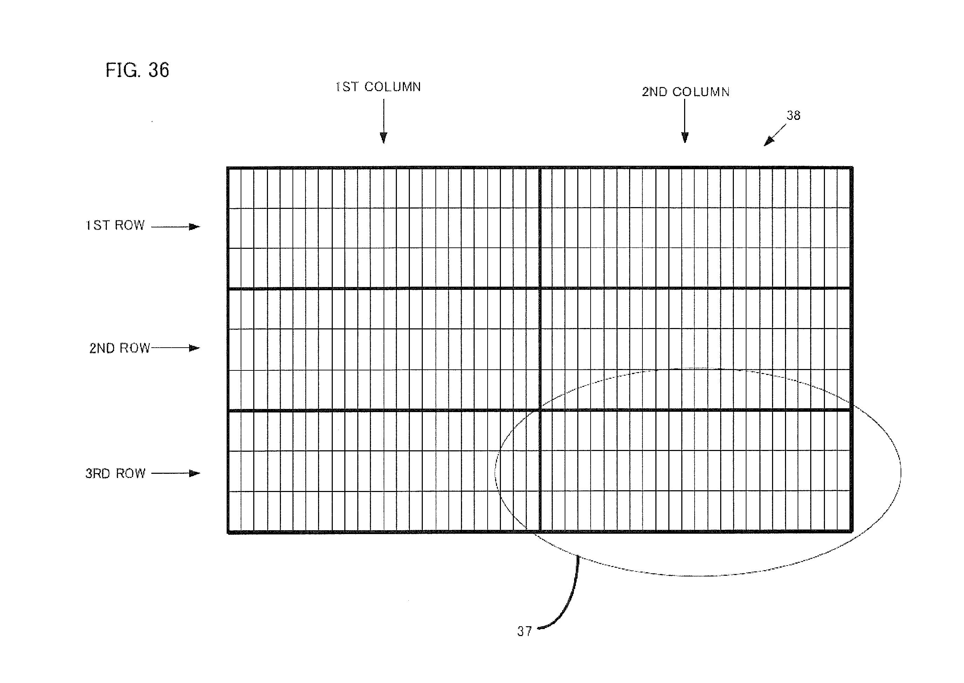

Figs. 15A and 15B are diagrams showing a second example of video images of a plurality of viewpoints received as video signals by the video image conversion device 1 according to the invention. This is a normalized tile format for video images of a plurality of viewpoints recommended in the invention, and only pixels read out from a video image of a plurality of viewpoints for converting into a pixel arrangement for three-dimensional video image display are arranged. While not shown in Figs. 15A and 15B, a tile format corresponding to an arbitrary number of viewpoints (for example, four to nine viewpoints) may be formed for a video image of a plurality of viewpoints. Particularly, it is preferable to convert into a pixel arrangement for three-dimensional video image display by normalizing an image of arbitrary resolution to 960 pixels in a horizontal direction and 360 pixels in a vertical direction with 16:9 aspect ratio to make an image for each viewpoint with a pixel arrangement method of diagonally arranging three subpixels constituting R, G, B, of one pixel over three rows and three columns. In this way, the resolution of tiled video images of six viewpoints becomes 1920 x 1080, and the tiled video images are received as high definition video images, converted into a three-dimensional video image with minimized image degradation, and output with the same video image signal standard as the received standard. It should be noted that, without the normalized tile format, if the tile format is formed as in Fig. 36, the resolution and aspect ratio of the image frame and naked eye three-dimensional display (a three-dimensional image) become the same in any number of more than two viewpoints, and a video image signal output or transmitted with a regular video image signal standard, such as RGB, VDI, HMVI, can be received by a general image output device or image distribution system, such as Blu-ray and STB, converted into a three-dimensional video image with minimized image degradation, and output with the same video image signal standard as the received standard. In this way, a parallax barrier can be attached on an existing display, or the video image conversion device 1 can be equipped inbetween existing general image output device and image distribution system without replacing to a naked eye three-dimensional display, providing a useful three-dimensional image display system with extremely low cost.

Multi-streaming video image

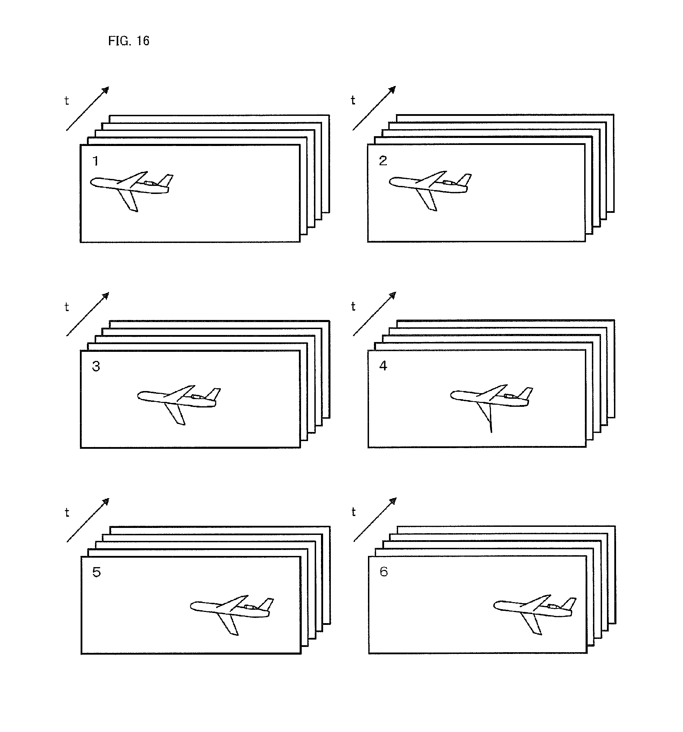

Fig. 16 is a diagram showing a third example of video images of a plurality of viewpoints received as video signals by the video image conversion device 1 according to the invention. Such video images are generally known and can be created by multi-streaming of MPG4 motion image compression standard. A plurality of synchronized motion images can be recorded in one motion image file. Received images of first to nth viewpoints are stored with a predetermined arrangement in a storage unit and converted into a pixel arrangement for three-dimensional video image display.

Repeatedly allocating video images of a plurality of viewpoints in a time direction

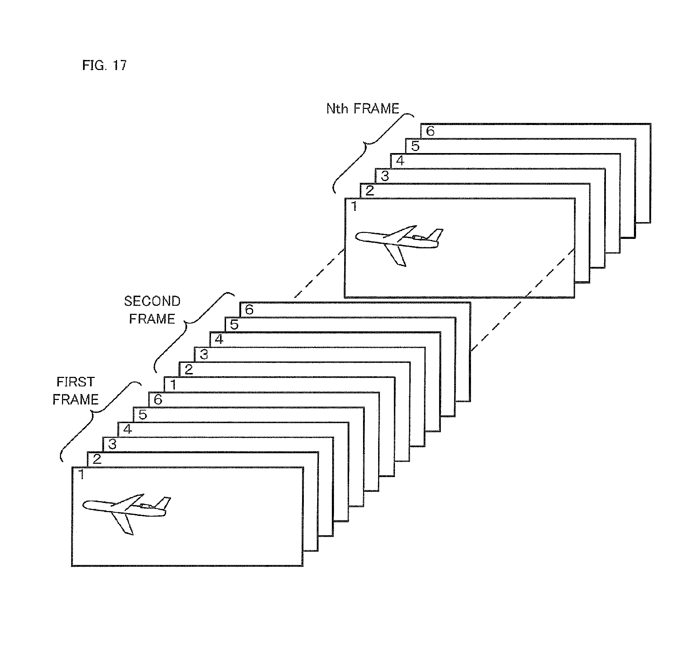

Fig. 17 is a diagram showing a fourth example of video images of a plurality of viewpoints received as video signals by the video image conversion device 1 according to the invention. The video images of the plurality of viewpoints are formed by repeatedly allocating video images for respective viewpoints to respective continuous frames in a time direction. Received images of first to nth viewpoints are sequentially stored into a storage unit and converted into a pixel arrangement for three-dimensional video image display.

Repeatedly allocating video images of a plurality of viewpoints for each scanning line

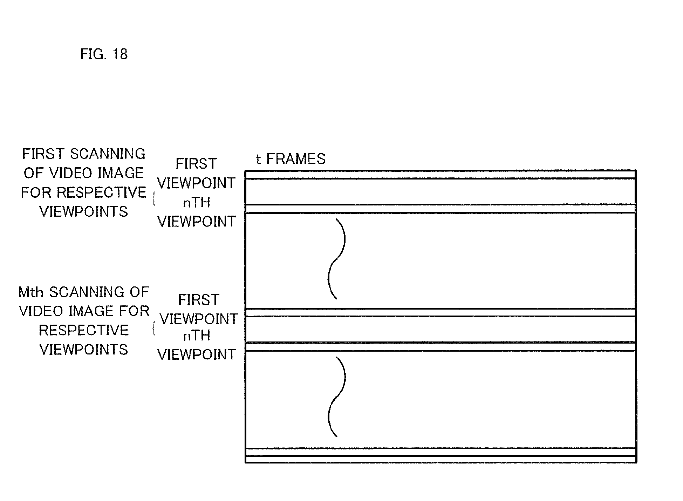

Fig. 18 is a diagram showing a fifth example of video images of a plurality of viewpoints received as video signals by the video image conversion device 1 according to the invention. The video images of the plurality of viewpoints are formed by repeatedly allocating video images for respective viewpoints to respective scanning lines in a scanning direction. Received images are stored into a storage unit, and pixels on the scanning lines that form images of respective viewpoints are converted into a pixel arrangement for three-dimensional video image display.

It should be noted that a mixture video image file of the video images of the plurality of viewpoints and planar video images may be created.

Video image format

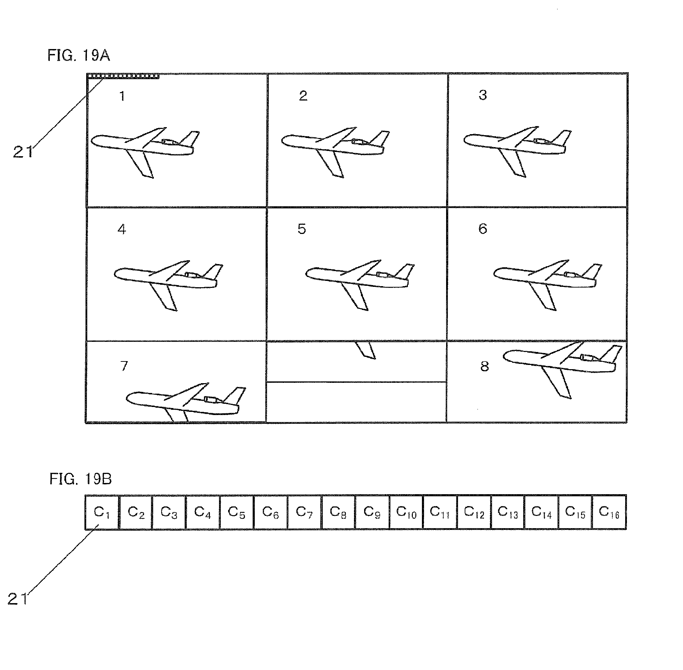

Figs. 19A and 19B are diagrams showing a first example of video images of a plurality of viewpoints that embed pixel information 21 defining video image information and are received as video signals by the video image conversion device 1 according to the invention.

Fig. 19A is a diagram showing a position where pixel information 21 is embedded on a video image. According to Fig. 19A, pixel information 21 is embedded in the upper left edge portion of the video image. However, while, as the position where pixel information 21 is embedded is based on a predetermined arrangement pattern, the embedded position does not always have to be the upper left edge portion, the edge of the video image is a portion overlaid by the monitor frame of the three-dimensional video image display device 3 and cannot be seen from users, which provides a merit where embedding pixel information 21 does not affect three-dimensional video image display to users.

Fig. 19B is an enlarged view of the embedded pixel information 21. According to Fig. 19B, the pixel information 21 is tightly embedded in a horizontal direction. However, while it is not shown, pixel information 21 may be embedded with a predetermined interval.

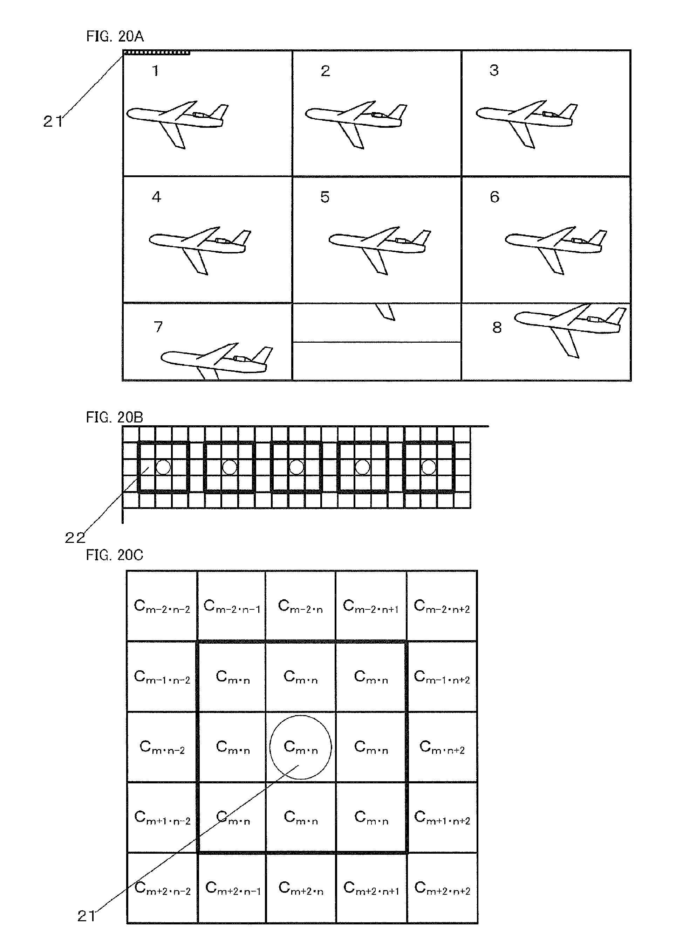

Figs. 20A to 20C are diagrams showing a second example of video images of a plurality of viewpoints that embed pixel information 21 defining video image information and are received as video signals by the video image conversion device 1 according to the invention.

Fig. 20A is a diagram showing a position where the pixel information 21 is embedded on a video image.

Fig. 20B is an enlarged view of a portion where pixel information 21 is embedded. In the second example, pixel matrixes 22 in which plurality pieces of pixel information 21 defined as identical video image information are continuously arranged are embedded.

Fig, 20C is an enlarged view showing one of pixel matrix 22 of Fig. 20B. 3 x 3 matrix in the middle surrounded by a bold frame is the pixel matrix 22 where nine pieces of pixel information $C_{m\,n}$ that define identical video image information are arranged. The video image conversion device 1 of the invention analyzes video image information using pixel information 21 indicated by a circle in the middle of the pixel matrix 22. It should be noted that it is appropriate to identify the position of the pixel information 21 in the middle of the pixel matrix 22 by specifying the XY coordinates of the pixel information 21 based on the predetermined arrangement pattern. However, video image information may be calculated from the average value of plurality pieces of pixel information 21 in the pixel matrix 22.

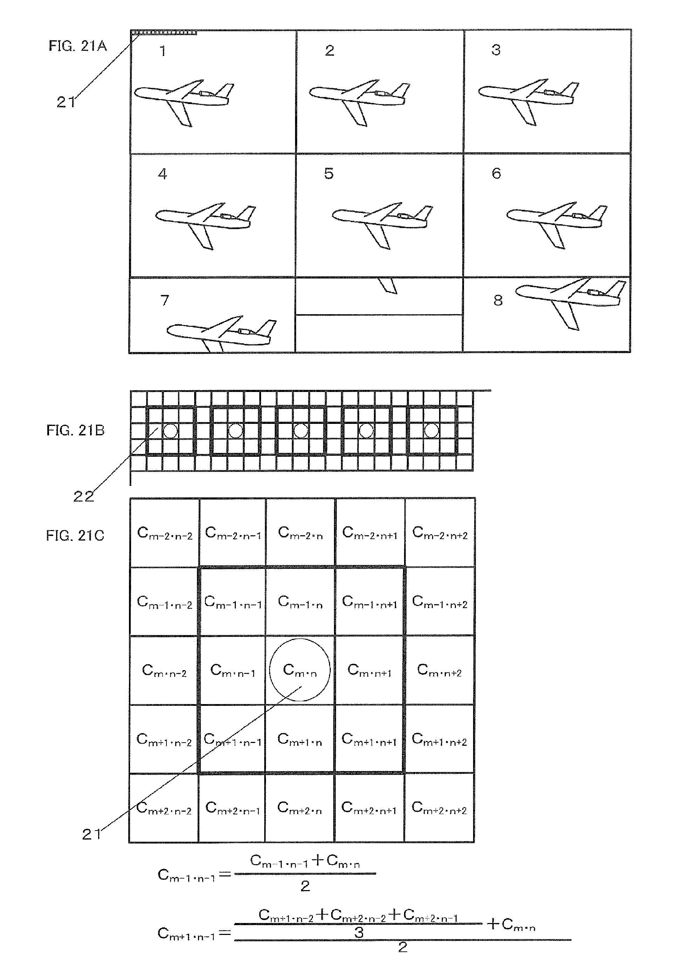

Figs. 21A to 21C are diagrams showing a third example of video images of a plurality of viewpoints that embed pixel information 21 defining video image information and are received as video signals by the video image conversion device 1 according to the invention.

Fig. 21A is a diagram showing a position where pixel information 21 is embedded on a video image.

Fig. 21B is an enlarged view of a portion where pixel information 21 is embedded.

Fig. 21C is an enlarged view showing one of the pixel matrixes 22 of Fig. 21B. In the third example, pixel information 21 defined as video image information is arranged in the middle of the pixel matrix 22, and pixel information 21 having intermediate values of pixels adjacent to pixel matrix 22 and the pixel information 21 are embedded in the periphery of the pixel matrix 22.

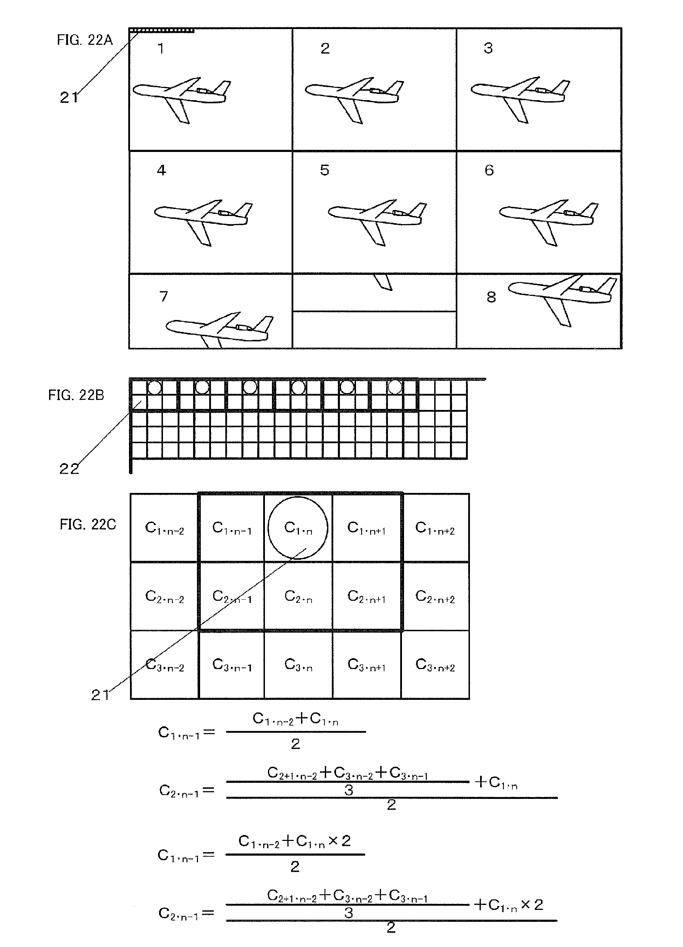

Figs. 22A to 22C are diagrams showing a fourth example of video images of a plurality of viewpoints that embed pixel information 21 defining video image information and are received as video signals by the video image conversion device 1 according to the invention.

Fig. 22A is a diagram showing a position where pixel information 21 is embedded on a video image.

Fig. 22B is an enlarged view of a portion where pixel information 21 is embedded. In the fourth example, pixel matrix 22 comprises 2 x 3 pixels. Compared with the pixel matrix 22 of the third example, the pixel information 21 of the first row is eliminated and the rest of the pixel information 21 are arranged at the upper edge portion of the video image. Such an example is preferred, as the area occupied by pixel matrix 22 is smaller, the influence to the video image becomes smaller.

Fig. 22C is an enlarged view showing one of the pixel matrixes 22 of Fig. 22B. Pixel information 21 that defines video image information is arranged in the middle of the upper row of the pixel matrix 22, and on the periphery of the pixel matrix 22 are arranged pixels having intermediate values of pixels adjacent to the pixel matrix 22 and the pixel information 21, or pixels obtained by interpolation by weighting predetermined values to both pixels.

Here, weighting refers to multiplying by predetermined times the value of pixel information 21 upon calculation of the intermediate value in order to analyze the video image information defined by pixel information 21 more accurately. While weighting according to Fig. 22C is performed by multiplying the value of pixel information 21 by two, the multiplication may be three times or four times as necessary. It should be noted that weighting is possible even in the third example.

The following describes an experiment method for examining changes of R, G, B values of pixel information 21 that defines video image information when mpeg2 compressing the video images of the plurality of viewpoints of the above second to fourth examples.

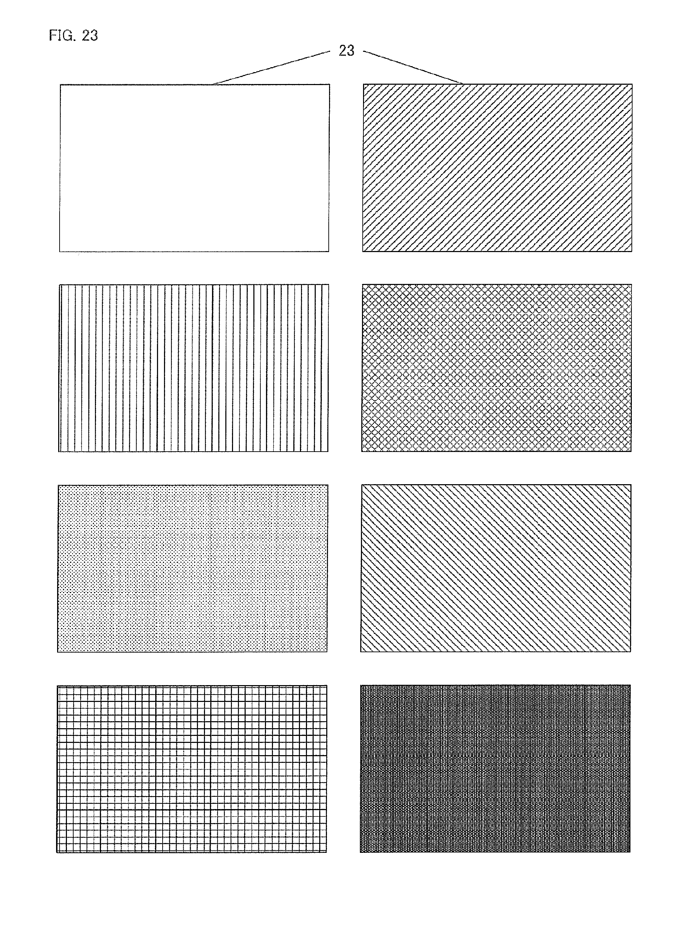

First of all, as the first step of this experiment, an original video image file 23 (AVI format) using eight colors of black (Black), red (R), green (G), blue (B), cyan (C), magenta (M), yellow (Y), white (White) for the whole surface of the image used as the background is prepared. Fig. 23 is a conceptual view of the original video image file 23, and R, G, B values of this original video image file 23 are as shown in Table 1.

[Table 1]

| Original Video File Image File | R value | G value | B value |
|---|---|---|---|
| Black | 0 | 0 | 0 |
| R | 255 | 0 | 0 |
| G | 0 | 255 | 0 |
| B | 0 | 0 | 255 |
| C | 0 | 255 | 255 |
| M | 255 | 0 | 255 |
| Y | 255 | 255 | 0 |
| White | 255 | 255 | 255 |

Next, as the second step of this experiment, pixel matrixes 22 are embedded in the above eight-color original video image file 23. In this example, a video composite tool, 'Adobe (registered trademark) After Effects (registered trademark) CS3 professional,' is used for creating the original video image file 23 of the first step and embedding the pixel matrixes 22 of the second step.

In this experiment, 2 x 3 pixel matrixes in which pixel information 21 of seven different colors, red (R), green (G), blue (B), cyan (C), magenta (M), yellow (Y), white (White), and the same pixel information 21 or pixels having intermediate values of the pixel information 21 and the R, G, B values of the original video image file 23 or pixels having R, G, B values obtained by interpolating by weighting based on a predetermined ratio the pixel information 21 and the R, G, B values of the original video image file 23 are arranged are embedded along the upper left edge of the eight color original video image file 23. The values of pixel information 21 are as shown in Table 2.

[Table2]

| | | Video image information 11011111 | | | Video image information 10011111 | | | Video image information 01011111 | | | Video image information 00011111 | | |
|---|---|---|---|---|---|---|---|---|---|---|---|---|---|
| | | R value | G value | B value | R value | G value | B value | R value | G value | B value | R value | G value | B value |
| | R | 223 | 0 | 0 | 159 | 0 | 0 | 95 | 0 | 0 | 31 | 0 | 0 |
| | G | 0 | 223 | 0 | 0 | 159 | 0 | 0 | 95 | 0 | 0 | 31 | 0 |
| | B | 0 | 0 | 223 | 0 | 0 | 159 | 0 | 0 | 95 | 0 | 0 | 31 |
| | C | 0 | 223 | 223 | 0 | 159 | 159 | 0 | 95 | 95 | 0 | 31 | 31 |
| | M | 223 | 0 | 223 | 159 | 0 | 159 | 95 | 0 | 95 | 31 | 0 | 31 |
| | Y | 223 | 223 | 0 | 159 | 159 | 0 | 95 | 95 | 0 | 31 | 31 | 0 |
| | White | 223 | 223 | 223 | 159 | 159 | 159 | 95 | 95 | 95 | 31 | 31 | 31 |

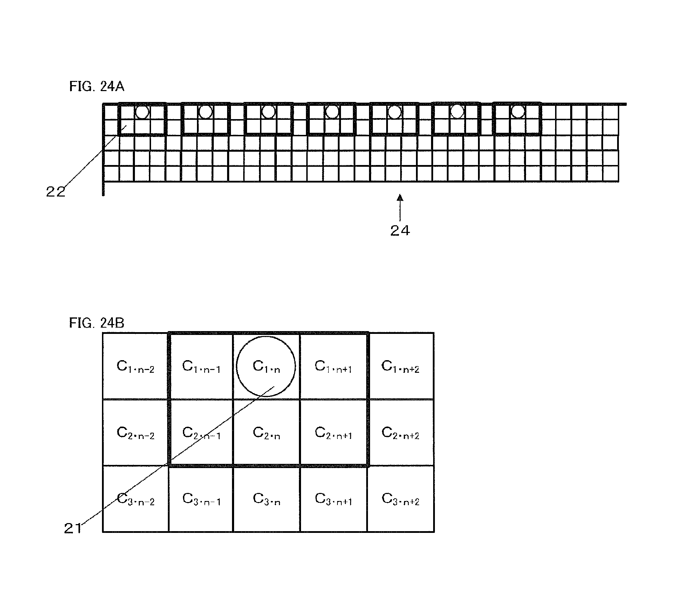

In this way, a pixel embedded video image file 24 in which seven pixel matrixes 22 are embedded can be created for eight colors as shown in Figs. 24A and 24B.

It should be noted that pixel information 21 is created in a manner so that the upper third bit always be "0," such as "11011111(223),""11011111(223),""01011111(95)," and "00011111(31)." This is for not affecting the values of the upper first bit and the upper second bit when the value is changed by mpeg2 compression. For example, if the value of pixel information 21 is "01111111," when the value increments one by mpeg2 compression, the whole value of the pixel information becomes "10000000(128)" and the values of the upper first bit and second bit change. On the other hand, if the value of pixel information 21 is "01011111(95)," even when the value increments one by mpeg2 compression, the value becomes "01100000(96)" and the values of the upper first bit and second bit do not change.

Particularly, R, G, B values of pixel information 21 are preferably intermediate values of the upper limit values and the lower limit values where changes of the values by mpeg2 compression are tolerable. That is, if the upper first bit and second bit values are "10," the upper limit value is "10111111(191)" and the lower limit value is "10000000(128)," and by setting the intermediate value "10011111(159)" thereof as initial R, G, B values, even when R, G, B values change due to mpeg2 compression, the values of the upper first bit and second bit rarely change.

However, the value of pixel information 21 may be "11111111(255)" or "00000000(0)." As such a value is the upper limit value/lower limit value of R, G, B values, and the value changes only downward/upward by mpeg2 compression, the upper third value does not necessarily be "0."

As the third step of the experiment, the pixel embedded video image file 24 is mpeg2 compressed. "TMPGEnc Plus2.5" is used for the compression.

As the fourth step of the experiment, the compressed mpeg2 video image file is extracted using "Adobe (registered trademark) After Effects (registered trademark) CS3 professional," and R, G, B values of pixels of the coordinates corresponding to pixel information 21 embedded in the pixel embedded video image file 24 before compression are measured.

Tables 3 to 7 are figures illustrating the results of the experiment.

[Table 3]

| | RGB Value: 11011111 No weighting | | | | | | | | | | | | | | |
| --- | --- | --- | --- | --- | --- | --- | --- | --- | --- | --- | --- | --- | --- | --- | --- |
| | Before compression | | | After Compression | | | | | | | | | | | |
| | | | | BG: Black | | | BG: R | | | BG: G | | | BG: B | | |
| | R Value | G Value | B Value | R Value | G Value | B Value | R Value | G Value | B Value | R Value | G Value | B Value | R Value | G Value | B Value |
| R | 223 | 0 | 0 | 217 | 0 | 3 | 221 | 2 | 3 | 218 | 5 | 0 | 213 | 5 | 0 |
| G | 0 | 223 | 0 | 8 | 217 | 5 | 8 | 215 | 4 | 0 | 223 | 0 | 0 | 219 | 6 |
| B | 0 | 0 | 223 | 5 | 0 | 208 | 9 | 2 | 214 | 2 | 4 | 220 | 8 | 0 | 220 |
| C | 0 | 223 | 223 | 3 | 218 | 225 | 3 | 219 | 221 | 0 | 222 | 221 | 5 | 214 | 230 |
| M | 223 | 0 | 223 | 217 | 2 | 218 | 218 | 3 | 219 | 213 | 6 | 219 | 217 | 0 | 223 |
| Y | 223 | 223 | 0 | 222 | 221 | 14 | 224 | 220 | 7 | 219 | 226 | 0 | 222 | 222 | 12 |
| White | 223 | 223 | 223 | 222 | 222 | 222 | 232 | 218 | 220 | 218 | 227 | 210 | 220 | 222 | 223 |
| | Before compression | | | After Compression | | | | | | | | | | | |
| | | | | BG: C | | | BG: M | | | BG: Y | | | BG: W | | |
| | R Value | G Value | B Value | R Value | G Value | B Value | R Value | G Value | B Value | R Value | G Value | B Value | R Value | G Value | B Value |
| R | 223 | 0 | 0 | 215 | 4 | 0 | 222 | 1 | 3 | 220 | 2 | 0 | 217 | 0 | 3 |
| G | 0 | 223 | 0 | 0 | 221 | 9 | 11 | 214 | 4 | 9 | 220 | 0 | 9 | 218 | 9 |
| B | 0 | 0 | 223 | 1 | 4 | 212 | 8 | 0 | 220 | 4 | 1 | 220 | 8 | 1 | 210 |
| C | 0 | 223 | 223 | 0 | 223 | 225 | 5 | 217 | 230 | 3 | 222 | 221 | 4 | 220 | 227 |
| M | 223 | 0 | 223 | 213 | 6 | 219 | 219 | 0 | 224 | 218 | 3 | 217 | 219 | 4 | 220 |
| Y | 223 | 223 | 0 | 219 | 223 | 12 | 223 | 221 | 14 | 223 | 223 | 0 | 223 | 223 | 16 |
| White | 223 | 223 | 223 | 219 | 226 | 224 | 230 | 218 | 224 | 226 | 226 | 215 | 224 | 224 | 224 |

[Table 4]

| RGB Value: 11011111(223) No weighting | | R Value | G Value | B Value |
|---|---|---|---|---|
| R | Max. value | 222 | 5 | 3 |
| R | Min. value | 213 | 0 | 0 |
| G | Max. value | 11 | 223 | 9 |
| G | Min. value | 0 | 214 | 0 |
| B | Max. value | 9 | 4 | 220 |
| B | Min. value | 1 | 0 | 208 |
| C | Max. value | 5 | 223 | 230 |
| C | Min. value | 0 | 214 | 221 |
| M | Max. value | 219 | 6 | 224 |
| M | Min. value | 213 | 0 | 217 |
| Y | Max. value | 224 | 226 | 16 |
| Y | Min. value | 219 | 220 | 0 |
| White | Max. value | 232 | 227 | 224 |
| White | Min. value | 218 | 218 | 210 |

Table 3 is a table indicating measured values of R, G, B of pixel information 21 of a compressed mpeg2 video image file when seven color pixel information 21 is created by defining R value, G value, and B value of pixel information 21 as "223" or "0," and pixel matrixes 22 in which pixels having the same R, G, B values as pixel information 21 are arranged in five directions around pixel information 21 are embedded in the original video image file 23 and mpeg2 compressed.

Table 4 is a table indicating the maximum values and the minimum values of R, G, B values of respective pixel information among the measured values of R, G, B in Table 3.

Here, pixel information 21 may define video image information only by R value (the color of pixel information 21 is red), video image information by G value and B value (the color of pixel information 21 is cyan), and video image information using R value, G value, and B value (the color of pixel information 21 is white).

Suppose such pixel information 21 defines the upper first and second bit values "11" as video image information. In such a case, even if R, G, B values change after compression, as long as the upper first and second bit values of the changed values are "11," "11000000" to "11111111," that is, the values are in the range of "192" to "255," the video image information can be read out even from the compressed pixel information 21.

According to Table 3 and Table 4, R value, G value, B value of compressed pixel information 21 that defines video image information take values in the range of "192" to "255" respectively, the video image information analysis unit 17 can analyze the upper first and second bits of the compressed pixel information 21 as video image information.

Moreover, if pixel information 21 defines the value of the upper first bit "1" as video image information, even if R, G, B values change after compression, as long as the upper first bit value of changed value is "1," "10000000" to "11111111," that is, the value is in the range of "128" to "255," the video image information can be read out even from the compressed pixel information 21.

According to Table 3 and Table 4, as R value, G value, B value of compressed pixel information 21 that defines video image information take values in the range of "128" to "255" respectively, the video image information analysis unit 17 can analyze the upper first bit of the compressed pixel information 21 as video image information.

[Table 5]

| | RGB Value: 10011111 No weighting | | | | | | | | | | | | | | |
|---|---|---|---|---|---|---|---|---|---|---|---|---|---|---|---|
| | Before compression | | | After Compression | | | | | | | | | | | |
| | | | | BG: Black | | | BG: R | | | BG: G | | | BG: B | | |
| | R Value | G Value | B Value | R Value | G Value | B Value | R Value | G Value | B Value | R Value | G Value | B Value | R Value | G Value | B Value |
| R | 159 | 0 | 0 | 151 | 0 | 1 | 159 | 3 | 0 | 151 | 5 | 0 | 150 | 4 | 3 |
| G | 0 | 159 | 0 | 6 | 152 | 7 | 4 | 155 | 0 | 1 | 159 | 0 | 2 | 158 | 8 |
| B | 0 | 0 | 159 | 4 | 0 | 143 | 3 | 1 | 150 | 1 | 4 | 153 | 3 | 0 | 156 |
| C | 0 | 159 | 159 | 5 | 156 | 164 | 4 | 154 | 158 | 0 | 159 | 157 | 0 | 154 | 170 |
| M | 159 | 0 | 159 | 151 | 1 | 152 | 152 | 0 | 154 | 148 | 6 | 152 | 150 | 3 | 162 |
| Y | 159 | 159 | 0 | 157 | 158 | 12 | 160 | 158 | 4 | 156 | 162 | 1 | 155 | 158 | 14 |
| White | 159 | 159 | 159 | 157 | 157 | 157 | 168 | 155 | 150 | 152 | 161 | 149 | 156 | 158 | 157 |
| | Before compression | | | After Compression | | | | | | | | | | | |
| | | | | BG: C | | | BG: M | | | BG: Y | | | BG: W | | |
| | R Value | G Value | B Value | R Value | G Value | B Value | R Value | G Value | B Value | R Value | G Value | B Value | R Value | G Value | B Value |
| R | 159 | 0 | 0 | 154 | 5 | 0 | 159 | 0 | 3 | 156 | 3 | 0 | 153 | 3 | 3 |
| G | 0 | 159 | 0 | 0 | 158 | 8 | 7 | 152 | 5 | 10 | 154 | 0 | 7 | 154 | 8 |
| B | 0 | 0 | 159 | 2 | 6 | 150 | 7 | 0 | 155 | 6 | 0 | 152 | 8 | 3 | 148 |
| C | 0 | 159 | 159 | 2 | 158 | 164 | 6 | 154 | 170 | 6 | 156 | 158 | 5 | 156 | 164 |
| M | 159 | 0 | 159 | 150 | 4 | 156 | 154 | 3 | 161 | 151 | 4 | 152 | 153 | 3 | 154 |
| Y | 159 | 159 | 0 | 157 | 158 | 12 | 158 | 157 | 12 | 163 | 159 | 3 | 157 | 158 | 12 |
| White | 159 | 159 | 159 | 154 | 164 | 161 | 169 | 155 | 160 | 171 | 159 | 152 | 161 | 161 | 161 |

[Table 6]

| RGB value: 10011111(159) No weighting | | R value | G value | B value |
|---|---|---|---|---|
| R | Max. value | 159 | 5 | 3 |
| R | Min. value | 150 | 0 | 0 |
| G | Max. value | 10 | 159 | 8 |
| G | Min. value | 0 | 152 | 0 |
| B | Max. value | 8 | 6 | 156 |
| B | Min. value | 1 | 0 | 143 |
| C | Max. value | 6 | 159 | 170 |
| C | Min. value | 0 | 154 | 157 |
| M | Max. value | 154 | 6 | 162 |
| M | Min. value | 148 | 0 | 152 |
| Y | Max. value | 163 | 162 | 14 |
| Y | Min. value | 155 | 157 | 1 |
| White | Max. value | 171 | 164 | 161 |
| White | Min. value | 152 | 155 | 149 |

Table 5 is a table indicating measured values of R, G, B of pixel information 21 of a compressed mpeg2 video image file when seven color pixel information 21 is created by defining R value, G value, and B value of pixel information 21 as "159" or "0," and pixel matrixes 22 in which pixels having the same R, G, B values as pixel information 21 are arranged in five directions around pixel information 21 are embedded in the original video image file 23 and mpeg2 compressed.

Table 6 is a table indicating the maximum values and the minimum values of R, G, B, values of respective pixel information among the measured values of R, G, B in Table 5.

Suppose such pixel information 21 defines the upper first and second bit values "10" as video image information. In such a case, even if R, G, B values change after compression, as long as the upper first and second bit values of the changed values are "10," "10000000" to "10111111," that is, the values are in the range of "128" to "191," video image information can be read even from the compressed pixel information 21.

According to Table 5 and Table 6, R value, G value, B value of compressed pixel information 21 that defines video image information take values in the range of "128" to "191" respectively, the video image information analysis unit 17 can analyze the upper first and second bits of pixel information 21 as video image information.

Moreover, if pixel information 21defines the value of the upper first bit "1" as video image information, even if R, G, B values change after compression, as long as the first bit value of changed value is "1," "10000000" to "11111111," that is, the value is in the range of "128" to "255," video image information can be read out from the compressed pixel information 21.

According to Table 5 and Table 6, as R value, G value, B value of compressed pixel information 21 that defines video image information take values in the range of "128" to "255" respectively, the video image information analysis unit 17 can analyze the upper first bit of pixel information 21 as video image information.

[Table 7]

| | RGB Value: 01011111 No weighting | | | | | | | | | | | | | | |
|---|---|---|---|---|---|---|---|---|---|---|---|---|---|---|---|
| | Before compression | | | After Compression | | | | | | | | | | | |
| | | | | BG: Black | | | BG: R | | | BG: G | | | BG: B | | |
| | R Value | G Value | B Value | R Value | G Value | B Value | R Value | G Value | B Value | R Value | G Value | B Value | R Value | G Value | B Value |
| R | 95 | 0 | 0 | 88 | 0 | 0 | 95 | 2 | 0 | 89 | 3 | 0 | 85 | 3 | 4 |
| G | 0 | 95 | 0 | 5 | 89 | 8 | 6 | 92 | 0 | 0 | 97 | 0 | 0 | 92 | 5 |
| B | 0 | 0 | 95 | 5 | 0 | 80 | 4 | 4 | 89 | 0 | 2 | 89 | 0 | 3 | 90 |
| C | 0 | 95 | 95 | 6 | 91 | 99 | 6 | 92 | 93 | 1 | 95 | 93 | 0 | 92 | 102 |
| M | 95 | 0 | 95 | 91 | 1 | 95 | 95 | 3 | 95 | 86 | 6 | 92 | 82 | 4 | 103 |
| Y | 95 | 95 | 0 | 91 | 93 | 8 | 92 | 94 | 0 | 92 | 97 | 0 | 89 | 94 | 8 |
| White | 95 | 95 | 95 | 94 | 94 | 94 | 101 | 91 | 85 | 86 | 102 | 87 | 88 | 95 | 95 |
| | Before compression | | | After Compression | | | | | | | | | | | |
| | | | | BG: C | | | BG: M | | | BG: Y | | | BG: W | | |
| | R Value | G Value | B Value | R Value | G Value | B Value | R Value | G Value | B Value | R Value | G Value | B Value | R Value | G Value | B Value |
| R | 95 | 0 | 0 | 87 | 1 | 0 | 97 | 0 | 6 | 91 | 1 | 0 | 89 | 0 | 1 |
| G | 0 | 95 | 0 | 0 | 93 | 6 | 8 | 90 | 5 | 10 | 91 | 0 | 6 | 90 | 9 |
| B | 0 | 0 | 95 | 0 | 2 | 90 | 5 | 0 | 90 | 8 | 0 | 91 | 7 | 0 | 82 |
| C | 0 | 95 | 95 | 1 | 94 | 106 | 7 | 89 | 105 | 8 | 92 | 96 | 6 | 91 | 99 |
| M | 95 | 0 | 95 | 85 | 3 | 99 | 97 | 0 | 103 | 88 | 3 | 93 | 92 | 2 | 96 |
| Y | 95 | 95 | 0 | 95 | 94 | 12 | 94 | 89 | 9 | 98 | 96 | 0 | 91 | 93 | 8 |
| White | 95 | 95 | 95 | 89 | 101 | 97 | 106 | 94 | 98 | 104 | 97 | 88 | 99 | 97 | 98 |

[Table 8]

| RGB value: 01011111(95) No weighting | | | | |
|---|---|---|---|---|
| | | R value | G value | B value |
| R | Max. value | 97 | 3 | 6 |
| | Min. value | 85 | 0 | 0 |
| G | Max. value | 10 | 97 | 9 |
| | Min. value | 0 | 71 | 0 |
| B | Max. value | 8 | 4 | 91 |
| | Min. value | 0 | 0 | 80 |
| C | Max. value | 8 | 95 | 106 |
| | Min. value | 0 | 89 | 93 |
| M | Max. value | 97 | 6 | 103 |
| | Min. value | 82 | 0 | 92 |
| Y | Max. value | 98 | 97 | 12 |
| | Min. value | 89 | 89 | 0 |
| White | Max. value | 106 | 102 | 98 |
| | Min. value | 86 | 91 | 85 |

Table 7 is a table indicating measured values of R, G, B of pixel information 21 of a compressed mpeg2 video image file when seven color pixel information 21 is created by defining R value, G value, and B value of pixel information 21 as "95" or "0," and pixel matrixes 22 in which pixels having the same R, G, B values as pixel information 21 are arranged in five directions around pixel information 21 are embedded in the original video image file 23 and mpeg2 compressed.

Table 8 is a table indicating the maximum values and the minimum values of R, G, B values of respective pixel information among the measured values of R, G, B in Table 7.

Suppose such pixel information 21 defines the upper first and second bit values "01" as video image information. In such a case, even if R, G, B values change after compression, as long as the upper first and second bit values of the changed values are "01," "01000000" to "01111111," that is, the values are in the range of "64" to "127," video image information can be read out even from the compressed pixel information 21.

According to Table 7 and Table 8, R value, G value, B value of compressed pixel information 21 that defines video image information take values in the range of "64" to "127" respectively, the video image information analysis unit 17 can analyze the upper first and second bits of the compressed pixel information 21 as video image information.

Moreover, if pixel information 21 defines the value of the upper first bit "0" as video image information, even if R, G, B values change after compression, as long as the first bit value of changed value is "0," "00000000" to "01111111," that is, the value is in the range of "0" to "127," the video image information can be read out even from the compressed pixel information 21.

According to Table 7 and Table 8, R value, G value, B value of compressed pixel information 21 that defines video image information take values in the range of "0" to "127" respectively, video image information analysis unit 17 can analyze the upper first bit of the compressed pixel information 21 as video image information.

[Table 9]

| | RGB value: 00011111 No weighting | | | | | | | | | | | | | | |
|---|---|---|---|---|---|---|---|---|---|---|---|---|---|---|---|
| | Before compression | | | After compression | | | | | | | | | | | |
| | | | | BG: Black | | | BG: R | | | BG: G | | | BG: B | | |
| | R value | G value | B value | R value | G value | B value | R value | G value | B value | R value | G value | B value | R value | G value | B value |
| Black | 0 | 0 | 0 | 0 | 0 | 0 | 9 | 0 | 0 | 0 | 6 | 0 | 0 | 0 | 7 |
| R | 31 | 0 | 0 | 26 | 0 | 4 | 33 | 0 | 0 | 27 | 4 | 0 | 22 | 4 | 1 |
| G | 0 | 31 | 0 | 6 | 27 | 11 | 4 | 32 | 0 | 1 | 34 | 0 | 1 | 30 | 5 |
| B | 0 | 0 | 31 | 2 | 0 | 20 | 4 | 2 | 30 | 3 | 1 | 27 | 0 | 2 | 31 |
| C | 0 | 31 | 31 | 7 | 26 | 31 | 9 | 29 | 29 | 1 | 33 | 29 | 2 | 28 | 37 |
| M | 31 | 0 | 31 | 24 | 2 | 26 | 32 | 0 | 27 | 24 | 5 | 25 | 21 | 4 | 39 |
| Y | 31 | 31 | 0 | 28 | 29 | 11 | 34 | 31 | 0 | 26 | 35 | 0 | 25 | 32 | 5 |
| White | 31 | 31 | 31 | 30 | 30 | 32 | 39 | 29 | 23 | 23 | 37 | 21 | 25 | 31 | 40 |
| | Before compression | | | After compression | | | | | | | | | | | |
| | | | | BG: C | | | BG: M | | | BG: Y | | | BG: W | | |
| | R value | G value | B value | R value | G value | B value | R value | G value | B value | R value | G value | B value | R value | G value | B value |
| Black | 0 | 0 | 0 | 0 | 3 | 7 | 8 | 0 | 9 | 4 | 1 | 0 | 0 | 1 | 0 |
| R | 31 | 0 | 0 | 27 | 0 | 2 | 32 | 0 | 2 | 32 | 1 | 0 | 26 | 0 | 4 |
| G | 0 | 31 | 0 | 1 | 30 | 7 | 5 | 27 | 1 | 11 | 29 | 3 | 6 | 27 | 9 |
| B | 0 | 0 | 31 | 3 | 0 | 31 | 4 | 2 | 32 | 5 | 0 | 29 | 6 | 2 | 24 |
| C | 0 | 31 | 31 | 1 | 31 | 41 | 7 | 28 | 39 | 9 | 27 | 28 | 8 | 27 | 32 |
| M | 31 | 0 | 31 | 21 | 2 | 36 | 31 | 0 | 38 | 26 | 2 | 24 | 24 | 2 | 26 |
| Y | 31 | 31 | 0 | 28 | 33 | 13 | 33 | 29 | 8 | 33 | 31 | 0 | 30 | 30 | 12 |
| White | 31 | 31 | 31 | 26 | 35 | 35 | 39 | 28 | 39 | 39 | 31 | 27 | 33 | 32 | 35 |

[Table 10]

| RGB value : 00011111(31) No weighting | | R value | G value | B value |
|---|---|---|---|---|
| R | Max. value | 33 | 4 | 4 |
| R | Min. value | 22 | 0 | 0 |
| G | Max. value | 11 | 34 | 11 |
| G | Min. value | 1 | 27 | 0 |
| B | Max. value | 6 | 2 | 32 |
| B | Min. value | 0 | 0 | 20 |
| C | Max. value | 9 | 33 | 41 |
| C | Min. value | 1 | 26 | 28 |
| M | Max. value | 32 | 5 | 39 |
| M | Min. value | 21 | 0 | 24 |
| Y | Max. value | 34 | 35 | 34 |
| Y | Min. value | 25 | 29 | 0 |
| White | Max. value | 39 | 37 | 40 |
| White | Min. value | 23 | 28 | 21 |

Table 9 is a table indicating measured values of R, G, B of pixel information 21 of a compressed mpeg2 video image file when seven color pixel information 21 is created by defining R value, G value, and B value of pixel information 21 as "31" or "0," and pixel matrixes 22 in which pixels having the same R, G, B values as pixel information 21 are arranged in five directions around pixel information 21 are embedded in the original video image file 23 and mpeg2 compressed.

Table 10 is a table indicating the maximum values and the minimum values of R, G, B, values of respective pixel information among the measured values of R, G, B in Table 9.

Suppose such pixel information 21 defines the upper first and second bit values "00" as video image information. In such a case, even if R, G, B values change after compression, as long as the upper first and second bit values of the changed values are "00," "00000000" to "00111111," that is, the values are between "0" to "63," video image information can be read out even from the compressed pixel information 21.

According to Table 9 and Table 10, R value, G value, B value of compressed pixel information 21 that defines video image information take values in the range of "0" to "63" respectively, the video image information analysis unit 17 can analyze the upper first and second bits of pixel information 21 as video image information.

Moreover, if pixel information 21 defines the value of the upper first bit "0" as video image information, even if R, G, B values change after compression, as long as the upper first bit value of changed value is "0," "00000000" to "01111111," that is, the value is in the range of "0" to "127," the video image information can be read out even from the compressed pixel information 21.

According to Table 9 and Table 10, as R value, G value, B value of compressed pixel information 21 that defines video image information take values in the range of "0" to "127" respectively, the video image information analysis unit 17 can analyze the upper first bit of the compressed pixel information 21 as video image information.

[Table 11]

| | RGB value: 11111111 Weighting 2:1 | | | | | | | | | | | | | | |
|---|---|---|---|---|---|---|---|---|---|---|---|---|---|---|---|
| | Before compression | | | After compression | | | | | | | | | | | |
| | | | | BG: Black | | | BG: R | | | BG: G | | | BG: B | | |
| | R value | G value | B value | R value | G value | B value | R value | G value | B value | R value | G value | B value | R value | G value | B value |
| R | 255 | 0 | 0 | 201 | 19 | 21 | 255 | 0 | 0 | 168 | 50 | 0 | 190 | 14 | 73 |
| G | 0 | 255 | 0 | 40 | 220 | 39 | 86 | 202 | 22 | 0 | 255 | 0 | 28 | 218 | 101 |
| B | 0 | 0 | 255 | 11 | 4 | 186 | 59 | 0 | 171 | 0 | 38 | 154 | 0 | 0 | 255 |
| C | 0 | 255 | 255 | 46 | 227 | 234 | 93 | 210 | 218 | 7 | 255 | 197 | 41 | 219 | 255 |
| M | 255 | 0 | 255 | 211 | 26 | 211 | 255 | 11 | 196 | 173 | 60 | 180 | 207 | 19 | 255 |
| Y | 255 | 255 | 0 | 243 | 242 | 65 | 255 | 223 | 48 | 200 | 255 | 18 | 234 | 237 | 120 |
| White | 255 | 255 | 255 | 253 | 252 | 255 | 255 | 228 | 233 | 211 | 255 | 206 | 245 | 246 | 255 |
| | Before compression | | | After compression | | | | | | | | | | | |
| | | | | BG: C | | | BG: M | | | BG: Y | | | BG: W | | |
| | R value | G value | B value | R value | G value | B value | R value | G value | B value | R value | G value | B value | R value | G value | B value |
| R | 255 | 0 | 0 | 157 | 42 | 37 | 243 | 0 | 56 | 214 | 30 | 0 | 205 | 22 | 24 |
| G | 0 | 255 | 0 | 0 | 248 | 69 | 81 | 193 | 80 | 54 | 233 | 0 | 48 | 228 | 47 |
| B | 0 | 0 | 255 | 0 | 31 | 207 | 55 | 0 | 230 | 25 | 16 | 140 | 14 | 7 | 190 |
| C | 0 | 255 | 255 | 0 | 255 | 255 | 88 | 201 | 255 | 61 | 242 | 178 | 55 | 236 | 243 |
| M | 255 | 0 | 255 | 166 | 52 | 236 | 255 | 0 | 255 | 221 | 38 | 156 | 217 | 32 | 217 |
| Y | 255 | 255 | 0 | 196 | 255 | 88 | 255 | 216 | 108 | 255 | 255 | 0 | 249 | 248 | 71 |
| White | 255 | 255 | 255 | 204 | 255 | 255 | 255 | 221 | 255 | 255 | 255 | 186 | 255 | 255 | 255 |

[Table 12]

| RGB value : 11111111(255) Weighting 2:1 | | R value | G value | B value |
|---|---|---|---|---|
| R | Max. value | 255 | 50 | 73 |
| R | Min. value | 157 | 0 | 0 |
| G | Max. value | 86 | 255 | 101 |
| G | Min. value | 0 | 193 | 0 |
| B | Max. value | 59 | 38 | 255 |
| B | Min. value | 0 | 0 | 140 |
| C | Max. value | 93 | 255 | 255 |
| C | Min. value | 0 | 201 | 178 |
| M | Max. value | 255 | 60 | 255 |
| M | Min. value | 166 | 0 | 156 |
| Y | Max. value | 255 | 255 | 120 |
| Y | Min. value | 196 | 216 | 0 |
| White | Max. value | 255 | 255 | 255 |
| White | Min. value | 204 | 221 | 186 |

Table 11 is a table indicating measured values of R, G, B of pixel information 21 of a compressed mpeg2 video image file when seven color pixel information 21 is created by defining R value, G value, and B value of pixel information 21 as "255" or "0," and pixel matrixes 22 in which pixels having R, G, B values calculated by weighting with 2:1 ratio R, G, B values of pixel information 21 and R, G, B values of the pixels of the original video image file 23 are arranged in five directions around pixel information 21 are embedded in the original video image file 23 and mpeg2 compressed.

Table 12 is a table indicating the maximum values and the minimum values of R, G, B values of respective pixel information among the measured values of R, G, B in Table 11.

Suppose such pixel information 21 defines the upper first and second bit values "11" as video image information. In such a case, even if R, G, B values change after compression, as long as the upper first and second bit values of the changed values are "11," "11000000" to "11111111," that is, the values are in the range of "193" to "255," video image information can be read out even from the compressed pixel information 21.

However, according to Table 11 and Table 12, as some R value, G value, and B value of the compressed pixel information 21 that defines video image information do not take values in the range of "192" to "255," only the upper first bit can be defined as video image information.

If pixel information 21 defines the upper first bit value as "1" as video image information, even if R, G, B values change after compression, as long as the first bit value of the changed values is "1," "10000000" to "11111111," that is, the values are in the range of "128" to "255," video image information can be read out even from the compressed pixel information 21.

According to Table 11 and Table 12, as R value, G value, B value of compressed pixel information 21 that defines video image information take values in the range of "128" to "255" respectively, the video image information analysis unit 17 can analyze the upper first bit of the compressed pixel information 21 as video image information.

The examination results of Table 11 and Table 12 have the ground in that pixel matrixes 22 are configured by arranging pixels having R, G, B values calculated by weighting R, G, B values of pixel information 21 and R, G, B values of the pixels of the original video image file 23 at 2:1 ratio at the periphery of the pixel information 21. That is, by weighting, influence from the original video image file 23 to pixel information 21 that defines video image information becomes large, and R, G, B values after mpeg2 compression largely change. However, there is a merit that the influence to the original video image 23 by embedding pixel matrixes 22 becomes relatively smaller, that is, pixel matrixes 22 become unnoticeable, which is preferred when the influence to the original video image file is desired to be suppressed. On the contrary, the examination results of Tables 3 to 6 reveals a merit of not weighting that, by using all pixels constituting pixel matrixes 22 the same as the ones of pixel information 21, the influence of mpeg2 compression to R, G, B values of pixel information 21 is prevented and greater volume of information can be embedded.

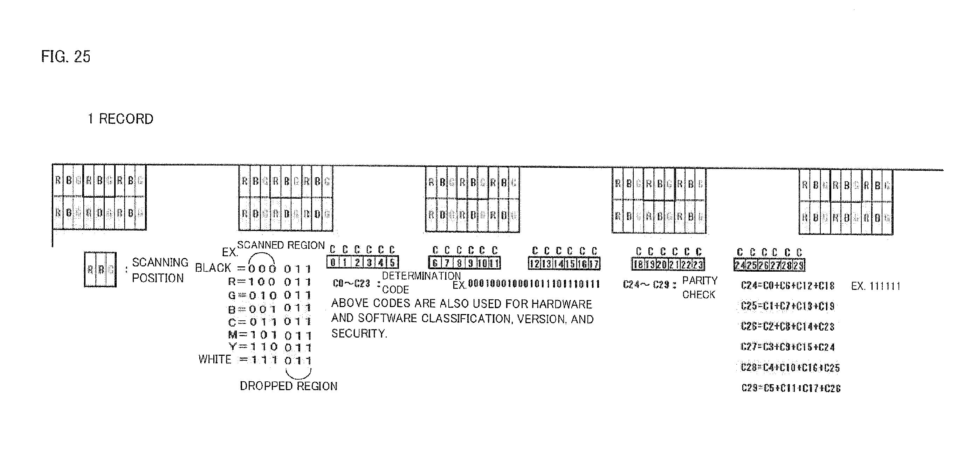

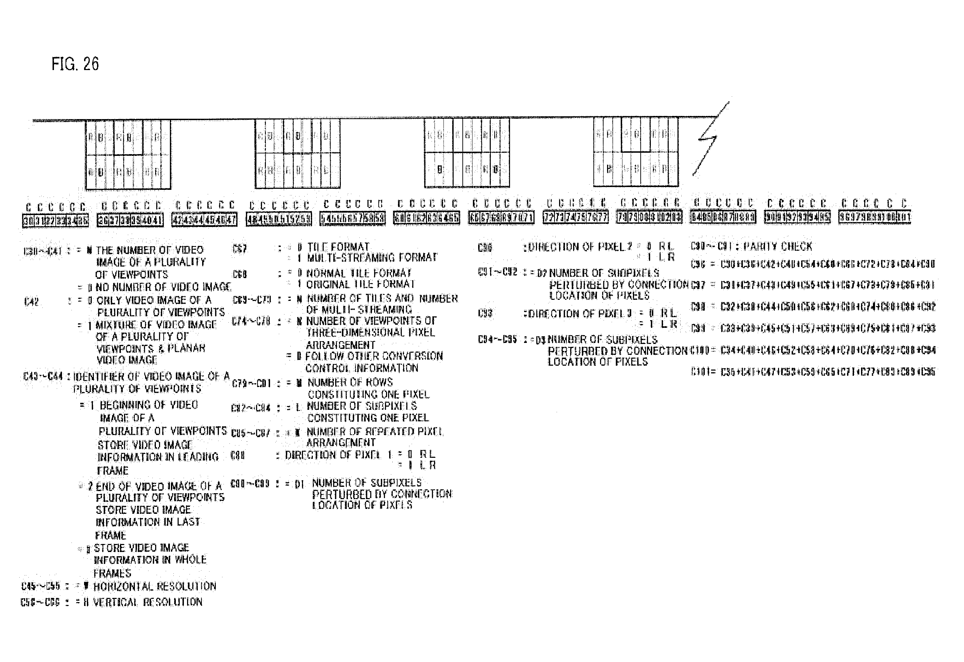

Figs. 25 and 26 are diagrams illustrating what kind of information the video image information actually means in the above examples. According to Fig. 25, codes $C_0$ to $C_{23}$ are used as determination codes (a header). As the combinations of R, G, B, values of such determination codes are almost impossible in the natural world, the video image information analysis unit 17 can recognize that the pixel information is embedded and defines video image information.

Codes $C_0$ to $C_{23}$ are used for parity check as shown in Fig. 25. Codes $C_{30}$ to $C_{89}$ means conversion control information and a pixel arrangement method as specifically shown in Fig. 26. The details of the conversion control information and pixel arrangement method are described later. Codes $C_{90}$ to $C_{95}$ are used for parity check as shown in Fig. 26.

Conversion control information

The conversion control information used in the video image conversion device 1 of the invention is described in detail.

Conversion control information means information necessary to transmit video images of a plurality of viewpoints received by the video image conversion device 1 to a three-dimensional video image display device for three-dimensional display. The conversion control information includes the one set in the video image conversion device 1 in advance, the one input from the above-described control signals, and the one input based on the above-described video image information. The video image conversion device 1 converts the pixel arrangement of the video images of the plurality of viewpoints to display three-dimensionally most appropriately.

Specifically, the conversion control information means a scanning method, such as NTSC and PAL, a transmission method, such as interlaced and progressive, the number of viewpoints, a resolution, a pixel arrangement method and the like.

Pixel arrangement method

The pixel arrangement method specifically means the number of rows constituting one pixel, the number of subpixels constituting the one pixel, the number of pixels connected in a combination of the pixels, the number of subpixels perturbed by a connection location for each pixel.

Function of each component

The following describes the functions of each component of the video image conversion device 1 according to the invention in detail.

Receiving unit

The receiving unit 12 has a function of receiving video images transmitted as video image signals from the video image output device 2. The receiving unit 12 also has a function of receiving conversion control information transmitted as control signals from the video image output device 2 or three-dimensional video image display device 3. When the receiving unit 12 receives a video image, transmits the video image to the storage unit 13, and, when the receiving unit 12 receives conversion control information, transmits the conversion control information to the conversion control unit 14.

Storage unit

The storage unit 13 has a function of storing video images received by the receiving unit 12 as video image signals into a storage element (a frame buffer).

Video image information analysis unit

The video image information analysis unit 17 has a function of referring to video images stored by the storage unit 13 in the storage element, and analyzing the video image information. The video image information analysis unit 17 is required when using a video image embedded with pixel information 21 that defines video image information.

It should be noted that pixel information 21 is normally embedded only in three-dimensional video images. This is for saving a process of newly embedding pixel information 21 in planar video images in which a great amount of contents already exist, provided, however, pixel information 21 may, of course, be embedded in planar video images.

The most basic purpose of the video image information analysis unit 17 is to analyze video image information for determining the video image received as a video image signal by the receiving unit 12 is whether a planar video image or a video image of a plurality of viewpoints (a three-dimensional video image). This is because when the video image received by the receiving unit 12 is a planar video image, the planar video image is required to be output as is to the three-dimensional video image display device 3 without going through any processing for three-dimensional video image display, such as pixel arrangement conversion.

It should be noted that, as R, G, B values of pixel information 21 change by irreversible compression as described above, the video image information is preferably analyzed by referring only to upper bits of predetermined digits.

The video image information analysis unit 17 specifies the position where pixel information 21 is embedded based on a predetermined arrangement pattern, determines whether a header verifying video image information exists or not, and analyzes the video image information when the header exits.

Conversion control unit

The conversion control unit 14 firstly has a function of instructing (controlling an instruction) the conversion unit 15 to convert video images of a plurality of viewpoints into a pixel arrangement for three-dimensional video image display based on a preset conversion control information.

The conversion control unit 14 secondly has a function of determining (controlling a determination) whether the video image received by the receiving unit 12 from the video image output device 2 is the video image of a plurality of viewpoints, the planar video image, or the mixture video image of the video image of a plurality of viewpoints and the planar video image based on the video image information or control signal.

The conversion control unit 14 thirdly has a function of instructing the conversion unit 15 to convert video images of a plurality of viewpoints into a pixel arrangement for three-dimensional video image display based on, instead of preset conversion control information, conversion control information recognized based on the video image information or control signal or conversion control information stored by the conversion control information storing unit 18 which is described below.

Conversion control information storing unit

The conversion control information storing unit 18 has a function of storing new conversion control information when the conversion control unit 14 instructs the conversion unit 15 to convert video images of a plurality of viewpoints into a pixel arrangement for three-dimensional video image display based on, instead of preset conversion control information, conversion control information recognized by the conversion control unit 14 based on the video image information or control signal.

Conversion unit

The conversion unit 15 has a function of, after receiving an instruction from the conversion control unit 14, converting, that is, blending, a pixel arrangement of video images of a plurality of viewpoints into a pixel arrangement for three-dimensional video image display. The blending method is described later.

Conversion control flow

When converting a mixture video image file of a planar video image and a video image of a plurality of viewpoints by the video image conversion device 1 of the invention, it is required to recognize the part of the planar video image and the part of the video image of a plurality of viewpoints in the video image file. When identifying a planar video image or a video image of a plurality of viewpoints based on the video image information, there are two patterns: a method for always embedding pixel information 21 that defines video image information in video images of a plurality of viewpoints; and a method for embedding pixel information 21 that defines video image information only in video images at the moments of starting and ending the video images of the plurality of viewpoints.

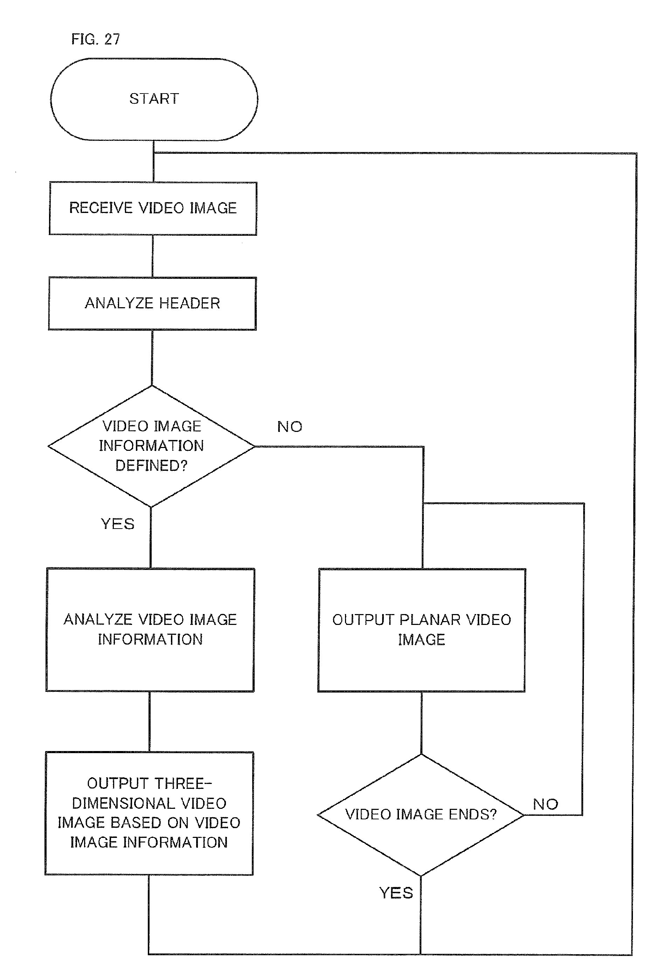

Fig. 27 is a flowchart showing a method for identifying a planar video image and a video image of a plurality of viewpoints by always embedding pixel information 21 that defines video image information in video images of a plurality of viewpoints.

However, to prevent the influence of irreversible compression in a time direction, pixel information 21 that defines identical video image information may be embedded in frames before and after the frame at the moment when a video image of a plurality of viewpoints starts and frames before and after the frame at the moment when a video image of a plurality of viewpoints ends.

According to Fig. 27, when the receiving unit 12 receives a video image, the video image information analysis unit 17 analyzes whether a header exists at a predetermined position or not based on a predetermined pixel arrangement pattern. (1) When there is a header, as the frame is a frame of a video image of a plurality of viewpoints and the frame defines video image information, the video image information analysis unit 17 analyzes video image information. (2) When there is no header, as the frame is a frame of a planar video image and the frame does not define video image information, the video image information analysis unit 17 does not analyze video image information. When the above analysis ends, the video image information analysis unit 17 proceeds to analysis of the next frame.

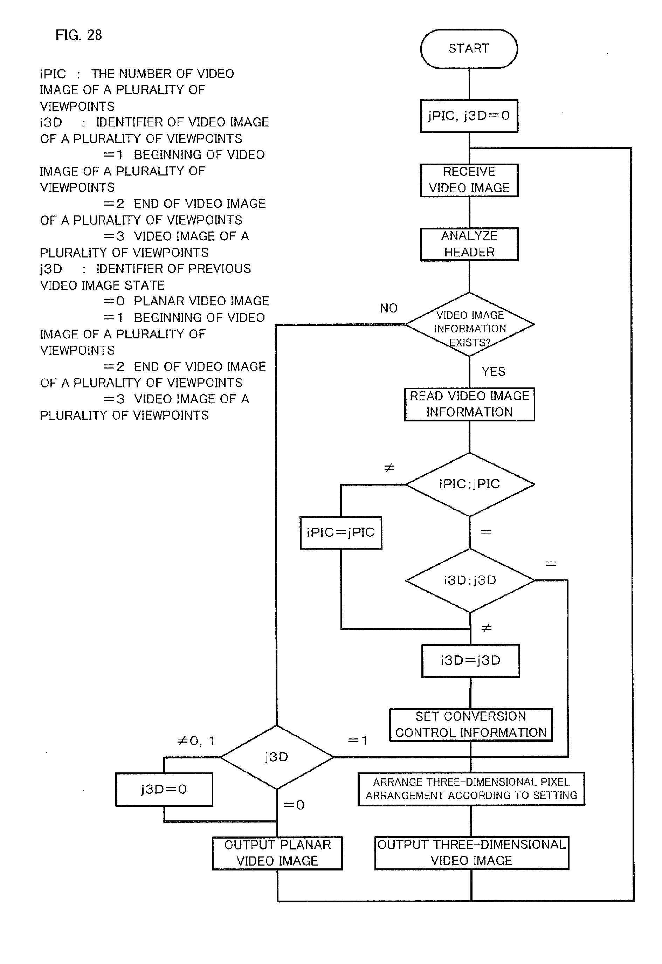

Fig. 28 is a flowchart showing a method for identifying a planar video image and a video image of a plurality of viewpoints by embedding pixel information 21 that defines video image information only in the video images at the moments of starting and ending the video image of the plurality of viewpoints.

In Fig. 28, the video image information analysis unit 17 can determine whether the frame of the video image in which pixel information 21 is not embedded is the frame of a video image of a plurality of viewpoints or the frame of a planar video image by referring to an identifier of a video image of a plurality of viewpoints i3D and an identifier of a previous video image state j3D.

Blending

Blending, that is, how to arrange video images for respective viewpoints on the surface of the three-dimensional video image display device 3 is an important designing condition for forming the shape, width, inclination, intervals of slits of a parallax barrier in order to suppress a decrease of horizontal resolution or alleviate jump points attributable to the number of viewpoints and a plurality of viewpoints.

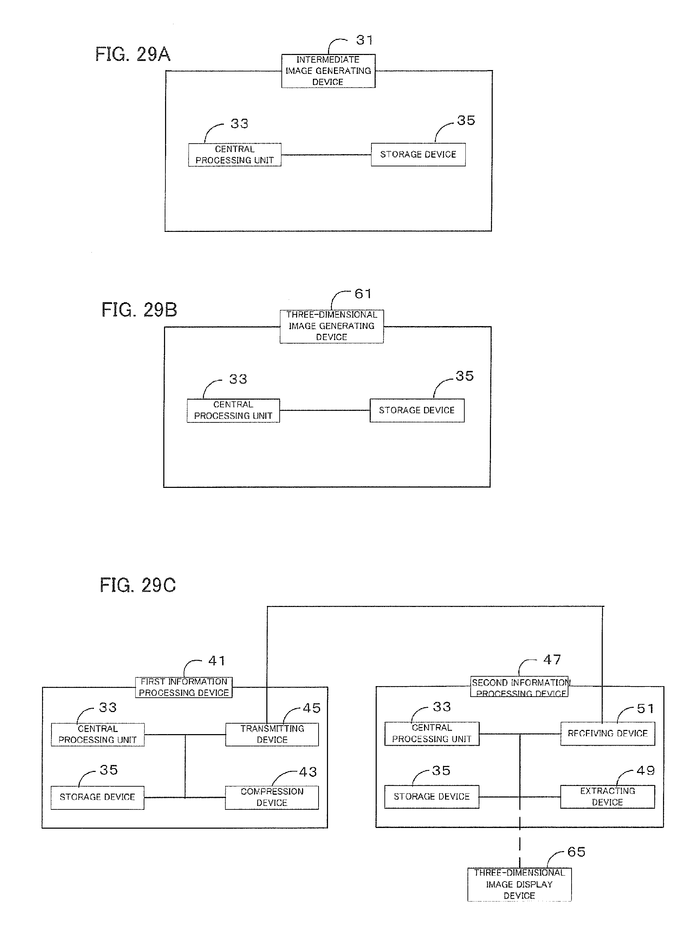

Figs. 29A to 29C are block diagrams schematically showing the structure of the intermediate image generating device, the structure of the three-dimensional image (three-dimensional video image) generating device, and the structure of the information processing device used in the three-dimensional image generating system.

The intermediate image generating device 31 of Fig. 29A comprises a central processing unit 33 and a storage device 35.

The storage device 35 stores a plurality of viewpoint images imaged and/or drawn from a plurality of viewpoints from the first to Nth viewpoints. The viewpoint images may be generated by imaging an object from different viewpoints using a plurality of cameras, as well as drawing using computer graphics. The central processing unit 33 generates intermediate images by performing a plurality of arithmetic processings from the plurality of viewpoint images stored in the storage device 35.

The three-dimensional image generating device 61 of Fig. 29B comprises a central processing unit 33 and a storage device 35.

The central processing unit 33 causes the storage device 35 (a frame buffer) to store a plurality of input intermediate images and generates a three-dimensional image by converting the pixel arrangement.

The three-dimensional image generating system of Fig. 29C comprises a first information processing device 41 and a second information processing device 47; the first information processing device 41 comprises a central processing unit 33, a storage device 35, a compression device 43, and a transmitting device 45; and the second information processing device 47 comprises a central processing unit 33, a storage device 35, an extracting device 49, and a receiving device 51.

The compression device 43 performs an irreversible compression of a plurality of intermediate images with a predetermined method. For the compression method, a typical method, such as JPEG for static images, MPEG-2, MPEG-4 for moving images, is used. The transmitting device 45 transmits a plurality of intermediate images compressed by the compression device 43 to the second information processing device 47. For the transmitting method, in addition to a wired transmission through a USB port, a wireless transmission, such as, by optical communication, Bluetooth (registered trademark), wireless LAN, can be considered. The receiving device 51 receives a plurality of intermediate images transmitted by the transmitting device 45. The extracting device 49 extracts a plurality of intermediate images compressed by the compression device 43.

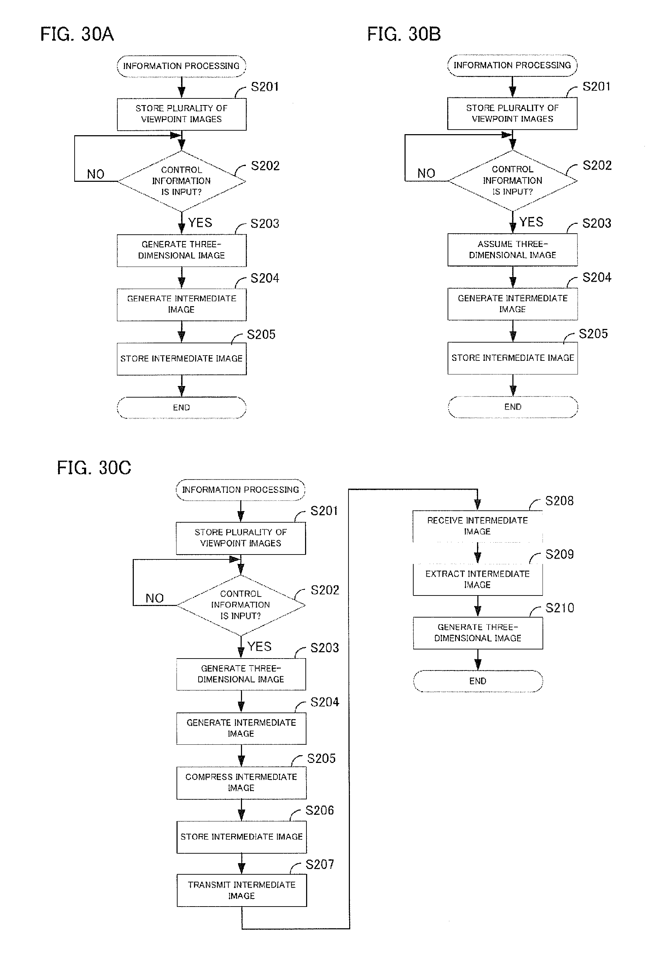

Figs. 30A to 30C are flowcharts showing the information processing carried out by the intermediate image generating device 31 of Fig. 29A.

In Fig. 30A, the central processing unit 33 equipped in the intermediate image generating device 31 first stores a plurality of viewpoint images input according to a user's operation (imaging of an object using cameras of a plurality of viewpoints from the first to Nth viewpoints, or drawing from a plurality of viewpoints from the first to Nth viewpoints using computer graphics) into the storage device 35 equipped in the intermediate image generating device 31 (step S201).

Next, the central processing unit 33 determines whether there is input of control information or not (Step S202). The control information refers to a scanning method, such as NTSC and PAL, a transmission method, such as interlaced and progressive, the number of viewpoints, a resolution, a pixel arrangement method, and the like. The control information is input using a keyboard, a mouse and the like further equipped in the intermediate image generating device 31 by a user's operation. In this way, the format is determined.

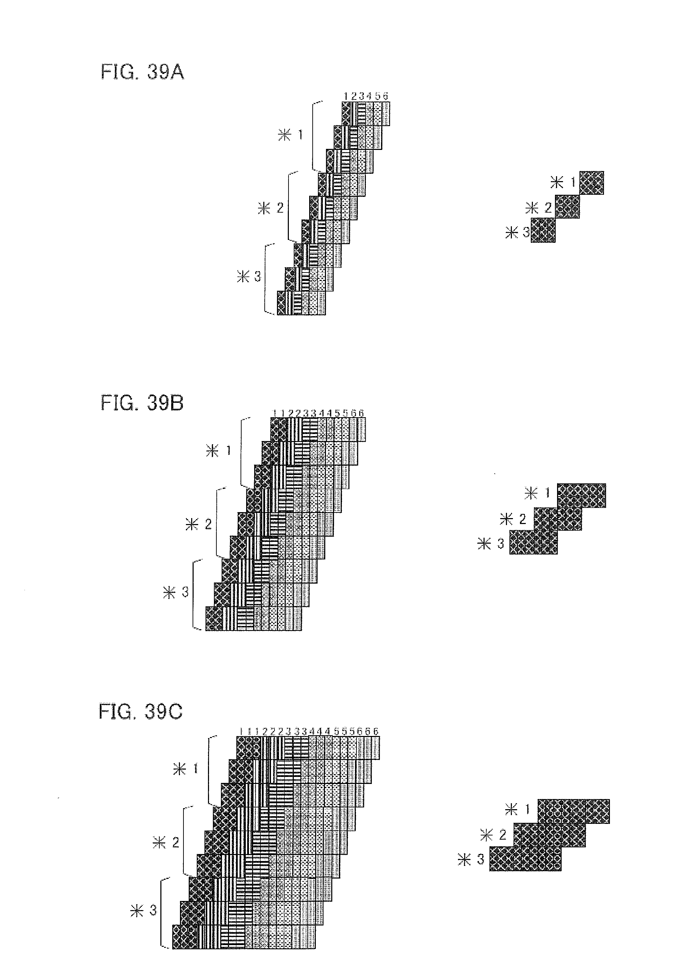

If there is input of control information as the result of determination at step S202, the central processing unit 33 generates a three-dimensional image based on the control information (step S203). Here, a three-dimensional image refers to an image having subpixel arrangement that can be three-dimensionally viewed and finally presented to users. In the case of a naked-eye three-dimensional viewing using a parallax barrier or the like, it is preferable to form a three-dimensional image by repeatedly arranging staircase patterned RGB pixel blocks in which staircase patterned RGB pixel units where subpixels are arrayed over three rows in a diagonal direction abutting with the corners are arrayed by connecting from the first viewpoint to Nth viewpoint in a horizontal direction. As a representative arrangement of subpixels constituting a staircase patterned RGB pixel unit, for example, those shown in Figs. 39A to 39C may be considered. Generating of a three-dimensional image based on the control information is, for example, when the resolution of a display on which a three-dimensional image is to be displayed is 1980 x 1080, a three-dimensional image having a resolution appropriate to output, that is, a three-dimensional image having a resolution of 1980 x 1080 is generated. It should be noted that generation of a three-dimensional image performed at step S203 is described later.

Next, the central processing unit 33 generates a plurality of intermediate images from the generated three-dimensional images (step S204). The intermediate image is an image used for generating a three-dimensional image, and, in respective plurality of intermediate images, staircase patterned RGB pixel units in which subpixels constituting the staircase patterned RGB pixel units are arrayed in a horizontal direction in the order from R, G, to B are arranged collectively for respective plurality of viewpoints. In this invention, a three-dimensional image is generated or assumed in advance from a plurality of viewpoint images imaged or drawn from a plurality of viewpoints and intermediate images are generated based on the three-dimensional image. Generation of intermediate images performed at step S204 is elaborated similarly to step S203.

Next, the central processing unit 33 stores the intermediate images generated at step S204 in the storage device 35 (Step S205).

This processing ends when the intermediate image is stored at step S205.

After the processing ends, step S203 may be repeated again. For example, in a case in which three-dimensional images and intermediate images are repeatedly generated based on the same control information (when viewpoint images are input into the intermediate image generating device one after another), the control information does not have to be input each time, which enhances usability. In this case, to cause the intermediate image generating device 31 to recognize repeated generation of three-dimensional images and intermediate images, mode change may be performed by a specific motion on keyboard or the like in order to associate the mode to a processing of repeated generation of three-dimensional images and intermediate images.

It should be noted that, as illustrated in Fig. 30B, the following processing may be performed at step S204 by assuming a three-dimensional image without actually generating the three-dimensional image.

Fig. 30C is a flowchart of the information processing performed by the three-dimensional image generating system of Fig. 29B.

As the basic structure shown in Fig. 30C is the same as the processing up to S204 of Fig. 30A, overlapping description is omitted for the same structural components and the following describes only different part.

The first information processing device 41 and the second information processing device 47 are information processing devices that further comprise a compression device 43 and a transmitting device 45, an extracting device 49 and a receiving device 51, respectively, in addition to the intermediate image generating device 31 used in Fig. 29A.

First, the central processing unit 33 of the first information processing device 41 compresses a plurality of intermediate images generated at step S204 using the compression device 43 (step S205).

Next, the plurality of intermediate images compressed at step S205 is stored into the storage device 35 (step S206).

Next, the central processing unit 33 transmits the plurality of compressed and stored intermediate images from the transmitting device 45 to the second information processing device 47 (step S207).

The central processing unit 33 of the second information processing device 47 receives the plurality of intermediate images transmitted from the first information processing device 41 at step S207 by the receiving device 51 (step S208).

Next, the central processing unit 33 extracts the plurality of received intermediate images by the extracting device 49 (step S209).

Next, the central processing unit 33 generates a three-dimensional image that is finally output to users from the plurality of extracted intermediate images (step S210). The three-dimensional image at step S210 is the same as the three-dimensional image at step S203. Generation of the intermediate images at step S210 is described below similarly to step S203 and step S204.

This processing ends when the three-dimensional image is generated at step S210.

After the processing ends, the generated intermediate images may be output to the three-dimensional image display device 65. Moreover, when intermediate images are repeatedly transmitted from the first information processing device 41, the processing from step S208 to step S210 may be continuously performed. According to a system illustrated in Fig. 30C, it becomes possible that, by continuously imaging by setting a plurality of cameras at some positions, intermediate images in which images of a plurality of viewpoints generated by the first information processing device 41 one after another are arranged in a pattern of tiles can be delivered in an existing format to the world, and the three-dimensional image can be viewed simultaneously and in real time to enormous users.

That is, by mounting an expensive graphic board, high speed CPU and the like on the first information processing device 41 in order to process generation of a plurality of intermediate images in real time, and mounting relatively low speed CPU on a plurality of second information processing devices 47 used by users, it is possible to realize an unprecedented three-dimensional image viewing environment in an existing format, utilizing the characteristics of the plurality of intermediate images from which three-dimensional images can be generated only by changing the pixel arrangement. In other words, compressible intermediate images can be generated with a minimum resolution required for making the total of the number of pixels constituting images for respective viewpoints the same as the number of pixels of the three-dimensional images, and three-dimensional images that can be three-dimensionally viewed only by changing arrangements (mapping) of subpixels constituting such intermediate images can be generated without using high speed special computers.

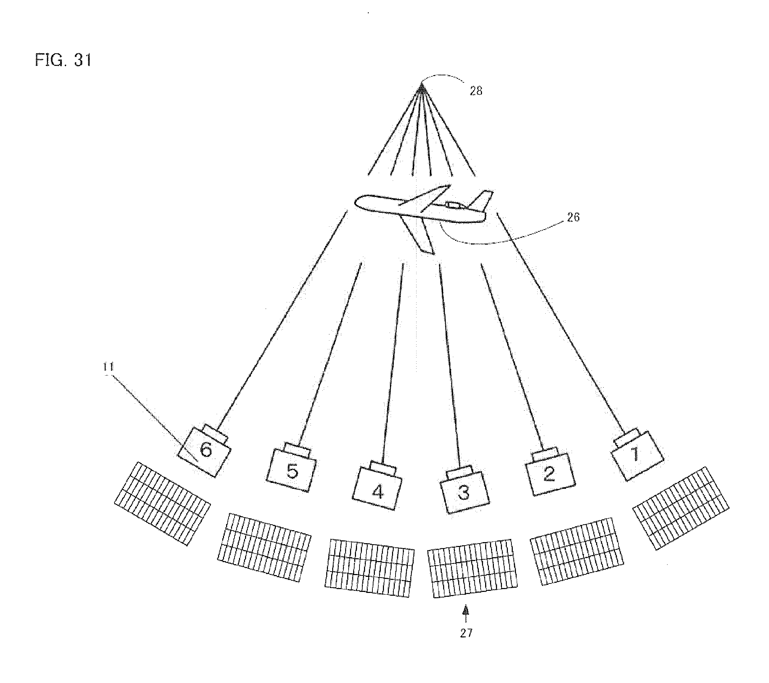

An embodiment of a method of generating a plurality of intermediate images according to the invention is described with reference to Figs. 31 to 34.

Fig. 31 shows an example of imaging a certain object 26 from a plurality of viewpoints by cameras 11, and generating viewpoint images 27 for respective viewpoints. As a focus point 28 is imaged using cameras 11 from six viewpoints, six viewpoint images 27 can be obtained. It should be noted that the resolution of the viewpoint images at this point is arbitrary. Also, the cameras 11 may be arranged on the level and optical axes of cameras 11 may be directed to the focus point 28. Further, respective cameras 11 may be arranged on the level and optical axes of the cameras 11 may be arranged in parallel by arbitrary setting parallax to realize a three-dimensional view using a parallel method.

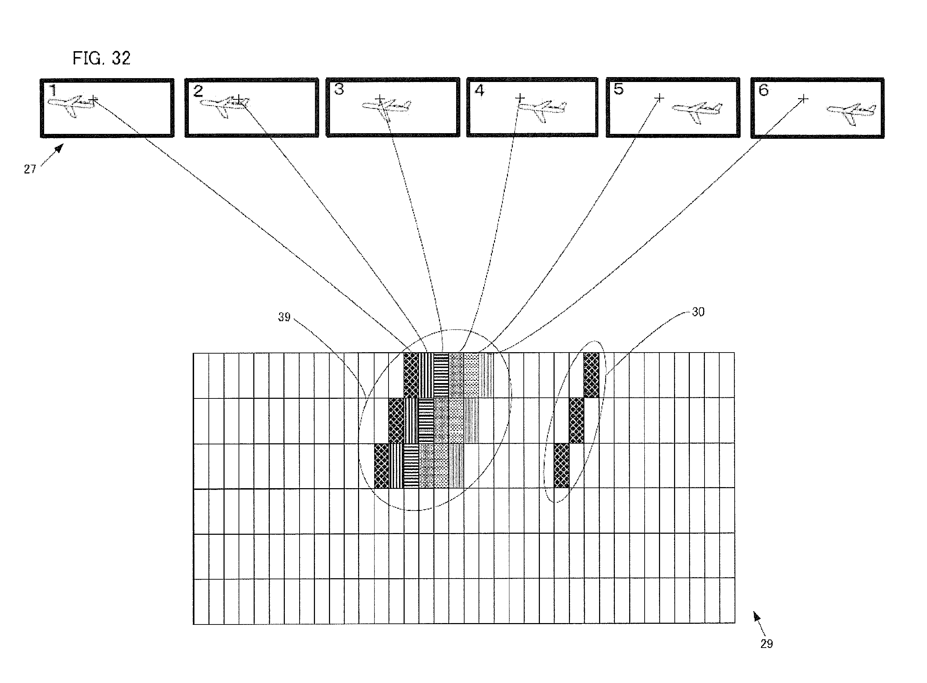

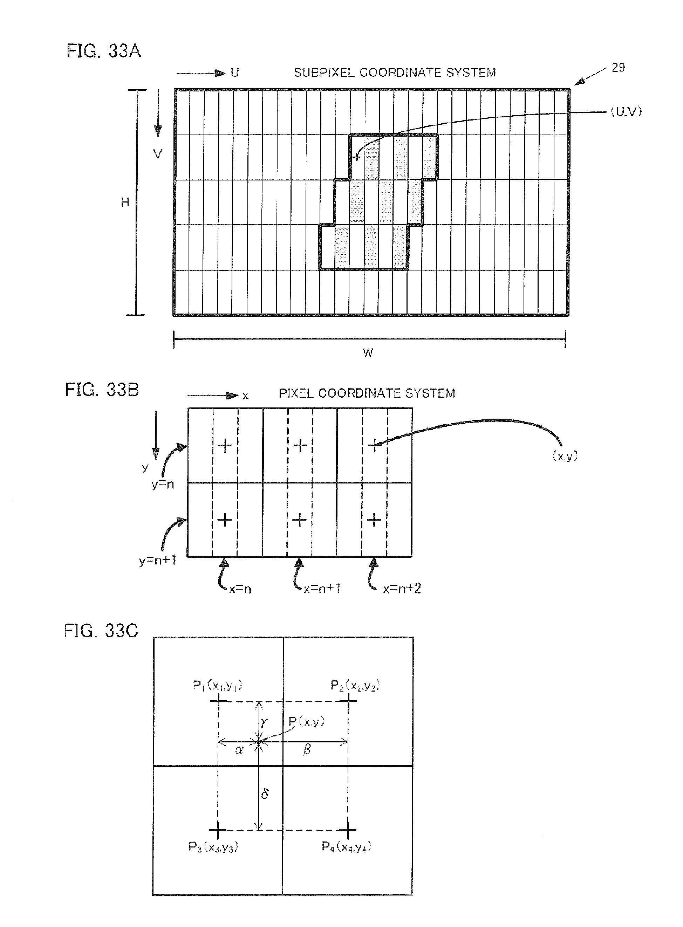

Fig. 32 shows an example of generating a three-dimensional image 29 having a subpixel arrangement to finally be output on the display from the plurality of viewpoint images 27 imaged in Fig. 31. Figs. 33A to 33C show an example of calculating R, G, B values of a staircase patterned RGB pixel unit 30 by interpolating from R, G, B values of subpixels constituting at least one pixel unit arranged around the corresponding position.

The following elaborates generation of a three-dimensional image performed at step S203 of Figs. 30A to 30C with reference to Figs. 33A to 33C.

When generating a three-dimensional image 29, the above-described central processing unit 33 determines the subpixel arrangement of the three-dimensional image 29 according to the resolution of the display that finally outputs images input at step S202 of Figs. 30A to 30C. For the subpixel arrangement of the three-dimensional image, for example, those illustrated in Figs. 39A to 39c are used. In this illustration, when subpixels form a vertically long rectangle with 1:3 ratio, there is assumed a three-dimensional image 29 having a subpixel arrangement in which three subpixels that allow most appropriate three-dimensional viewing are diagonally arrayed over three rows and one column by abutting at the corners.

Next, staircase patterned RGB pixel blocks according to the number of viewpoints as shown in the example of Fig. 33A are assumed. The staircase patterned RGB pixel block refers to a block in which staircase patterned RGB pixel units where subpixels are diagonally arrayed over three rows by abutting at corners are connected and arrayed from the first viewpoint to Nth viewpoint in a horizontal direction. In the example of Fig. 33A, as the object 26 is imaged from six viewpoints as in Fig. 31, a collection of pixels constituted by 18 subpixels is defined as a staircase patterned RGB pixel block.

Next, a three-dimensional image 29 is configured by repeatedly arranging staircase patterned RGB pixel blocks, and respective R, G, B values of subpixels constituting staircase patterned RGB pixel units are obtained. It is preferable to obtain R, G, B values based on any one of staircase patterned RGB pixel units in the staircase patterned RGB pixel block, and R, G, B values are obtained from R, G, B values of subpixels arranged at the coordinate values on a viewpoint image corresponding to the coordinate values on the three-dimensional image 7 formed by subpixels constituting the staircase patterned RGB pixel units. As illustrated in Fig. 33A, the coordinate values on a three-dimensional image 29 are in the subpixel coordinate system with a horizontal axis U and a vertical axis V of the three-dimensional image 29, and the subpixels arranged on the top line of the first viewpoint, which is a criteria in this embodiment, can be expressed as (U, V) as shown in Fig. 33A.

Next, the corresponding coordinate values of the viewpoint image imaged from the first viewpoint.

The pixel values on the viewpoint image are in a pixel coordinate system, with a horizontal axis x and vertical axis y, and the coordinate values of the pixels on the viewpoint image of the first viewpoint, which is a criteria in this embodiment, can be expressed as (x, y) as illustrated.

Generally, the number of subpixels constituting the three-dimensional image and the number of subpixels constituting a plurality of viewpoint images are different, and a subpixel coordinate system is used on the three-dimensional image and a pixel coordinate system is used on the viewpoint image, as the result, a predetermined conversion formula is required.

Then, in a case in which the total number of subpixels constituting a three-dimensional image in a horizontal direction is W, the total number in a vertical direction is H, the total number of pixels constituting a viewpoint image from the first viewpoint in a horizontal direction is a, and the total number of pixels in a vertical direction is b, conversion from the subpixel coordinate system to the pixel coordinate system can be obtained by the following formula:

$$\left[ x = \frac{U}{W} \times a, y = \frac{V}{H} \times b \right]$$

By expressing the coordinate values on the three-dimensional image in a subpixel coordinate system, R, G, B values can be calculated for each subpixel unit. In this way, a more precise three-dimensional image can be generated than calculating R, G, B values for each pixel unit.

Here, a and b can be preferably set so that W:H = a:b becomes true, which, of course, does not apply when a viewpoint image is desired to be displayed as large as possible even though the viewpoint image is deformed.

However, as shown in Fig. 33C, as only the center point of each pixel is defined in the pixel coordinate system, for example, if (x, y) is at a position as shown in Fig. 33C, R, G, B values of subpixels on the three-dimensional image cannot be immediately calculated. Therefore, the values are calculated by interpolating from the pixel units arranged around the pixel to which the (x, y) belongs.

Firstly, if $\alpha$ = x - x1, $\beta$ = x2 - x, $\gamma$ = y - y1, $\delta$ = y3 - y, and R, G, B values of P1 to P4 that are the central points of the pixels of the viewpoint image are C1 to C4 respectively, R, G, B values of P is expressed by linear interpolation by the following formula:

$$C = \frac{\gamma\left(\dfrac{\beta C1 + \alpha C2}{\alpha + \beta}\right) + \delta\left(\dfrac{\beta C3 + \alpha C4}{\alpha + \beta}\right)}{\gamma + \delta}$$

Here, R, G, B values of only any one of R, G, B indicated by subpixels of the subject three-dimensional image may be calculated. It should be noted that if $\alpha$ + $\beta$ = $\gamma$ + $\delta$ = 1, the following formula can be obtained:

$$C = \gamma(\beta C1 + \alpha C2) + \delta(\beta C3 + \alpha C4)$$

Next, R, G, B values of other subpixels constituting the same staircase patterned RGB pixel unit are obtained similarly by interpolating from neighborhood pixel units. It should be noted that there are a variety of interpolating methods and any interpolating method can be used as long as the interpolating method is appropriate.

Next, R, G, B values of subpixels constituting staircase patterned RGB pixel units other than the criterial staircase patterned RGB pixel unit of the first viewpoint are calculated. In this case, it is preferable to calculate the R, G, B values with respect to the coordinate values of subpixels constituting the criterial staircase patterned RGB pixel unit. That is, when generating a three-dimensional image of six viewpoints using a parallax barrier, as corresponding images of a plurality of viewpoints should be seen through the same slit or hole by a subject person of image presentation, R, G, B values are calculated from pixels of other viewpoint images at the same position as the coordinate values on the viewpoint image corresponding to the coordinate values of subpixels constituting the criterial staircase patterned RGB pixel unit. Correspondences between a plurality of viewpoint images and a three-dimensional image are as shown in the example of Fig. 32.

As described above, R, G, B values of subpixels constituting a three-dimensional image are obtained by interpolation, and the three-dimensional image is generated or assumed. When assuming a three-dimensional image, intermediate images are directly generated (step S204) without generating a three-dimensional image from a plurality of viewpoint images, it is necessary to calculate R, G, B values by interpolation and to calculate parallel patterned RGB pixel units of a plurality of intermediate images by rearranging subpixels constituting the staircase patterned RGB pixel units of the three-dimensional image obtained by the interpolation.

In this way, by calculating R, G, B values of other subpixels by setting any one of the subpixels constituting a staircase patterned RGB pixel unit as criteria, a sharp and realistic three-dimensional image can be expressed. Alternatively, if R, G, B values of all subpixels are calculated without defining a representative point, a three-dimensional image that realizes smooth viewpoint transition can be obtained. These may be changed as necessary according to the situation and purpose of presenting the three-dimensional image.

Next, generation of intermediate images performed at step S204 is elaborated.

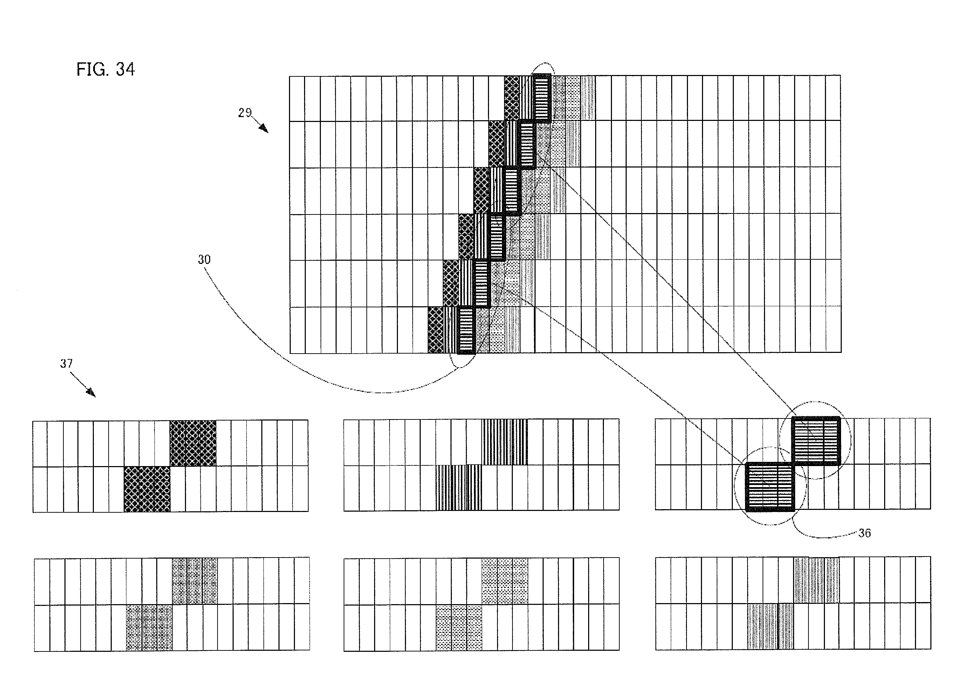

Fig. 34 is a diagram showing an example of generating a plurality of intermediate images from a three-dimensional image.

In this example, six intermediate images 37 are generated by collectively arranging parallel patterned RGB pixel units 36, in which subpixels constituting the staircase patterned RGB pixel units 30 of the three-dimensional image generated in Fig. 32 are horizontally arrayed in the order of R, G to B, for respective plurality of viewpoints.

In the parallel patterned RGB pixel unit 36, subpixels to be viewed through slits arranged in a staircase pattern or holes arranged in a staircase pattern are collectively arrayed as shown in Fig. 34. This is performed for all staircase patterned RGB pixel units 30. It should be noted that generation of a plurality of intermediate images 37 from the three-dimensional image 29 is preferably performed using an intermediate image generating table.

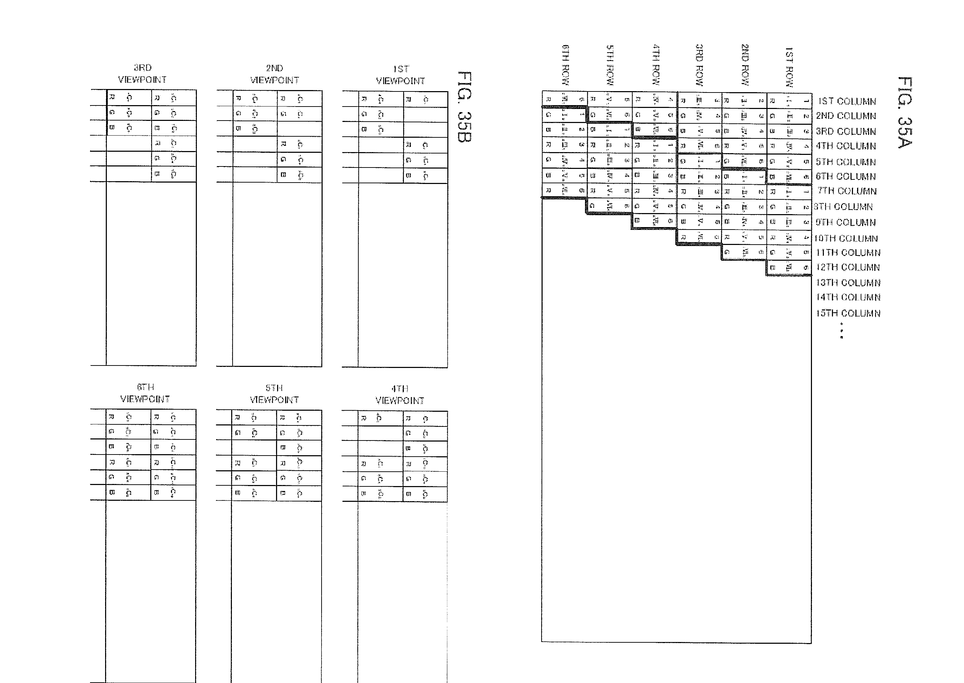

Figs. 35A and 35B are diagrams illustrating an intermediate image generating table.

Fig. 35A is a table indicating: viewpoint images that the subpixels on a three-dimensional image express; R, G, B that the subpixels on the three-dimensional image express; and, coordinate values in the subpixel coordinate system on the three-dimensional image. For example, the subpixel at the upper left corner is located at the first row and the first column counted from the upper left edge, the subpixel is (1I1).

Fig. 35B indicates correspondences of subpixels constituting intermediate images and subpixels arranged at certain positions in the subpixel coordinate system on a three-dimensional image. For example, the subpixel at the upper left corner of the first viewpoint corresponds to 1, (1I1), R subpixel located at the upper left corner of the three-dimensional image, and the subpixel is arranged on the intermediate image. Similarly, the subpixel at the upper left corner of the intermediate image of the second viewpoint corresponds to a subpixel located at a position (2C1) on the three-dimensional image, and the subpixel arranged at the first column of the second row on the three-dimensional image is arranged on the intermediate image. It should be noted that, as the staircase patterned RGB pixel unit having these subpixels does not have a subpixel having B value, the parallel patterned RGB pixel unit constituting the intermediate image arranged at the upper left corner of the second viewpoint, similarly, does not have a subpixel having B value.

In this manner, the parallel patterned RGB pixel units are configured by horizontally rearranging the staircase patterned RGB pixel units of the first to sixth viewpoints, and, when rearrangement of the staircase patterned RGB pixel block located at the upper left corner ends, subpixels constituting the next staircase patterned RGB pixel block are subsequently rearranged as shown in Figs. 35A and 35B.

In this way, by preparing in advance an intermediate image generating table that relates the positions of subpixels constituting the staircase patterned RGB pixel units of a three-dimensional image to the positions of subpixels constituting parallel patterned RGB pixel units of intermediate images of a plurality of respective viewpoints, intermediate images of respective viewpoints can be generated only by changing the arrangement of subpixels constituting the three-dimensional image without requiring an arithmetic processing for complicated interpolation.

It should be noted that the intermediate image generating table is preferably stored in the storage device of the intermediate image generating device. In this way, when generating a three-dimensional image using the intermediate image generating device, the table can be used as a three-dimensional image generating table without creating the table again.

Fig. 36 is a diagram showing an example of especially preferable arrangement of image frames of intermediate images in an embodiment of the invention. In the image frame 38, intermediate images 37 for respective viewpoints are arranged, that is, for example, the first viewpoint image is arranged at the first row of the first column, the second viewpoint image is arranged at the second row of the first column, the third viewpoint image is arranged at the third row of the first column, the fourth viewpoint image is arranged at the first row of the second column, the fifth viewpoint image is arranged at the second row of the second column, the sixth viewpoint image is arranged at the third row of the second column, in a pattern of tiles.

In this way, the total number of subpixels constituting the three-dimensional image and the total number of subpixels on an image frame where intermediate images are arranged in a pattern of tiles become the same both in vertical and horizontal directions. As there is no ineffectual pixel and pixels for respective viewpoints are collectively arranged, interference between different viewpoints does not occur, and irreversible compression can be used. Thus, as the resolutions and aspect ratios of an image frame where intermediate images are arranged in a pattern of tiles and a naked eye three-dimensional display (a three-dimensional image) become the same, the three-dimensional image generating device (a converter) can easily generate a three-dimensional image from intermediate images output or transmitted in a general video image signal standard, such as RGB, VDI, and HMVI, by a general video image reproduction device or video image distribution system, such as Blu-ray and STB. Therefore, a parallax barrier can be attached on an existing display, or, instead of having a naked eye three-dimensional display, the video image conversion device 1 can be equipped inbetween an existing general image output device and an image distribution system, allowing provision of a practical three-dimensional image display system with very low cost.

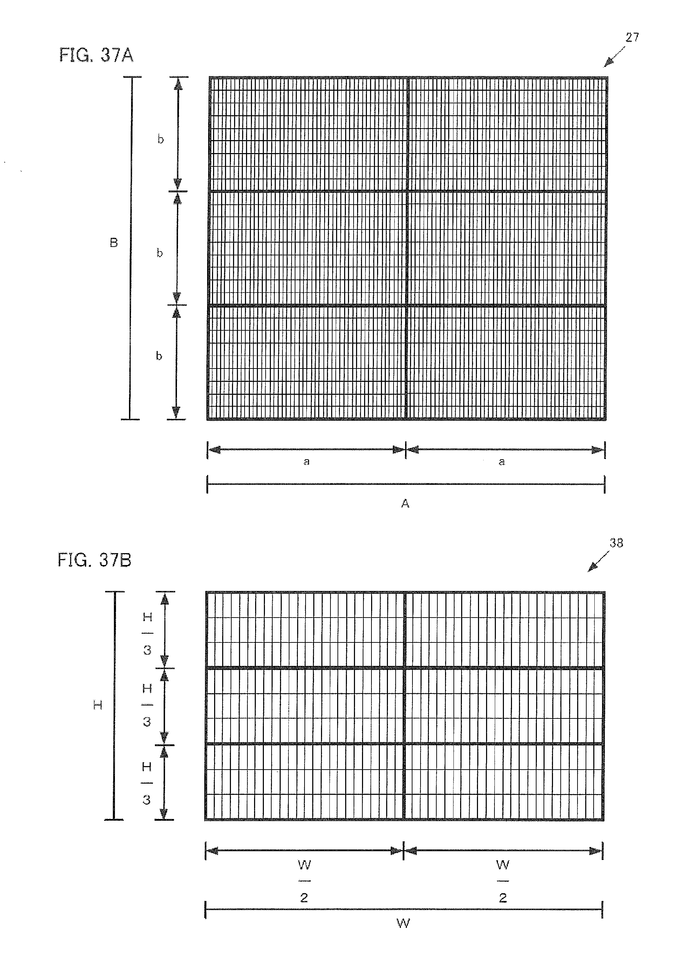

Figs. 37A and 37B are diagrams showing an example of arranging a plurality of viewpoint images 27 as is into an image frame in a pattern of tiles, and also comparing with the above described image frame of the intermediate images.

If the resolution of a display that finally output is 16:9, the horizontal to vertical ratio of a viewpoint image for one viewpoint in Fig. 37A also becomes 16:9, and the ratio becomes 32:27 for the whole image frame.

On the other hand, if a plurality of intermediate images are arranged in a tiled image frame 38 (Fig. 37B), as subpixels over three rows constituting a staircase patterned RGB pixel unit are horizontally arranged to configure parallel patterned RGB pixel unit in a three-dimensional image, the total number of pixels in a vertical direction becomes one third. Further, if the number of viewpoints is six, the total number of pixels in a horizontal direction becomes as follows:

$$\frac{W}{6} \times 3 = \frac{W}{2}$$

Suppose height and width of the three-dimensional image are respectively H, W, when an intermediate image is arranged in an image frame having tiles of three rows two columns as shown in the example of Fig. 36, the height becomes as follows:

$$\frac{1}{3}H + \frac{1}{3}H + \frac{1}{3}H = H$$

and the width becomes as follows:

$$\frac{1}{2}W + \frac{1}{2}W = W$$

As the result, an image frame having the same resolution as the three-dimensional image both in vertical and horizontal directions can be generated. If a plurality of viewpoint images are arranged in the unchanged tiled image frame in a manner so that the horizontal to vertical ratio and the resolution thereof become the same as those of the three-dimensional image, it is required to add margins on both sides of the images of respective viewpoints to make the vertical to horizontal ratio the same, and further make the resolutions of the images the same when the resolutions of the images of respective viewpoints are decreased and arranged in a tiled pattern. As the result, the viewpoint images for generating the three-dimensional image become low resolutions, which significantly degrades the image quality of the three-dimensional image. On the other hand, in this invention, as intermediate images are generated from respective high quality viewpoint images, the resolution required for generating a three-dimensional image can be perfectly retained.

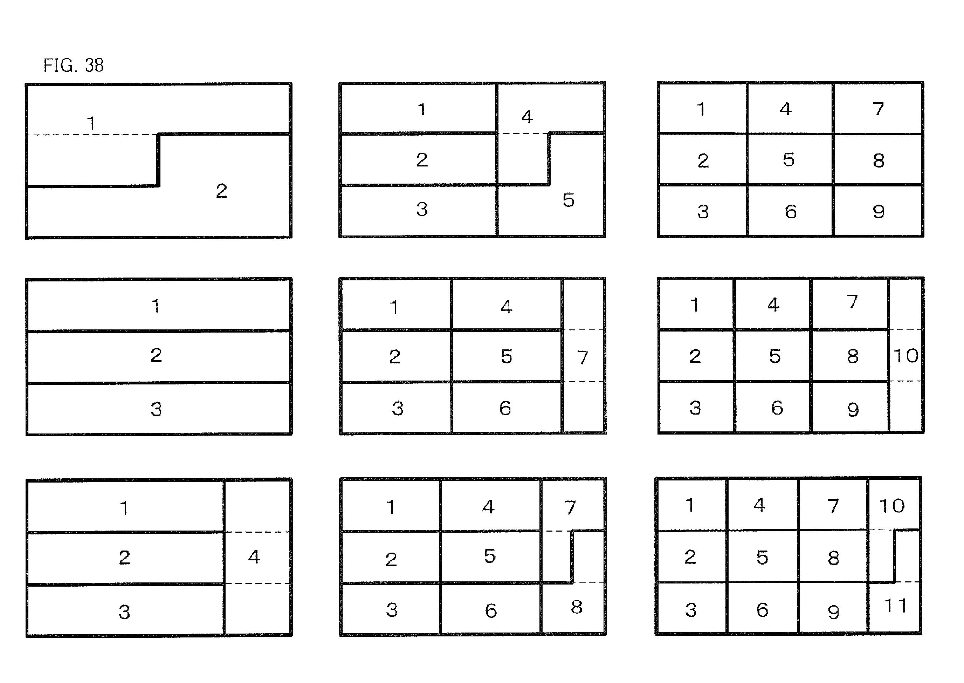

Fig. 38 is a diagram showing an example of image frames comprised of a plurality of intermediate images. Fig. 38 shows image frames when a three-dimensional image is generated with two viewpoints to five viewpoints and with seven viewpoints to eleven viewpoints, respectively. If pixels of respective viewpoints are arranged in a pattern of tiles in the frame, an image file of the same aspect ratio as the one of a three-dimensional image can be created.

That is, if a three-dimensional image is configured by two viewpoints, two third of the intermediate image of the first viewpoint is arranged in the tile in the first row, one third of the intermediate image of the first viewpoint is arranged in the first tile of the second row, one third of the intermediate image of the second viewpoint connected with the one third of the intermediate image of the first viewpoint is arranged in the second tile of the second row, two third of the intermediate image of the second viewpoint is arranged in a tile of the third row. If a three-dimensional image is configured by three viewpoints, an intermediate image of each viewpoint is arranged in a tile of each row. If a three-dimensional image is configured by four to six viewpoints, intermediate images of the first to third viewpoints are arranged in the first tile of each row, and intermediate images of the rest of viewpoints are arranged in tiles connected with the intermediate images of the first to third viewpoints and arranged in the first to third rows. If a three dimensional image is configured by seven to nine viewpoints, intermediate images of the first to third viewpoints are arranged in the first tiles of respective rows, intermediate images of the fourth to sixth viewpoints are arranged in tiles of the three rows abutting the intermediate images of the first to third viewpoints, intermediate images of the rest of the viewpoints are arranged in the tiles of the three rows abutting the intermediate images of the fourth to sixth viewpoints. Similarly, even when a three-dimensional image is configured by 10 or more viewpoints, part of or whole intermediate images are sequentially arranged in tiles of respective rows starting from the first viewpoint.

In this way, an image frame having the same resolution as the three-dimensional image both in vertical and horizontal directions can be generated.

Figs. 39A to 39C are diagrams showing arrangement examples of staircase patterned RGB pixel units.

Fig. 39A is a diagram showing an example of staircase patterned RGB pixel unit in which subpixels constituting pixel units of viewpoint images from the first viewpoint to sixth viewpoint are diagonally arrayed to shape a staircase pattern by abutting at the corners, and the staircase patterned RGB pixel unit is configured by three subpixels over three rows and one column. If a three-dimensional image having the staircase patterned RGB pixel units is converted into intermediate images, subpixels constituting the staircase patterned RGB pixel units are arrayed in a horizontal direction to form a parallel patterned RGB pixel units. Next, for a staircase patterned RGB pixel unit of the same viewpoint arrayed in a staircase pattern by abutting the above staircase patterned RGB pixel unit at the corners, as shown in Fig. 39A, the subpixels are arrayed in a horizontal direction to form a parallel patterned RGB pixel unit, and the parallel patterned RGB pixel units are by diagonally arrayed in a staircase pattern by abutting at corners to form an intermediate image.

Fig. 39B is a diagram showing an example of staircase patterned RGB pixel units each of which comprises six subpixels over three rows and two columns. When converting a three-dimensional image having the staircase patterned RGB pixel units into intermediate images, a parallel patterned RGB pixel unit is firstly configured by arraying a collection of the subpixels of the first column constituting a staircase patterned RGB pixel unit in a horizontal direction, and then, arraying a collection of the subpixels of the second column thereof by horizontally abutting the parallel patterned RGB pixel unit. Next, for a staircase patterned RGB pixel unit of the same viewpoint arrayed in a staircase pattern by abutting the above staircase patterned RGB pixel unit at the corners, as shown in Fig. 38B, a collection of the subpixels of the first column are arrayed in a horizontal direction to form a staircase patterned RGB pixel unit, and a collection of the subpixels of the second column thereof are arrayed by further abutting the parallel patterned RGB pixel unit in a horizontal direction.

Fig. 39C is a diagram showing an example of staircase patterned RGB pixel units each of which comprises nine subpixels over three rows and three columns. When converting a three-dimensional image having the staircase patterned RGB pixel units into intermediate images, similarly, a parallel patterned RGB pixel unit is firstly configured by arraying a collection of the subpixels of the first column constituting a staircase patterned RGB pixel unit in a horizontal direction, then, arraying a collection of the subpixels constituting the staircase patterned RGB pixel unit in the second column by horizontally abutting the parallel patterned RGB pixel unit, and further, arraying a collection of the subpixels constituting the staircase patterned RGB pixel unit in the third column by horizontally abutting the parallel patterned RGB pixel unit in the second column.

In the arrangement examples of the staircase patterned RGB pixel units shown in Figs. 39A to 39C, it is preferable to obtain R, G, B values from a plurality of viewpoint images for each subpixel as shown in Figs. 33A to 33C. In this way, degradation of the resolution (for example, the horizontal resolution of Fig. 39B becomes half the one of Fig. 39A) caused by calculating and obtaining R, G, B values for each pixel can be prevented, and clear three-dimensional images can be provided to users. Generally, while the subpixel is often a vertically long rectangle with a ratio of 1:3, the shape of the subpixel may be a variety of shapes including a circle, a dogleg, V shape, and 90-degree rotated W shape (refer to the illustration of Fig. 51) and, depending on the shape, the three-dimensional image may not be viewed properly with the staircase patterned RGB pixel units in which three subpixels are arrayed in a row. In such a case, it is preferable to prepare a mask in which the width of slit or holes of a parallax barrier through which the three-dimensional image is viewed and the arrangement interval thereof are widened, and, accordingly, create staircase patterned RGB pixel units in which three subpixels are arrayed over two rows as in Fig. 39B or three rows as in Fig. 39C to appropriately three-dimensionally display.

Next, generation of a three-dimensional image to be finally output from a plurality of intermediate images for respective viewpoints performed at step S210 of Figs. 30A to 30C is described.

Generation of a three-dimensional image is performed by changing the arrangement of the subpixels constituting the parallel patterned RGB pixel units of intermediate images transmitted from an optical disc such as Blu-ray disc (registered trademark), a server, or the above-described first information processing device into an arrangement for three-dimensional viewing. That is, the subpixels constituting the parallel patterned RGB pixel units are arrayed back into a staircase pattern to configure staircase patterned RGB pixel units. In such a case, it is preferable to use a three-dimensional image generating table that relates the position of those subpixels. As the intermediate image generating table shown in Figs. 35A and 35B relates the positions of subpixels constituting the parallel patterned RGB pixel units and the positions of subpixels constituting the staircase patterned RGB pixel units, the table can be used as a three-dimensional image generating table.

The staircase patterned RGB pixel units are generated again according to the reverse order of the arrangement rule indicated in the intermediate image generating table to generate a three-dimensional image.

Parameters relating to selection, etc.

It should be noted that upon selection of a blending method, the video image conversion device 1 of the invention selects a blending method for the equipped parallax barrier by referring to a previously prepared and distributed table in which combinations of parallax barriers and blending methods are described.
When producing a parallax barrier for a specific three-dimensional video image display device 3, the parallax barrier is produced using parameters of the resolution of the three-dimensional video image display device 3, the width of pixels, the number of viewpoints in the multiple viewpoints.

Transmitting unit

The transmitting unit of the video image conversion device 16 has a function of transmitting as video image signals video images which pixel arrangement is converted by conversion unit 15 to the three-dimensional video image display device 3.

As described above, according to the video image conversion device of the invention, low cost and practical three-dimensional video image display technique can be provided.
It should be noted that the invention is not limited to each embodiment described herein, and a variety of combinations are possible in the scope of the claims, and embodiments obtained by combining technical means disclosed in different embodiments as necessary are also in the technical scope of the invention.

Industrial Applicability

By converting video images of a plurality of viewpoints into a pixel arrangement corresponding to an existing video image output device and three-dimensional video image display device, the video image conversion device of the invention can three-dimensionally display most appropriately on the three-dimensional video image display device.

Description of Reference Numerals and Signs

1 VIDEO IMAGE CONVERSION DEVICE
2 VIDEO IMAGE OUTPUT DEVICE
3 VIDEO IMAGE DISPLAY DEVICE
4 VIDEO IMAGE CABLE
5 CONTROL CABLE
6 FIRST TABLE
7 REMOTE CONTROLLER
8 USB MEMORY
9 SECOND TABLE
10 THIRD TABLE
11 CAMERA
12 RECEIVING UNIT
13 STORAGE UNIT
14 CONVERSION CONTROL UNIT
15 CONVERSION UNIT
16 TRANSMITTING UNIT OF VIDEO IMAGE CONVERSON DEVICE
17 VIDEO IMAGE INFORMATION ANALYSIS UNIT
18 CONVERSION CONTROL INFORMATION STORING UNIT
19 VIDEO IMAGE ARRANGEMENT UNIT
20 TRANSMITTING UNIT OF VIDEO IMAGE OUTPUT DEVICE
21 PIXEL INFORMATION
22 PIXEL MATRIX
23 ORIGINAL VIDEO IMAGE FILE
24 PIXEL EMBEDDED VIDEO IMAGE FILE
26 OBJECT
27 VIEWPOINT IMAGE

28 FOCUS POINT
29 THREE-DIMENSIONAL IMAGE
30 STAIRCASE PATTERNED RGB PIXEL UNIT
31 INTERMEDIATE IMAGE GENERATING DEVICE
33 CENTRAL PROCESSING UNIT
35 STORAGE DEVICE
36 PARALLEL PATTERNED RGB PIXEL UNIT
37 INTERMEDIATE IMAGE
38 IMAGE FRAME
41 FIRST INFORMATION PROCESSING DEVICE
43 COMPRESSION DEVICE
45 TRANSMITTING DEVICE
47 SECOND INFORMATION PROCESSING DEVICE
49 EXTRACTING DEVICE
51 RECEIVING DEVICE
61 THREE-DIMENSIONAL IMAGE GENERATING DEVICE
65 THREE-DIMENSIONAL IMAGE DISPLAY DEVICE

**Claims**

1. A video image conversion device comprising:

   a receiving unit that receives a video image of a plurality of viewpoints as a video image signal from a video image output device;
   a storage unit that stores, frame by frame, the video image of the plurality of viewpoints received by the receiving unit into a storage element;
   a conversion control unit that controls an instruction for converting a pixel arrangement of the video image of the plurality of viewpoints stored in the storage element by the storage unit into a pixel arrangement for three-dimensional video image display based on a preset conversion control information;
   a conversion unit that immediately converts the pixel arrangement based on an instruction from the conversion control unit; and
   a transmitting unit that transmits a video image which pixel arrangement is converted by the conversion unit as a video image signal to a three-dimensional video image display device.

2. The video image conversion device according to Claim 1 wherein:

   the video image of the plurality of viewpoints is a plurality of intermediate images used for generating a three-dimensional image that is converted from images of a plurality of viewpoints captured and/or drawn from a first viewpoint to an Nth viewpoint;
   in order to generate the three-dimensional image by repeatedly arranging staircase-patterned RGB pixel blocks that are made by concatenatedly arraying stair-case patterned RGB pixel units from the first viewpoint to Nth viewpoint in a horizontal direction, wherein the staircase-patterned RGB pixel units are made by arraying subpixels in a diagonal direction over three rows in a manner in which the subpixels mutually contact at their corners, R values, G values, and B values of the subpixels constituting the stair-case patterned RGB pixel units are calculated by interpolating from R, G, B values of subpixels, in the images of the plurality of viewpoints, constituting at least one pixel unit arranged around a location corresponding to a location where the subpixels constituting the staircase-patterned RGB pixel units are arranged; and
   the intermediate images for respective plurality of viewpoints are generated by arranging parallel-patterned RGB pixel units that are made by arraying the subpixels constituting the staircase-patterned RGB pixel units in a horizontal direction in an order from R, G, to B in accordance with an arrangement rule that arranges the parallel-patterned RGB pixel units collectively for each of the plurality of viewpoints, in this way, a total number of the staircase-patterned RGB pixel units of the three-dimensional image is equalized to a total number of the parallel-patterned RGB pixel units of the plurality of intermediate images, or a total number of subpixels constituting the staircase-patterned RGB pixel units is equalized to a total number of subpixels constituting the parallel-patterned RGB pixel units.

3. The video image conversion device according to Claim 2, wherein:

the staircase-patterned RGB pixel units each has one subpixel column per row and comprises three of the subpixels having R value, G value, and B value; and
the parallel-patterned RGB pixel units each comprise the three subpixels by arraying three subpixel columns in a row in an order from R, G to B.

4. The video image conversion device according to Claim 2, wherein:

the staircase-patterned RGB pixel units each has two subpixel columns per row and each of the two columns comprises three of the subpixels having R value, G value, and B value; and
in the parallel-patterned RGB pixel units, three subpixels arrayed over three rows in a first column of the staircase-patterned RGB pixel units are arrayed over three columns in an order from R, G, to B, and, by horizontally abutting the array, three subpixels arrayed over three rows in a second column of the staircase-patterned RGB pixel units are arrayed over three columns in an order from R, G, to B.

5. The video image conversion device according to Claim 2, wherein:

the staircase-patterned RGB pixel units each has three subpixel columns per row and each column of the three columns comprises three of the subpixels having R value, G value, and B value; and
in the parallel-patterned RGB pixel units, three subpixels arrayed over three rows in a first column of the staircase-patterned RGB pixel units are arrayed in one row in an order from R, G, to B, three subpixels arrayed over three rows in a second column of the staircase-patterned RGB pixel units are arrayed in an order from R, G, to B by horizontally abutting said array, and, by further abutting the array, three subpixels in a third column of the staircase-patterned RGB pixel units are arrayed in an order from R, G, to B.

6. The video image conversion device according to Claim 2, wherein:

by arranging the plurality of intermediate images in a manner in which the intermediate images are vertically equally divided at least in three into first to third rows and arranged in a pattern of a plurality of tiles as an image frame,
the subpixels constituting the staircase-patterned RGB pixel units and the subpixels constituting the parallel-patterned RGB pixel units become a same number both in horizontal and vertical directions in the three-dimensional image and in the image frame where the plurality of intermediate images are arranged.

7. The video image conversion device according to Claim 6, wherein:

in a case in which the plurality of viewpoints are two viewpoints, two-third of the intermediate image of a first viewpoint are arranged in a tile of the first row, one-third of the intermediate image of the first viewpoint are arranged in a first tile of the second row, one-third of the intermediate image of a second viewpoint are arranged in a second tile of the second row abutting the one-third of the the intermediate image of the first viewpoint, two-third of the intermediate image of the second viewpoint are arranged in a tile of the third row;
in a case in which the plurality of viewpoints are three viewpoints, the intermediate image of each viewpoint is arranged in a tile of each row;
in a case in which the plurality of viewpoints are four to six viewpoints, the intermediate images of first to third viewpoints are arranged in first tiles of respective rows, the intermediate images of a rest of the viewpoints are arranged in tiles of first to third rows abutting the intermediate images of the first to third viewpoints;
in a case in which the plurality of viewpoints are seven to nine viewpoints, the intermediate images of first to third viewpoints are arranged in first tiles of respective rows, the intermediate images of fourth to sixth viewpoints are arranged in tiles of the first to third rows abutting the intermediate images of the first to third viewpoints, the intermediate images of a rest of the viewpoints are arranged in tiles of the first to third rows abutting the intermediate images of the fourth to sixth viewpoints; and
even in a case in which the plurality of viewpoints are ten viewpoints or more, part of or whole intermediate images are sequentially arranged from a first viewpoint in tiles of respective rows in a similar way.

8. The video image conversion device according to Claim 2, wherein the video image conversion device receives the video image of the plurality of viewpoints, as a video image signal, that is a video image formed by images in which the plurality of intermediate images are divided in a pattern of tiles and arranged within a frame.

9. The video image conversion device according to Claim 1, wherein the transmitting unit transmits a video image signal of a same standard as a video image signal received by the receiving unit from the video image output device to the three-dimensional video image display device.

10. The video image conversion device according to Claim 1, wherein:

the receiving unit receives a video image signal from the video image output device via an electric connection or a wireless communication; and
the transmitting unit transmits a video image signal to the three-dimensional video image display device via an electric connection or a wireless communication.

11. The video image conversion device according to Claim 1, wherein the receiving unit receives the video image of the plurality of viewpoints, as a video image signal, that is a video image formed by images in which images forming a video image for respective viewpoints are divided in a pattern of tiles and arranged within a frame.

12. The video image conversion device according to Claim 1, wherein the receiving unit receives the video image of the plurality of viewpoints, as a video image signal, that is a video image extracted from an irreversibly compressed video image by the video image output device.

13. The video image conversion device according to Claim 1, wherein the receiving unit receives the video image of the plurality of viewpoints, as a video image signal, that is a video image formed by arranging images forming a video image for respective viewpoints (k viewpoint video image) (kFt, t = 1 to 1) in an order of the viewpoint video image (k = 1 to n) for each time frame, and further arraying the images in a time direction (F't', t' = 1-n•1).

14. The video image conversion device according to Claim 1, wherein the receiving unit receives the video image of the plurality of viewpoints, as a video image signal, that is a video image formed by arranging image information on a same scanning line (Si, i = 1 to j) of images forming a video image for respective viewpoints (k viewpoint video image) in an order of the viewpoint video image (k = 1 to n) and arranging all of the image information on the same scanning line into one frame image (S'i', i = 1 to n•j).

15. The video image conversion device according to Claim 1, wherein:

the receiving unit further receives conversion control information stored in an external storage unit as a control signal via an electric connection or a wireless communication; and
if the receiving unit received the control signal, the conversion control unit controls an instruction for converting a pixel arrangement of the video image of the plurality of viewpoints stored in the storage element by the storage unit into a pixel arrangement for three-dimensional video image display based on the conversion control information stored in the external storage unit, instead of the preset conversion control information.

16. The video image conversion device according to Claim 1, wherein:

the receiving unit further receives a planar video image as a video image signal from the video image output device, and receives a control signal in addition to the video image signal;
the conversion control unit controls a determination whether a video image received by the receiving unit from the video image output device is the video image of the plurality of viewpoints, the planar video image, or a mixture video image of the video image of the plurality of viewpoints and the planar video image, based on the control signal, and controls an instruction for converting the video image of the plurality of viewpoints into a pixel arrangement for three-dimensional video image display only when the video image is determined as the video image of the plurality of viewpoints or the mixture video image of the video image of the plurality of viewpoints and the planar video image; and
the transmitting unit transmits the planar video image as a video image signal to the three-dimensional video image display device.

17. The video image conversion device according to Claim 16, wherein:

the video image conversion device further comprises a video image information analysis unit;
the receiving unit receives, instead of the control signal and the video image of the plurality of viewpoints, a video image in which a plurality pieces of pixel information defined as video image information are embedded according to a predetermined arrangement pattern at a leading frame of the video image of the plurality of viewpoints or a predetermined location in whole frames, as a video image signal;

the video image information analysis unit identifies the location where the pixel information is embedded based on the predetermined arrangement pattern, determines whether or not a header for verifying the video image information exists, and analyzes the video image information when the header exists;

the conversion control unit further controls a determination whether the video image is the video image of the plurality of viewpoints or the planar video image based on the existence of the header, and only when the video image is determined as the video image of the plurality of viewpoints, controls an instruction for converting the video image of the plurality of viewpoints into a pixel arrangement for three-dimensional video image display based on the video image information analyzed by the video image information analysis unit; and

the transmitting unit transmits a video image which pixel arrangement is converted by the conversion unit or a planar video image to the three-dimensional video image display device as a video image signal.

18. The video image conversion device according to Claim 17, wherein:

the receiving unit receives a mixture video image of the video image of the plurality of viewpoints and the planar video image as a video image signal;

the video image information analysis unit analyzes the video image information of whole frames of the mixture video image, and, only when a frame of the mixture video image is determined as the video image of the plurality of viewpoints, controls an instruction for converting the video image of the plurality of viewpoints into a pixel arrangement for three-dimensional video image display; and

the transmitting unit further transmits the planar video image to the three-dimensional video image display device as a video image signal.

19. The video image conversion device according to Claim 17, wherein based on the video image information analyzed by the video image information analysis unit, the conversion control unit recognizes and controls at least one of:

a scanning method of the video image of the plurality of viewpoints;

a resolution of the video image of the plurality of viewpoints;

a number of viewpoints of the video image of the plurality of viewpoints; and

a number of viewpoints of the three-dimensional video image display device,

and, controls an instruction for converting the video image of the plurality of viewpoints into a pixel arrangement for three-dimensional video image display, based on the scanning method, the resolution of the video image of the plurality of viewpoints, the number of viewpoints of the video image of the plurality of viewpoints, and the number of viewpoints of the three-dimensional video image display device, instead of the preset conversion control information.

20. The video image conversion device according to Claim 17, wherein the receiving unit receives a video image in which a plurality of pixel matrixes where a plurality pieces of pixel information defined as identical video image information are continuously arranged in X and Y directions are embedded based on a predetermined arrangement pattern, as a video image signal; and

the video image information analysis unit identifies locations where the pixel matrixes are embedded based on the predetermined arrangement pattern, and analyzes the video image information at predetermined positions of the pixel matrixes.

21. The video image conversion device according to Claim 20, wherein the video image information analysis unit analyzes video image information based on pixel information at a center position or an average value of plurality pieces of pixel information around the center position.

22. The video image conversion device according to Claim 20, wherein the receiving unit receives, as a video image signal, a video image in which the pixel matrixes are embedded along the top edge of the video image of the plurality of viewpoints.

23. The video image conversion device according to Claim 20, wherein the receiving unit receives, as a video image signal, a video image in which a plurality of pixel matrixes where, instead of the pixel information, pixels of intermediate value between pixels in a vicinity of the pixel matrixes and the pixel information or pixels obtained by interpolating by weighting with predetermined values both pixels in a vicinity of the pixel matrixes and the pixel information are arranged are embedded at a periphery of the pixel matrixes, instead of the pixel information, according to a predetermined arrangement pattern.

24. The video image conversion device according to any one of Claims 17 to 20, wherein
the receiving unit receives, as a video image signal, a video image in which video image information is defined only at predetermined digits of high-order bits of the pixel information; and
the video image information analysis unit refers only to the predetermined digits of high-order bits of the plurality pieces of pixel information to analyze the video information.

25. The video image conversion device according to Claim 1, wherein:

the receiving unit receives a control signal from the three-dimensional video image display device; and
based on the control signal, the conversion control unit recognizes and controls at least one of: a scanning method of the three-dimensional video image display device; a resolution of the three-dimensional video image display device; a number of viewpoints of the three-dimensional video image display device; and a pixel arrangement method of the three-dimensional video image display device, and, instead of the preset conversion control information, controls an instruction for converting the video image of the plurality of viewpoints into a pixel arrangement for three-dimensional video image display, based on the scanning method of the three-dimensional video image display device, the resolution of the three-dimensional video image display device, the number of the viewpoints of the three-dimensional video image display device, and the pixel arrangement conversion method.

26. The video image conversion device according to Claim 25, wherein
the pixel arrangement method is formed by repeating a combination of one or more pixels, and comprises: a number of rows constituting one pixel; a number of subpixels constituting the one pixel; a number of pixels connected in a combination of the pixels; and a number of subpixels perturbed by a connecting location of the pixels per pixel.

27. The video image conversion device according to Claim 1, wherein
the receiving unit receives,
from the three-dimensional video image display device on which monitor's front surface is attached, with a predetermined air gap, a parallax barrier formed of an invisible region and a transparent region where a plurality of slits are arranged or a plurality of holes are continuously arranged in a slit-like form from upside to downside with a predetermined inclination,
a size of subpixels constituting a pixel, an average inclination of the transparent region, a number of subpixels of the slit or the hole in a horizontal direction, which corresponds to an average width of the transparent region, a number of subpixels corresponding to an average distance between centers of the adjacent slits or adjacent holes, and a resolution of the display device, as a control signal; and
the conversion control unit selects, based on the control signal, a pixel arrangement conversion method that converts a video image of a plurality of viewpoints into a pixel arrangement with which the video image can be three-dimensionally displayed most efficiently, and controls an instruction for converting the video image with the pixel arrangement conversion method.

28. The video image conversion device according to any one of Claims 15 to 27, wherein
the video image conversion device further comprises conversion control information storing unit;
the receiving unit receives the control signal in which index information is additionally defined or a video image in which plurality pieces of pixel information in which index information is additionally defined are embedded according to a predetermined arrangement pattern, as a video image signal;
when the conversion control unit instructs the conversion unit to convert a pixel arrangement of the video image of the plurality of viewpoints based on the control signal or the video image information, the conversion control information storing unit stores the conversion instruction as new conversion control information by associating the conversion control information with the index information;
if the conversion control information storing unit stores conversion control information corresponding to the index information of the control signal or of the video image signal received by the receiving unit, the conversion control unit controls an instruction for converting a pixel arrangement of the video image of the plurality of viewpoints into a pixel arrangement for three-dimensional video image display based on the conversion control information stored in the conversion control information storing unit.

**29.** The video image conversion device according to Claim 28 wherein:

the receiving unit further receives an input signal which index information is defined by an external input unit; and when the conversion control information storing unit stores conversion control information corresponding to the index information of the input signal received by the receiving unit, the conversion control unit controls an instruction for converting a pixel arrangement of the video image of the plurality of viewpoints into a pixel arrangement for three-dimensional video image display based on the conversion control information stored in the conversion control information storing unit, instead of the control signal or the video image signal.

**30.** A video image output device comprising:

a plurality of imaging units that image video images for respective viewpoints;
a video image arrangement unit that generates a plurality of intermediate images according to Claim 2 from a plurality of viewpoint images imaged by the plurality of imaging units from a plurality of viewpoints from a first viewpoint to an Nth viewpoint, and forms a video image by immediately arranging the plurality of intermediate images into images divided and arranged in a pattern of tiles within a frame; and
a transmitting unit that transmits the video image as a video image signal to the video image conversion device that converts the pixel arrangement configuring the video image.

**31.** A video image conversion system comprising:

a video image output unit that transmits a video image of a plurality of viewpoints as a video image signal;
a receiving unit that receives the video image of the plurality of viewpoints as a video image signal from the video image output unit;
a storage unit that stores, frame by frame, the video image received by the receiving unit into a storage element;
a conversion control unit that controls an instruction for converting a pixel arrangement of the video image stored in the storage unit into a predetermined pixel arrangement for three-dimensional video image display;
a conversion unit that immediately converts the pixel arrangement based on an instruction from the conversion control unit;
a transmitting unit that transmits a video image which pixel arrangement was converted by the conversion unit as a video image signal; and
a display unit that receives the video image signal transmitted from the transmitting unit and displays a three-dimensional video image.

**32.** The video image conversion system according to Claim 31 further comprising:

a plurality of imaging units that image video images for respective viewpoints; and
a video image arrangement unit that generates a plurality of intermediate images according to Claim 2 from a plurality of viewpoint images imaged by the plurality of imaging units from a plurality of viewpoints from a first viewpoint to an Nth viewpoint, forms a video image by immediately arranging the plurality of intermediate images into images divided and arranged in a pattern of tiles within a frame, and transmitting to the video image reproducing unit,
wherein the video image output unit transmits the video image converted by the video image arrangement unit as a video image signal.

**33.** The video image conversion system according to Claim 31 wherein:

the display unit is a three-dimensional video image display unit on which monitor's front surface is attached, with a predetermined air gap, a parallax barrier formed of an invisible region and a transparent region where a plurality of slits are arranged or a plurality of holes are continuously arranged in a slit-like form from upside to downside with a predetermined inclination;
the receiving unit receives, as a control signal, an average inclination of the transparent region, a number of subpixels of the slit or the hole in a horizontal direction, which corresponds to an average width of the transparent region, a number of subpixels corresponding to an average distance between centers of the adjacent slits or adjacent holes, a size of the subpixels constituting a pixel, and a resolution of the display device; and
the conversion control unit selects, based on the control signal, a pixel arrangement conversion method that converts a video image of a plurality of viewpoints into a pixel arrangement with which the video image can be three-dimensionally displayed most efficiently, and controls an instruction to the conversion unit for converting the video image with the pixel arrangement conversion method.

34. A video image wherein
plurality pieces of pixel information in which a header for verifying video image information and conversion control information are defined as video image information are embedded, at a leading frame of the video image of a plurality of viewpoints, the leading frame and a last frame, or a predetermined position of whole frames, according to a predetermined arrangement pattern.

35. The video image according to Claim 34 wherein
the video image is a mixture video image of a video image of a plurality of viewpoints and a planar video image; if a first video image is the video image of the plurality of viewpoints, the video image further comprises identification information indicating whether the video image is the mixture video image in the video image information at a predetermined position of a leading frame; and
if a first video image is the planar video image, plurality pieces of pixel information in which a header for verifying video image information and identification information indicating whether the video image is the mixture video image are defined as video image information are embedded at a predetermined position of a leading frame according to a predetermined arrangement pattern.

36. The video image according to Claim 34 wherein
the pixel information defined as identical video image information is embedded over a predetermined number of or more frames in a same arrangement pattern.

37. A video image wherein
a plurality of pixel matrixes in which plurality pieces of identical pixel information defining a header for verifying video image information and conversion control information as video image information are continuously arranged in X and Y directions are embedded according to a predetermined arrangement pattern.

38. The video image according to Claim 37 wherein the plurality of pixel matrixes in which pixels having pixel information obtained by linearly interpolating by weighting with predetermined values pixel information in a vicinity of the pixel matrixes and pixel information defining the video image information are arranged are embedded, instead of the pixel information, at a periphery of the pixel matrixes according to a predetermined arrangement pattern.

39. The video image according to any one of Claims 34 to 38, wherein
the video image of the plurality of viewpoints in which the video image information is embedded is a video image extracted from an irreversibly compressed video image; and
the pixel information defines video image information only in upper bits of a predetermined number of digits that do not change before and after the irreversible compression.

40. The video image according to any one of Claims 34 to 39, wherein the video image information is at least one of:

identification information for determining whether the video image is a mixture video image of the video image of the plurality of viewpoints and the planar video image;
identification information of a scanning method of the video image;
a resolution of the video image; and
a number of the viewpoints of the video image.

41. A storage medium storing the video image according to any one of Claims 34 to 40.

42. A video image conversion method comprising the steps of:

receiving a video image of a plurality of viewpoints as a video image signal from the video image output device;
storing the received video image of the plurality of viewpoints, frame by frame, in a storage element;
instructing conversion of a pixel arrangement of the video image of the plurality of viewpoints stored in the storage element into a pixel arrangement for three-dimensional video image display according to preset conversion control information;
immediately converting the pixel arrangement according to the instruction; and
transmitting the video image of which pixel arrangement was converted as a video image signal to a three-dimensional video image display device.

**43.** A video image output method comprising the steps of:

imaging a video image for respective viewpoints using a plurality of imaging units;
generating a plurality of intermediate images according to Claim 2 from a plurality of viewpoint images imaged by the plurality of imaging units from a plurality of viewpoints from a first viewpoint to an Nth viewpoint, and forming a video image by immediately arranging the plurality of intermediate images into images divided and arranged in a pattern of tiles within a frame, using a video image arrangement unit; and
transmitting, using a transmitting unit, the video image as a video image signal to a video image conversion device that converts the pixel arrangement configuring the video image.

FIG. 1

FIG. 2

·SCANNING METHOD
·TRANSMISSION
METHOD
·RESOLUTION
·NUMBER OF
VIEWPOINTS
·PIXEL ARRANGEMENT
METHOD, ETC.

FIG. 3

FIG. 4

Table (10):

| NO. | TRANSMISSION METHOD | NUMBER OF VIEWPOINTS |
|---|---|---|
| 1 | PROGRESSIVE | 5 |
| 2 | INTERLACED | 6 |
| 3 | INTERLACED | 8 |
| 4 | INTERLACED | 4 |
| 5 | PROGRESSIVE | 2 |
| 6 | PROGRESSIVE | 4 |
| 7 | PROGRESSIVE | 8 |
| 8 | PROGRESSIVE | 9 |

Table (6):

| NO. | TRANSMISSION METHOD | NUMBER OF VIEWPOINTS |
|---|---|---|
| 1 | PROGRESSIVE | 5 |
| 2 | INTERLACED | 6 |
| 3 | INTERLACED | 8 |
| 4 | INTERLACED | 4 |

+

Table (9):

| NO. | TRANSMISSION METHOD | NUMBER OF VIEWPOINTS |
|---|---|---|
| 5 | PROGRESSIVE | 2 |
| 6 | PROGRESSIVE | 4 |
| 7 | PROGRESSIVE | 8 |
| 8 | PROGRESSIVE | 9 |

INDEX NO.1

FIG. 5

FIG. 6

FIG. 7

```
                                    ┌──────────────────────────────────────┐
                                    │   VIDEO IMAGE CONVERSION             │
                                    │          DEVICE 1                     │
                                    │   ┌────────────────────────┐         │
┌──────────────────────┐           │   │   RECEIVING UNIT 12    │         │
│  VIDEO IMAGE OUTPUT   │──────────────▶│                        │         │
│      DEVICE 2         │           │   └────────────────────────┘         │
└──────────────────────┘           │              │                        │
                                    │              ▼                        │
                                    │   ┌────────────────────────┐         │
                                    │   │   STORAGE UNIT 13      │         │
                                    │   └────────────────────────┘         │
                                    │              ▲                        │
                                    │              ▼                        │
                                    │   ┌────────────────────────┐         │
                                    │   │  CONVERSION CONTROL    │         │
                                    │   │       UNIT 14          │         │
                                    │   └────────────────────────┘         │
                                    │              │                        │
                                    │              ▼                        │
                                    │   ┌────────────────────────┐         │
                                    │   │  CONVERSION UNIT 15    │         │
                                    │   └────────────────────────┘         │
                                    │              │                        │
                                    │              ▼                        │
┌──────────────────────┐           │   ┌────────────────────────┐         │
│  THREE-DIMENSIONAL    │           │   │  TRANSMITTING UNIT OF  │         │
│ VIDEO IMAGE DISPLAY   │◀─────────────▶│     VIDEO IMAGE        │         │
│      DEVICE 3         │           │   │ CONVERSION DEVICE 16   │         │
└──────────────────────┘           │   └────────────────────────┘         │
                                    └──────────────────────────────────────┘
```

FIG. 8

```
                              ┌─────────────────────────────────────┐
                              │   VIDEO IMAGE CONVERSION             │
                              │          DEVICE 1                    │
                              │                                      │
┌──────────────────────┐     │   ┌──────────────────────────┐       │
│ VIDEO IMAGE OUTPUT    │────▶│   │   RECEIVING UNIT 12      │       │
│      DEVICE 2         │     │   └──────────────────────────┘       │
└──────────────────────┘     │                │                     │
                              │                ▼                     │
                              │   ┌──────────────────────────┐       │
                              │   │   STORAGE UNIT 13         │       │
                              │   └──────────────────────────┘       │
                              │                ▲                     │
                              │                ▼                     │
                              │   ┌──────────────────────────┐       │
                              │   │   VIDEO IMAGE            │       │
                              │   │   INFORMATION ANALYSIS   │       │
                              │   │   UNIT 17                │       │
                              │   └──────────────────────────┘       │
                              │                ▲                     │
                              │                ▼                     │
                              │   ┌──────────────────────────┐       │
                              │   │   CONVERSION CONTROL     │       │
                              │   │   UNIT 14                │       │
                              │   └──────────────────────────┘       │
                              │                │                     │
                              │                ▼                     │
                              │   ┌──────────────────────────┐       │
                              │   │   CONVERSION UNIT 15     │       │
                              │   └──────────────────────────┘       │
                              │                │                     │
                              │                ▼                     │
┌──────────────────────┐     │   ┌──────────────────────────┐       │
│ THREE-DIMENSIONAL    │◀────│   │   TRANSMITTING UNIT OF   │       │
│ VIDEO IMAGE DISPLAY  │     │   │   VIDEO IMAGE            │       │
│      DEVICE 3         │     │   │   CONVERSION DEVICE 16   │       │
└──────────────────────┘     │   └──────────────────────────┘       │
                              └─────────────────────────────────────┘
```

FIG. 9

VIDEO IMAGE CONVERSION DEVICE 1

VIDEO IMAGE OUTPUT DEVICE 2

RECEIVING UNIT 12

STORAGE UNIT 13

CONVERSION CONTROL UNIT 14

CONVERSION CONTROL INFORMATION STORING UNIT 18

CONVERSION UNIT 15

THREE-DIMENSIONAL VIDEO IMAGE DISPLAY DEVICE 3

TRANSMITTING UNIT OF VIDEO IMAGE CONVERSION DEVICE 16

FIG. 10

**VIDEO IMAGE CONVERSION DEVICE 1**

VIDEO IMAGE OUTPUT DEVICE 2 → RECEIVING UNIT 12

STORAGE UNIT 13

VIDEO IMAGE INFORMATION ANALYSIS UNIT 17

CONVERSION CONTROL UNIT 14

CONVERSION CONTROL INFORMATION STORING UNIT 18

CONVERSION UNIT 15

THREE-DIMENSIONAL VIDEO IMAGE DISPLAY DEVICE 3 ↔ TRANSMITTING UNIT OF VIDEO IMAGE CONVERSION DEVICE 16

FIG. 11

```
┌─────────────────────────────────────┐   ┌─────────────────────────────────────┐
│                                      │   │     VIDEO IMAGE CONVERSION          │
│   VIDEO IMAGE OUTPUT DEVICE 2        │   │          DEVICE 1                   │
│                                      │   │                                     │
│   ┌──────────────────────────┐       │   │   ┌──────────────────────────┐      │
│   │  PLURALITY OF CAMERAS     │       │   │   │   RECEIVING UNIT 12       │      │
│   │          11               │       │──▶│   │                          │      │
│   └──────────────────────────┘       │   │   └──────────────────────────┘      │
│              │                        │   │              │                      │
│              ▼                        │   │              ▼                      │
│   ┌──────────────────────────┐       │   │   ┌──────────────────────────┐      │
│   │     VIDEO IMAGE           │       │   │   │   STORAGE UNIT 13         │      │
│   │  ARRANGEMENT UNIT 19      │       │   │   │                          │      │
│   └──────────────────────────┘       │   │   └──────────────────────────┘      │
│              ▲                        │   │              ▲                      │
│              ▼                        │   │              ▼                      │
│   ┌──────────────────────────┐       │   │   ┌──────────────────────────┐      │
│   │  TRANSMITTING UNIT OF     │       │   │   │   CONVERSION CONTROL      │      │
│   │  VIDEO IMAGE OUTPUT       │───────│   │   │       UNIT 14             │      │
│   │      DEVICE 20            │       │   │   └──────────────────────────┘      │
│   └──────────────────────────┘       │   │              │                      │
│                                      │   │              ▼                      │
└─────────────────────────────────────┘   │   ┌──────────────────────────┐      │
                                           │   │   CONVERSION UNIT 15      │      │
                                           │   └──────────────────────────┘      │
                                           │              │                      │
                                           │              ▼                      │
┌──────────────────────────┐              │   ┌──────────────────────────┐      │
│   THREE-DIMENSIONAL       │              │   │  TRANSMITTING UNIT OF     │      │
│  VIDEO IMAGE DISPLAY      │◀────────────▶│   │     VIDEO IMAGE           │      │
│      DEVICE 3             │              │   │  CONVERSION DEVICE 16     │      │
└──────────────────────────┘              │   └──────────────────────────┘      │
                                           └─────────────────────────────────────┘
```

FIG. 12

VIDEO IMAGE CONVERSION
DEVICE 1

PLURALITY OF CAMERAS
11

RECEIVING UNIT 12

STORAGE UNIT 13

CONVERSION CONTROL
UNIT 14

CONVERSION UNIT 15

THREE-DIMENSIONAL
VIDEO IMAGE DISPLAY
DEVICE 3

TRANSMITTING UNIT OF
VIDEO IMAGE
CONVERSION DEVICE 16

FIG. 13A

FIG. 13D

FIG. 13B

FIG. 13E

FIG. 13C

FIG. 14A

FIG. 14B

FIG. 15A

FIG. 15B

FIG. 16

FIG. 17

EP 2 448 280 A2

FIG. 18

FIRST SCANNING OF VIDEO IMAGE FOR RESPECTIVE VIEWPOINTS { FIRST VIEWPOINT nTH VIEWPOINT

Mth SCANNING OF VIDEO IMAGE FOR RESPECTIVE VIEWPOINTS { FIRST VIEWPOINT nTH VIEWPOINT

t FRAMES

FIG. 19A

21

FIG. 19B

$C_1$ $C_2$ $C_3$ $C_4$ $C_5$ $C_6$ $C_7$ $C_8$ $C_9$ $C_{10}$ $C_{11}$ $C_{12}$ $C_{13}$ $C_{14}$ $C_{15}$ $C_{16}$

21

FIG. 20A

21

| 1 | 2 | 3 |
| 4 | 5 | 6 |
| 7 | | 8 |

FIG. 20B

22

FIG. 20C

| $C_{m-2 \cdot n-2}$ | $C_{m-2 \cdot n-1}$ | $C_{m-2 \cdot n}$ | $C_{m-2 \cdot n+1}$ | $C_{m-2 \cdot n+2}$ |
|---|---|---|---|---|
| $C_{m-1 \cdot n-2}$ | $C_{m \cdot n}$ | $C_{m \cdot n}$ | $C_{m \cdot n}$ | $C_{m-1 \cdot n+2}$ |
| $C_{m \cdot n-2}$ | $C_{m \cdot n}$ | $C_{m \cdot n}$ | $C_{m \cdot n}$ | $C_{m \cdot n+2}$ |
| $C_{m+1 \cdot n-2}$ | $C_{m \cdot n}$ | $C_{m \cdot n}$ | $C_{m \cdot n}$ | $C_{m+1 \cdot n+2}$ |
| $C_{m+2 \cdot n-2}$ | $C_{m+2 \cdot n-1}$ | $C_{m+2 \cdot n}$ | $C_{m+2 \cdot n+1}$ | $C_{m+2 \cdot n+2}$ |

21

FIG. 21A

21

| 1 | 2 | 3 |
| 4 | 5 | 6 |
| 7 | | 8 |

FIG. 21B

22

FIG. 21C

| $C_{m-2 \cdot n-2}$ | $C_{m-2 \cdot n-1}$ | $C_{m-2 \cdot n}$ | $C_{m-2 \cdot n+1}$ | $C_{m-2 \cdot n+2}$ |
|---|---|---|---|---|
| $C_{m-1 \cdot n-2}$ | $C_{m-1 \cdot n-1}$ | $C_{m-1 \cdot n}$ | $C_{m-1 \cdot n+1}$ | $C_{m-1 \cdot n+2}$ |
| $C_{m \cdot n-2}$ | $C_{m \cdot n-1}$ | $C_{m \cdot n}$ | $C_{m \cdot n+1}$ | $C_{m \cdot n+2}$ |
| $C_{m+1 \cdot n-2}$ | $C_{m+1 \cdot n-1}$ | $C_{m+1 \cdot n}$ | $C_{m+1 \cdot n+1}$ | $C_{m+1 \cdot n+2}$ |
| $C_{m+2 \cdot n-2}$ | $C_{m+2 \cdot n-1}$ | $C_{m+2 \cdot n}$ | $C_{m+2 \cdot n+1}$ | $C_{m+2 \cdot n+2}$ |

21

$$C_{m-1 \cdot n-1} = \frac{C_{m-1 \cdot n-1} + C_{m \cdot n}}{2}$$

$$C_{m+1 \cdot n-1} = \frac{\dfrac{C_{m+1 \cdot n-2} + C_{m+2 \cdot n-2} + C_{m+2 \cdot n-1}}{3} + C_{m \cdot n}}{2}$$

FIG. 22A

21

FIG. 22B

22

FIG. 22C

$$C_{1 \cdot n-1} = \frac{C_{1 \cdot n-2} + C_{1 \cdot n}}{2}$$

$$C_{2 \cdot n-1} = \frac{\frac{C_{2+1 \cdot n-2} + C_{3 \cdot n-2} + C_{3 \cdot n-1}}{3} + C_{1 \cdot n}}{2}$$

$$C_{1 \cdot n-1} = \frac{C_{1 \cdot n-2} + C_{1 \cdot n} \times 2}{2}$$

$$C_{2 \cdot n-1} = \frac{\frac{C_{2+1 \cdot n-2} + C_{3 \cdot n-2} + C_{3 \cdot n-1}}{3} + C_{1 \cdot n} \times 2}{2}$$

FIG. 23

FIG. 24A

22

24

FIG. 24B

| $C_{1 \cdot n-2}$ | $C_{1 \cdot n-1}$ | $C_{1 \cdot n}$ | $C_{1 \cdot n+1}$ | $C_{1 \cdot n+2}$ |
|---|---|---|---|---|
| $C_{2 \cdot n-2}$ | $C_{2 \cdot n-1}$ | $C_{2 \cdot n}$ | $C_{2 \cdot n+1}$ | $C_{2 \cdot n+2}$ |
| $C_{3 \cdot n-2}$ | $C_{3 \cdot n-1}$ | $C_{3 \cdot n}$ | $C_{3 \cdot n+1}$ | $C_{3 \cdot n+2}$ |

21

FIG. 25

1 RECORD

68

| R | B | | : SCANNING POSITION |

EX. SCANNED REGION

BLACK = 0 0 0 0 1 1
R = 1 0 0 0 1 1
G = 0 1 0 0 1 1
B = 0 0 1 0 1 1
C = 0 1 1 0 1 1
M = 1 0 1 0 1 1
Y = 1 1 0 0 1 1
WHITE = 1 1 1 0 1 1

DROPPED REGION

C0~C23 : DETERMINATION CODE    EX. 000100010001011101110111

ABOVE CODES ARE ALSO USED FOR HARDWARE AND SOFTWARE CLASSIFICATION, VERSION, AND SECURITY.

C24~C29 : PARITY CHECK

C24=C0+C6+C12+C18    EX. 111111

C25=C1+C7+C13+C19

C26=C2+C8+C14+C23

C27=C3+C9+C15+C24

C28=C4+C10+C16+C25

C29=C5+C11+C17+C26

FIG. 26

C30~C41 := N  THE NUMBER OF VIDEO IMAGE OF A PLURALITY OF VIEWPOINTS
            := 0  NO NUMBER OF VIDEO IMAGE

C42      := 0  ONLY VIDEO IMAGE OF A PLURALITY OF VIEWPOINTS
            := 1  MIXTURE OF VIDEO IMAGE OF A PLURALITY OF VIEWPOINTS & PLANAR VIDEO IMAGE

C43~C44 := IDENTIFIER OF VIDEO IMAGE OF A PLURALITY OF VIEWPOINTS
            := 1  BEGINNING OF VIDEO IMAGE OF A PLURALITY OF VIEWPOINTS STORE VIDEO IMAGE INFORMATION IN LEADING FRAME
            := 2  END OF VIDEO IMAGE OF A PLURALITY OF VIEWPOINTS STORE VIDEO IMAGE INFORMATION IN LAST FRAME
            := 3  STORE VIDEO IMAGE INFORMATION IN WHOLE FRAMES

C45~C55 := W  HORIZONTAL RESOLUTION
C56~C66 := H  VERTICAL RESOLUTION

C67      := 0  TILE FORMAT
            := 1  MULTI-STREAMING FORMAT
C68      := 0  NORMAL TILE FORMAT
            := 1  ORIGINAL TILE FORMAT
C69~C73 := N  NUMBER OF TILES AND NUMBER OF MULTI-STREAMING
C74~C78 := N  NUMBER OF VIEWPOINTS OF THREE-DIMENSIONAL PIXEL ARRANGEMENT
            := 0  FOLLOW OTHER CONVERSION CONTROL INFORMATION
C79~C81 := M  NUMBER OF ROWS CONSTITUTING ONE PIXEL
C82~C84 := L  NUMBER OF SUBPIXELS CONSTITUTING ONE PIXEL
C85~C87 := M  NUMBER OF REPEATED PIXEL ARRANGEMENT
C88      := DIRECTION OF PIXEL 1  := 0 R L  := 1 L R
C89~C99 := DI  NUMBER OF SUBPIXELS PERTURBED BY CONNECTION LOCATION OF PIXELS

C90      := DIRECTION OF PIXEL 2  := 0 R L  := 1 L R
C91~C92 := D7  NUMBER OF SUBPIXELS PERTURBED BY CONNECTION LOCATION OF PIXELS
C93      := DIRECTION OF PIXEL 3  := 0 R L  := 1 L R
C94~C95 := D3  NUMBER OF SUBPIXELS PERTURBED BY CONNECTION LOCATION OF PIXELS

C96      := C30+C36+C42+C48+C54+C60+C66+C72+C78+C84+C90
C97      := C31+C37+C43+C49+C55+C61+C67+C73+C79+C85+C91
C98      := C32+C38+C44+C50+C56+C62+C68+C74+C80+C86+C92
C99      := C33+C39+C45+C51+C57+C63+C69+C75+C81+C87+C93
C100     := C34+C40+C46+C52+C58+C64+C70+C76+C82+C88+C94
C101     := C35+C41+C47+C53+C59+C65+C71+C77+C83+C89+C95

C90~C91 : PARITY CHECK

FIG. 27

FIG. 28

iPIC : THE NUMBER OF VIDEO
IMAGE OF A PLURALITY OF
VIEWPOINTS
i3D : IDENTIFIER OF VIDEO IMAGE
OF A PLURALITY OF VIEWPOINTS
=1 BEGINNING OF VIDEO
IMAGE OF A PLURALITY OF
VIEWPOINTS
=2 END OF VIDEO IMAGE
OF A PLURALITY OF VIEWPOINTS
=3 VIDEO IMAGE OF A
PLURALITY OF VIEWPOINTS
j3D : IDENTIFIER OF PREVIOUS
VIDEO IMAGE STATE
=0 PLANAR VIDEO IMAGE
=1 BEGINNING OF VIDEO
IMAGE OF A PLURALITY OF
VIEWPOINTS
=2 END OF VIDEO IMAGE
OF A PLURALITY OF VIEWPOINTS
=3 VIDEO IMAGE OF A
PLURALITY OF VIEWPOINTS

START

jPIC, j3D=0

RECEIVE
VIDEO IMAGE

ANALYZE
HEADER

VIDEO IMAGE
INFORMATION
EXISTS?

NO

YES

READ VIDEO IMAGE
INFORMATION

iPIC:jPIC

≠

iPIC=jPIC

=

i3D:j3D

=

≠

i3D=j3D

SET CONVERSION
CONTROL INFORMATION

j3D

≠0. 1

=1

=0

j3D=0

ARRANGE THREE-DIMENSIONAL PIXEL
ARRANGEMENT ACCORDING TO SETTING

OUTPUT PLANAR
VIDEO IMAGE

OUTPUT THREE-DIMENSIONAL
VIDEO IMAGE

71

FIG. 29A

31
INTERMEDIATE
IMAGE GENERATING
DEVICE

33
CENTRAL
PROCESSING UNIT

35
STORAGE DEVICE

FIG. 29B

61
THREE-DIMENSIONAL
IMAGE GENERATING
DEVICE

33
CENTRAL
PROCESSING UNIT

35
STORAGE DEVICE

FIG. 29C

41
FIRST INFORMATION
PROCESSING DEVICE

33
CENTRAL
PROCESSING UNIT

45
TRANSMITTING
DEVICE

35
STORAGE DEVICE

43
COMPRESSION
DEVICE

47
SECOND INFORMATION
PROCESSING DEVICE

33
CENTRAL
PROCESSING UNIT

51
RECEIVING DEVICE

35
STORAGE DEVICE

49
EXTRACTING
DEVICE

65
THREE-DIMENSIONAL
IMAGE DISPLAY
DEVICE

EP 2 448 280 A2

FIG. 30A

INFORMATION PROCESSING

STORE PLURALITY OF VIEWPOINT IMAGES — S201

CONTROL INFORMATION IS INPUT? — S202
NO

YES — S203
GENERATE THREE-DIMENSIONAL IMAGE

GENERATE INTERMEDIATE IMAGE — S204

STORE INTERMEDIATE IMAGE — S205

END

FIG. 30B

INFORMATION PROCESSING

STORE PLURALITY OF VIEWPOINT IMAGES — S201

CONTROL INFORMATION IS INPUT? — S202
NO

YES — S203
ASSUME THREE-DIMENSIONAL IMAGE

GENERATE INTERMEDIATE IMAGE — S204

STORE INTERMEDIATE IMAGE — S205

END

FIG. 30C

INFORMATION PROCESSING

STORE PLURALITY OF VIEWPOINT IMAGES — S201

CONTROL INFORMATION IS INPUT? — S202
NO

YES — S203
GENERATE THREE-DIMENSIONAL IMAGE

GENERATE INTERMEDIATE IMAGE — S204

COMPRESS INTERMEDIATE IMAGE — S205

STORE INTERMEDIATE IMAGE — S206

TRANSMIT INTERMEDIATE IMAGE — S207

RECEIVE INTERMEDIATE IMAGE — S208

EXTRACT INTERMEDIATE IMAGE — S209

GENERATE THREE-DIMENSIONAL IMAGE — S210

END

73

EP 2 448 280 A2

FIG. 31

FIG. 32

FIG. 33A

U → U   SUBPIXEL COORDINATE SYSTEM   29

(U,V)

V

H

W

FIG. 33B

→ x   PIXEL COORDINATE SYSTEM

(x,y)

y

y=n

y=n+1

x=n   x=n+1   x=n+2

FIG. 33C

$P_1(x_1,y_1)$   $P_2(x_2,y_2)$

$\gamma$   $P(x,y)$

$\alpha$   $\beta$

$\delta$

$P_3(x_3,y_3)$   $P_4(x_4,y_4)$

FIG. 34

FIG. 35A

FIG. 35B

FIG. 36

EP 2 448 280 A2

FIG. 37A

FIG. 37B

FIG. 38

FIG. 39A

FIG. 39B

FIG. 39C

FIG. 40

R    G    B

**REFERENCES CITED IN THE DESCRIPTION**

**Patent documents cited in the description**

- JP 2004179806 A